# EUROPEAN PATENT APPLICATION

(11) **EP 4 570 405 A1**
(43) Date of publication of application: **18.06.2025**
(21) Application number: 24855108.7
(22) Date of filing: 22.08.2024
(51) Int. Cl.: B23D 45/16, B23D 47/12, B28D 1/04, B23D 59/00, B25F 5/00, H02P 1/58

(54) **POWER TOOL, CUTTING TOOL, CIRCULAR SAW, AND CONTROL METHOD FOR POWER TOOL**

(30) Priority: 01.09.2023 CN 202311129086; 25.12.2023 CN 202311809661; 25.12.2023 CN 202311803786; 16.08.2024 CN 202422000835 U; 16.08.2024 CN 202421987031 U; 16.08.2024 CN 202411126105; 16.08.2024 CN 202411132432; 16.08.2024 CN 202422000293 U; 16.08.2024 CN 202411126175
(71) Applicant: Nanjing Chervon Industry Co., Ltd., Nanjing, Jiangsu 211106 (CN)
(72) Inventor: WANG, Rong, Nanjing, Jiangsu 211106 (CN); QIU, Xuefeng, Nanjing, Jiangsu 211106 (CN); ZHANG, Yi, Nanjing, Jiangsu 211106 (CN); LI, Tengyue, Nanjing, Jiangsu 211106 (CN)
(74) Representative: Sun, Yiming
(86) International application number: PCT/CN2024/113909
(87) International publication number: WO 2025/044886

(57) **Abstract**

Provided are a power tool, a cutting tool, and a circular saw. The power tool includes a first electric motor and a second electric motor, where a first drive shaft and a second drive shaft are arranged along the radial direction of the first drive shaft; a power transmission mechanism for transmitting power of at least one of the first electric motor and the second electric motor to an output shaft; and an accommodation housing, where when orthographic projections are observed along the extension direction of the output shaft, along the direction of a line connecting the orthographic projection of the first axis and the orthographic projection of the second axis, the ratio of the outer dimension Lc of the accommodation housing to the outer diameter dimension D of any one of the electric motors is greater than or equal to 1.1. The two electric motors mate with each other to drive the power tool.

## Description

This application claims priority to Chinese Patent Application No. 202311129086.3 filed with the China National Intellectual Property Administration (CNIPA) on Sep. 1, 2023, Chinese Patent Application No. 202311809661.4 filed with the CNIPA on Dec. 25, 2023, Chinese Patent Application No. 202311803786.6 filed with the CNIPA on Dec. 25, 2023, Chinese Patent Application No. 202422000835.9 filed with the CNIPA on Aug. 16, 2024, Chinese Patent Application No. 202421987031.6 filed with the CNIPA on Aug. 16, 2024, Chinese Patent Application No. 202411126105.1 filed with the CNIPA on Aug. 16, 2024, Chinese Patent Application No. 202411132432.8 filed with the CNIPAon Aug. 16, 2024, Chinese Patent Application No. 202422000293.5 filed with the CNIPA on Aug. 16, 2024, and Chinese Patent Application No. 202411126175.7 filed with the CNIPAon Aug. 16, 2024, the disclosures of which are incorporated herein by reference in their entireties.

### TECHNICAL FIELD

The present application relates to a power tool, for example, a power tool, a cutting tool, and a circular saw.

### BACKGROUND

When a power tool in the related art is working, an output mechanism is usually required to be capable of working under both a light load condition and a heavy load condition. In order that the power tool can output relatively large torque to adapt to the heavy load condition, the power tool is usually provided with an electric motor with very large power and output torque. The electric motor with large power can drive the output mechanism to drive a relatively large load. However, when the power tool is under the light load condition, the electric motor with large power has a relatively large power consumption, causing a serious waste. Therefore, under the light load condition, the electric motor has a degraded working state, affecting a service life of the power tool.

This part provides background information related to the present application, and the background information is not necessarily the existing art.

### SUMMARY

An object of the present application is to solve or at least alleviate part or all of the preceding problems. Therefore, an object of the present application is to provide a power tool, a cutting tool, and a circular saw that each use two electric motors mating with each other to drive an output shaft for output work.

To achieve the preceding object, the present application adopts the technical solutions below.

A power tool includes: an output shaft configured to output torque and rotating about an output axis; a first electric motor including a first drive shaft rotating about a first axis; a second electric motor including a second drive shaft rotating about a second axis, wherein the first drive shaft and the second drive shaft are arranged along a radial direction of the first drive shaft; a power transmission mechanism for transmitting power of at least one of the first electric motor and the second electric motor to the output shaft , wherein torque of the first drive shaft and torque of the second drive shaft are outputted through the output shaft;
an accommodation housing configured to accommodate the first electric motor and the second electric motor, wherein when orthographic projections are observed along an extension direction of the output shaft, along a direction of a line connecting an orthographic projection of the first axis and an orthographic projection of the second axis , an outer dimension Lc of the accommodation housing is greater than an outer diameter dimension D of any one of the first electric motor and the second electric motor ; and a body housing including a first marker structure corresponding to the first electric motor and a second marker structure corresponding to the second electric motor, wherein the first marker structure is configured to indicate that the power tool is provided with the first electric motor, and the second marker structure is configured to indicate that the power tool is provided with the second electric motor.

**In** some example, the first drive shaft is parallel to the second drive shaft.

In some example, the first electric motor at least partially overlaps the second electric motor in the direction of the output axis.

In some example, the accommodation housing includes a first accommodation portion for accommodating the first electric motor and a second accommodation portion for accommodating the second electric motor, wherein the first accommodation portion supports at least a first bearing portion on a side of the first electric motor facing away from the output shaft, and the second accommodation portion supports at least a second bearing portion on a side of the second electric motor facing away from the output shaft.

In some example, the power tool further includes: a first housing, wherein the accommodation housing is formed on or connected to the first housing, and the first housing is formed with or connected to a grip for holding; and a guard assembly configured to accommodate at least part of a cutting part driven by the output shaft, wherein the guard assembly and the accommodation housing are basically located on two sides of the first housing.

In some example, the power transmission mechanism is accommodated in the first housing and is located outside the accommodation housing.

In some example, the power tool further includes a direct current power supply for supplying power to the first electric motor and the second electric motor, wherein a nominal voltage of the direct current power supply is greater than or equal to 18 V.

In some example, the direct current power supply includes at least one battery pack.

In some example, the first electric motor includes a first stator, a first rotor, and coil windings disposed on the first stator, and the first drive shaft is formed on or connected to the first rotor; the second electric motor includes a second stator, a second rotor, and coil windings disposed on the second stator, and the second drive shaft is formed on or connected to the second rotor.

In some example, the first electric motor and the second electric motor are configured to have at least one different first parameter , wherein the at least one different first parameter includes a maximum output rotational speed, maximum output torque, an outer diameter of a stator core, an inner diameter of the stator core, an outer diameter of a rotor core, an inner diameter of the rotor core, a thickness of a rotor pole, a thickness of a stator pole, a length of an air gap, a length of a core, a number of pairs of stator poles, an arc corresponding to the stator pole, a number of pairs of rotor poles, and an arc corresponding to the rotor pole.

In some example, wherein the first marker structure and the second marker structure are formed on or connected to an outer wall surface of the body housing .

**In** some example, the first marker structure and the second marker structure are configured to be independent double-cylinder structures.

**In** some example, the first marker structure includes a first display portion, the second marker structure includes a second display portion, and the first display portion and the second display portion are disposed at easily visible positions on the body housing, respectively.

**In** some example, the first display portion includes a light emitter, and the light emitter indicates at least an on state and an off state of the first electric motor.

**In** some example, the first display portion includes an icon representing the first electric motor, the second display portion includes an icon representing the second electric motor, and the first display portion and the second display portion are each provided with an adhesive backing layer.

A power tool includes: an output shaft configured to output torque and rotating about an output axis; a first electric motor including a first drive shaft rotating about a first axis; a second electric motor including a second drive shaft rotating about a second axis, wherein the first drive shaft and the second drive shaft are arranged along a radial direction of the first drive shaft; a power transmission mechanism for transmitting power of at least one of the first electric motor and the second electric motor to the output shaft , wherein torque of the first drive shaft and torque of the second drive shaft are outputted through the output shaft; and an accommodation housing configured to accommodate the first electric motor and the second electric motor, wherein when orthographic projections are observed along an extension direction of the output shaft, along a direction of a line connecting an orthographic projection of the first axis and an orthographic projection of the second axis , a ratio of an outer dimension Lc of the accommodation housing to an outer diameter dimension D of any one of the first electric motor and the second electric motor is greater than or equal to 1.1.

A power tool includes: an output shaft configured to output torque and rotating about an output axis; a first electric motor including a first drive shaft rotating about a first axis; a second electric motor including a second drive shaft rotating about a second axis, wherein the first drive shaft and the second drive shaft are arranged along a radial direction of the first drive shaft; a power transmission mechanism for transmitting power of at least one of the first electric motor and the second electric motor to the output shaft , wherein torque of the first drive shaft and torque of the second drive shaft are outputted through the output shaft; an accommodation housing configured to accommodate the first electric motor and the second electric motor; and a body housing including a first marker structure corresponding to the first electric motor and a second marker structure corresponding to the second electric motor, wherein the first marker structure and the second marker structure are formed on or connected to an outer wall surface of the body housing , the first marker structure is configured to indicate that the power tool is provided with the first electric motor, and the second marker structure is configured to indicate that the power tool is provided with the second electric motor.

**In** some example, the first marker structure and the second marker structure are disposed on an outer wall of the accommodation housing configured to accommodate the first electric motor and the second electric motor, the first marker structure is configured to include a shape similar to a partial outline of the first electric motor, and the second marker structure is configured to include a shape similar to a partial outline of the second electric motor.

**In** some example, the first marker structure includes a display screen, and the display screen indicates an operation state of the first electric motor.

**In** some example, the second marker structure includes at least one of a light emitter or a display screen configured to indicate an operation state of the second electric motor.

A power tool includes: an output shaft configured to output torque and rotating about an output axis; a first electric motor including a first drive shaft rotating about a first axis; a second electric motor including a second drive shaft rotating about a second axis; and a power transmission mechanism for transmitting power of at least one of the first electric motor and the second electric motor to the output shaft, wherein torque of the first drive shaft and torque of the second drive shaft are outputted through the output shaft; wherein the power transmission mechanism includes: a transmission assembly disposed between the output shaft and at least one of the first electric motor and the second electric motor, wherein the transmission assembly includes at least a deceleration mechanism; and a clutch assembly disposed between the first electric motor and the second electric motor, wherein the clutch assembly is configured to allow or not allow at least one of the first drive shaft or the second drive shaft to drive the output shaft under a preset condition.

**In** some example, the transmission assembly is configured to connect at least one of the first drive shaft and the second drive shaft to the clutch assembly.

**In** some example, the transmission assembly includes a first gearset for connecting the first electric motor to the output shaft, and the first gearset provides at least one reduction ratio.

**In** some example, the transmission assembly includes a second gearset for connecting the second electric motor to the output shaft, and the second gearset provides at least one reduction ratio.

**In** some example, the clutch assembly includes a one-way transmission member, wherein the one-way transmission member is operable to connect rotation of the first electric motor to rotation of the second electric motor in a first direction of rotation and disconnect the rotation of the first electric motor from the rotation of the second electric motor in a second direction of rotation.

**In** some example, the clutch assembly connects the second gearset to the output shaft.

**In** some example, the clutch assembly includes a third gear, the first gearset includes a first driven gear , the third gear meshes with the first driven gear, and a gear ratio of the third gear and the first driven gear is basically 1.

**In** some example, the clutch assembly includes an idler shaft that rotates about a clutch axis, the second gearset includes a second driven gear disposed on the idler shaft, and when a rotational speed of the idler shaft is greater than a rotational speed of the output shaft, the clutch assembly drives the output shaft to rotate at the rotational speed of the idler shaft.

**In** some example, a non-thrust bearing is disposed at a first end of the idler shaft, and an elastic member is disposed at an end of the non-thrust bearing.

**In** some example, at least one of the first gearset and the second gearset includes a helical gear.

A power tool includes: an output shaft configured to output torque and rotating about an output axis; a first electric motor including a first drive shaft rotating about a first axis; a second electric motor including a second drive shaft rotating about a second axis; and a power transmission mechanism for transmitting power of at least one of the first electric motor and the second electric motor to the output shaft, wherein torque of the first drive shaft and torque of the second drive shaft are outputted through the output shaft; wherein the power transmission mechanism includes: a transmission assembly disposed between the output shaft and at least one of the first electric motor and the second electric motor, wherein the transmission assembly includes at least a deceleration mechanism; wherein when following orthographic projections are observed along an extension direction of the output shaft, a projection of the first axis and a projection of the second axis are located above a projection of the output axis.

**In** some example, when the following orthographic projections are observed along a direction of the output axis, an included angle α between a line connecting the projection of the first axis and the projection of the output axis and a line connecting the projection of the second axis and the projection of the output axis is greater than or equal to 45° and less than or equal to 180°.

A power tool includes: an output shaft on which a cutting part is mounted, wherein the cutting part rotates about an output axis; an electric motor assembly, wherein the electric motor assembly includes: a first electric motor including a first drive shaft rotating about a first axis; a second electric motor including a second drive shaft rotating about a second axis; and a first fan supported by at least one of the first drive shaft, the second drive shaft, and the output shaft; a power transmission mechanism for transmitting power of at least one of the first electric motor and the second electric motor in the electric motor assembly to the output shaft; a body housing for accommodating the electric motor assembly and the power transmission mechanism, wherein an airflow port is formed on the body housing; and a control circuit board including a controller configured to control the electric motor assembly, wherein the control circuit board is disposed in the body housing; wherein when the first fan rotates, a heat dissipation air path is generated, and the heat dissipation air path flows through at least the control circuit board and the electric motor assembly.

**In** some example, the first fan is supported by the first drive shaft and driven by the first electric motor to rotate and generate cooling airflow; wherein the cutting tool further includes a second fan supported by the second drive shaft and driven by the second electric motor to rotate and generate cooling airflow, wherein when the second fan rotates, a heat dissipation air path is generated, and the heat dissipation air path flows through at least the control circuit board and the electric motor assembly.

**In** some example, the airflow port includes a first air inlet and a first air outlet, and the cooling airflow enters the body housing from the first air inlet and flows out of the body housing from the first air outlet.

**In** some example, the airflow port further includes a second air outlet, the cooling airflow flows out of the body housing from at least one of the first air outlet and the second air outlet, and the first air outlet and the second air outlet have different air discharge directions.

**In** some example, the body housing includes a first housing and an accommodation housing, wherein the first housing is formed with or connected to the accommodation housing, the accommodation housing is configured to accommodate the first electric motor and the second electric motor, the control circuit board is disposed in the first housing, and the first air inlet allows the cooling airflow to enter the accommodation housing from the first housing.

**In** some example, the first air outlet connects the accommodation housing with the first housing.

**In** some example, the power tool further includes a base plate movably connected to the body housing, wherein the base plate is formed with a base plate bottom surface in contact with a workpiece, and the second air outlet is disposed on the base plate and discharges air toward a side direction of the base plate.

**In** some example, the heat dissipation air path includes a first heat dissipation air path and a second heat dissipation air path, wherein the first heat dissipation air path is configured such that when at least one of the first electric motor or the second electric motor is operating, the cooling airflow enters from the first air inlet and flows through the control circuit board and the electric motor assembly, and then most of the cooling airflow flows out from the first air outlet; and the second heat dissipation air path is configured such that when at least one of the first electric motor or the second electric motor is operating, the cooling airflow enters from the first air inlet and flows through the control circuit board and the electric motor assembly, and then most of the cooling airflow flows out from the second air outlet.

**In** some example, the power tool further includes a circuit board housing configured to accommodate the control circuit board, wherein the circuit board housing includes a heat dissipation plate connected to the control circuit board and capable of transferring heat generated by the control circuit board, and the circuit board housing is disposed outside the electric motor assembly in a radial direction of the electric motor assembly.

**In** some example, the power tool further includes a fixed guard configured to at least partially surround the cutting part, wherein an extension direction of the control circuit board is parallel to an extension direction of the cutting part, and the control circuit board conducts heat with the fixed guard.

**In** some example, at least one control circuit board is provided, and the circuit board housing is capable of accommodating the at least one control circuit board.

**In** some example, the power tool further includes a power supply, wherein the power supply includes at least one battery pack configured to provide a source of energy for the electric motor assembly, the at least one battery pack is disposed between the electric motor assembly and a grip for holding, and the body housing is provided with a semi-open battery accommodation compartment which is recessed inward.

**In** some example, when any one of the first fan and the second fan rotates, the heat dissipation air path is generated, and the heat dissipation air path flows through at least the at least one battery pack, the control circuit board, and the electric motor assembly.

**In** some example, the airflow port includes a second air inlet and a first air outlet, and the cooling airflow enters the battery accommodation compartment and the body housing from the second air inlet and flows out of the body housing from the first air outlet.

**In** some example, the power tool further includes a circuit board housing configured to accommodate the control circuit board, wherein the circuit board housing includes a heat dissipation plate connected to the control circuit board and capable of transferring heat generated by the control circuit board, and the circuit board housing is disposed between the electric motor assembly and the battery accommodation compartment.

A circular saw includes: an output shaft on which a cutting part is mounted, wherein the cutting part rotates about an output axis; a first electric motor including a first drive shaft rotating about a first axis; a second electric motor including a second drive shaft rotating about a second axis; a power transmission mechanism for transmitting power of at least one of the first electric motor and the second electric motor to the output shaft; a power supply including at least one battery pack configured to provide a source of energy for the first electric motor and the second electric motor; a body housing at least partially accommodating the first electric motor, the second electric motor, and the power transmission mechanism, wherein the body housing includes a first housing, and the first housing is formed with or connected to a grip for holding; and a base plate movably connected to the body housing, wherein the base plate is formed with a base plate bottom surface in contact with a workpiece; wherein along a direction perpendicular to an extension direction of the cutting part, an orthographic projection of a center of gravity of the circular saw is located between a rear edge of the base plate and the output axis.

**In** some example, the projection of the center of gravity of the circular saw is close to the output axis and is located on a rear side of the output axis.

**In** some example, the cutting part extends in a cutting plane; the grip is basically symmetrically disposed about a first plane; and along a direction perpendicular to the base plate, a projection of the center of gravity of the circular saw is located between the cutting plane and a right edge of the base plate or basically on the first plane.

In some example, a distance between the projection of the center of gravity of the circular saw and the first plane is less than a distance between the center of gravity of the circular saw and the cutting plane.

In some example, a ratio of a distance W1 between the projection of the center of gravity of the circular saw and the first plane to a distance W2 between the cutting plane and the first plane is less than or equal to 1/3.

In some example, the first electric motor, the second electric motor, the at least one battery pack, and the grip are disposed on a same side of the cutting part, the at least one battery pack is at least partially disposed behind the first electric motor and the second electric motor, and the at least one battery pack is at least partially disposed in front of the grip.

In some example, the first housing is formed with or connected to an accommodation housing, and the accommodation housing is configured to accommodate the first electric motor and the second electric motor.

In some example, the base plate is formed with a hole extending along a first direction so that the cutting part is capable of passing through the base plate; and along the first direction, a ratio of an outer edge dimension L3 of the accommodation housing to an outer edge dimension La of the body housing is greater than or equal to 0.2 and less than or equal to 0.4.

In some example, along a direction of the output axis, a ratio of an outer edge dimension H1 of the accommodation housing to an outer edge dimension Ha of the body housing is greater than or equal to 0.15 and less than or equal to 0.4.

In some example, the cutting part has an outer diameter greater than 6 inches.

A circular saw includes: an output shaft on which a cutting part is mounted, wherein the cutting part rotates about an output axis; a first electric motor including a first drive shaft rotating about a first axis; a second electric motor including a second drive shaft rotating about a second axis; a power transmission mechanism for transmitting power of at least one of the first electric motor and the second electric motor to the output shaft; a power supply including at least one battery pack configured to provide a source of energy for the first electric motor and the second electric motor; a body housing at least partially accommodating the first electric motor, the second electric motor, and the power transmission mechanism; and a base plate movably connected to the body housing, wherein the base plate is formed with a base plate bottom surface in contact with a workpiece; wherein when following orthographic projections are observed along a direction perpendicular to the base plate bottom surface, projections of the first drive shaft and the second drive shaft have two endpoints that are farthest apart along a direction of the output axis, a width interval W is defined between two straight lines on a projection plane each of which passes through a respective one of the two endpoints and is perpendicular to the output axis, and a projection of a center of gravity of the circular saw is set within the width interval W.

A circular saw includes: an output shaft on which a cutting part is mounted, wherein the cutting part rotates about an output axis; a first electric motor including a first drive shaft rotating about a first axis; a second electric motor including a second drive shaft rotating about a second axis, wherein the second drive shaft and the first drive shaft are arranged coaxially, and the first electric motor and the second electric motor are mechanically coupled; a power transmission mechanism for transmitting power of at least one of the first electric motor and the second electric motor to the output shaft; and a power supply including at least one battery pack configured to provide a source of energy for the first electric motor and the second electric motor; wherein a diameter of the first electric motor is less than or equal to 70 mm, and a diameter of the second electric motor is less than or equal to 70 mm.

**In** some example, the first electric motor is an outrunner, and the second electric motor is an outrunner.

**In** some example, the first drive shaft rotates synchronously with the second drive shaft.

**In** some example, the first electric motor includes a first stator and a first rotor, and the first drive shaft is formed on or connected to the first rotor; the second electric motor includes a second stator and a second rotor, and the second drive shaft is formed on or connected to the second rotor.

**In** some example, the power tool further includes an electric motor fixing portion, wherein the electric motor fixing portion is connected to the first stator and the second stator separately.

**In** some example, the electric motor fixing portion is provided with an accommodation channel configured to at least partially accommodate the first drive shaft and the second drive shaft.

**In** some example, the accommodation channel at least partially overlaps the first stator along a direction of the first axis, and the accommodation channel at least partially overlaps the second stator along the direction of the first axis.

**In** some example, along a direction of the output axis, a projection of the first axis and a projection of the second axis are located above a projection of the output axis.

**In** some example, the power transmission mechanism includes a transmission assembly, and the transmission assembly includes at least a deceleration mechanism.

**In** some example, the power tool further includes: a base plate formed with a base plate bottom surface in contact with a workpiece; wherein when following orthographic projections are observed along a direction perpendicular to the base plate bottom surface, projections of the first drive shaft and the second drive shaft have two endpoints that are farthest apart along the direction of the output axis, a width interval W is defined between two straight lines on a projection plane each of which passes through a respective one of the two endpoints and is perpendicular to the output axis, and a projection of a center of gravity of the circular saw is set within the width interval W.

A power tool includes: a functional piece; an electric motor assembly including a first electric motor and a second electric motor, wherein at least one of the first electric motor and the second electric motor drives the functional piece to operate; and a power supply device connected to the electric motor assembly and supplying power to at least the electric motor assembly; wherein a transmission relationship exists between the first electric motor and the second electric motor, and when the first electric motor rotates, the first electric motor drives the second electric motor to rotate; the power tool further includes a controller connected to the electric motor assembly, and the controller is configured to control, based on a back electromotive force of the second electric motor after the first electric motor is started, the second electric motor to start.

In some example, the second electric motor is a sensorless brushless motor.

In some example, the controller is configured to, when receiving a signal for starting the power tool, control the first electric motor to start.

In some example, the controller is configured to, after the first electric motor is started for a first preset duration, control, based on the back electromotive force of the second electric motor, the second electric motor to start.

In some example, the first preset duration is greater than or equal to 0.1s and less than or equal to 2s.

In some example, the controller is configured to, after the first electric motor is started and a rotational speed of the first electric motor reaches a first rotational speed threshold, control, based on the back electromotive force of the second electric motor, the second electric motor to start.

In some example, the first rotational speed threshold is greater than or equal to 10 RPM or greater than or equal to 10% of a no-load rotational speed of the first electric motor.

In some example, the controller is configured to determine a position of a rotor of the second electric motor based on an extreme value of the back electromotive force of the second electric motor or based on a relative relationship between the back electromotive force and zero-point potential of the second electric motor and control the second electric motor to start.

In some example, the controller includes a first controller and a second controller, wherein the first controller is connected to the first electric motor, the second controller is connected to the second electric motor, the first controller is configured to, when receiving a signal for starting the power tool, control the first electric motor to start, and the second controller is configured to control, based on the back electromotive force of the second electric motor after the first electric motor is started, the second electric motor to start.

A control method for a power tool includes: starting a first electric motor of the power tool; and controlling, by a controller of the power tool, based on a back electromotive force of a second electric motor of the power tool after the first electric motor is started, the second electric motor to start; wherein a transmission relationship exists between the first electric motor and the second electric motor, and when the first electric motor rotates, the first electric motor drives the second electric motor to rotate.

A power tool includes: a functional piece; an electric motor assembly including a first electric motor and a second electric motor, wherein at least one of the first electric motor and the second electric motor drives the functional piece to operate; and a power supply device connected to the electric motor assembly and supplying power to at least the electric motor assembly; wherein the first electric motor and the second electric motor drive a same output shaft; wherein the power tool further includes a controller connected to the electric motor assembly, and the controller is configured to control the first electric motor to shut down when a first electric motor parameter of the first electric motor exceeds a first protection threshold and control the second electric motor to shut down when a second electric motor parameter of the second electric motor exceeds a second protection threshold after the first electric motor parameter exceeds the first protection threshold, wherein the first protection threshold is not equal to the second protection threshold.

In some example, the first electric motor parameter includes a first locked-rotor parameter of the first electric motor, and the first protection threshold includes a first locked-rotor threshold; the second electric motor parameter includes a second locked-rotor parameter of the second electric motor, and the second protection threshold includes a second locked-rotor threshold.

In some example, the first electric motor parameter includes a first overcurrent parameter of the first electric motor, and the first protection threshold includes a first overcurrent threshold; the second electric motor parameter includes a second overcurrent parameter of the second electric motor, and the second protection threshold includes a second overcurrent threshold.

In some example, the first locked-rotor parameter is a first commutation duration of the first electric motor, and the first locked-rotor threshold is a first duration threshold; the second locked-rotor parameter is a second commutation duration of the second electric motor, and the second locked-rotor threshold is a second duration threshold; wherein the controller is configured to control the first electric motor to shut down when the first commutation duration exceeds the first duration threshold and control the second electric motor to shut down when the second commutation duration exceeds the second duration threshold after the first commutation duration exceeds the first duration threshold, wherein the first duration threshold is not equal to the second duration threshold.

In some example, in a case where a rotational speed ratio of the first electric motor and the second electric motor is n:1, a ratio of the first duration threshold to the second duration threshold is not equal to 1:n.

In some example, the first overcurrent parameter is a first current of the first electric motor, and the first overcurrent threshold is a first current threshold; the second overcurrent parameter is a second current of the second electric motor, and the second overcurrent threshold is a second current threshold; the controller is configured to control the first electric motor to shut down when the first current exceeds the first current threshold and control the second electric motor to shut down when the second current exceeds the second current threshold after the first current exceeds the first current threshold, wherein the first current threshold is not equal to the second current threshold.

In some example, in a case where a torque ratio of the first electric motor and the second electric motor is n:1, a ratio of the first current threshold to the second current threshold is not equal to n:1.

In some example, the first overcurrent parameter is a calculation value of one or more of first output torque, a first current, and first demagnetization time of the first electric motor, and the second overcurrent parameter is a calculation value of one or more of second output torque, a second current, and second demagnetization time of the second electric motor.

In some example, in a case where a ratio of the first electric motor parameter to the second electric motor parameter is n:1, a ratio of the first protection threshold to the second protection threshold is not equal to n:1.

In some example, the power tool further includes a driving device, wherein the driving device includes a first driver circuit and a second driver circuit, the first driver circuit is connected between the power supply device and the first electric motor, and the second driver circuit is connected between the power supply device and the second electric motor.

In some example, the first protection threshold has different values in a case where a capacity or a voltage of the power supply device has different values ; and/or the second protection threshold has different values in the case where the capacity or the voltage of the power supply device has different values.

**In** some example, the first protection threshold and/or the second protection threshold are dynamic thresholds and a corresponding relationship exists between values of the dynamic thresholds and a current current or voltage of the electric motor assembly.

**In** some example, the controller includes a first controller and a second controller, the first controller is connected to the first electric motor through the first driver circuit, the second controller is connected to the second electric motor through the second driver circuit, the first controller is configured to control the first electric motor to shut down when the first electric motor parameter of the first electric motor exceeds the first protection threshold, and the second controller is configured to control the second electric motor to shut down when the second electric motor parameter of the second electric motor exceeds the second protection threshold after the first electric motor parameter exceeds the first protection threshold, wherein the first protection threshold is not equal to the second protection threshold.

A power tool includes: a functional piece; an electric motor assembly including a first electric motor and a second electric motor, wherein at least one of the first electric motor and the second electric motor drives the functional piece to operate; and a power supply device connected to the electric motor assembly and supplying power to at least the electric motor assembly; wherein the first electric motor and the second electric motor drive a same output shaft; wherein the power tool further includes a controller connected to the electric motor assembly, wherein the controller is configured to control the first electric motor to shut down when a first electric motor parameter of the first electric motor exceeds a first protection threshold and control the second electric motor to shut down after the first electric motor parameter exceeds the first protection threshold for a second preset duration.

A control method for a power tool includes: controlling, by a controller of the power tool, a first electric motor to shut down when a first electric motor parameter of the first electric motor of the power tool exceeds a first protection threshold; and controlling, by the controller, a second electric motor to shut down when a second electric motor parameter of the second electric motor of the power tool exceeds a second protection threshold after the first electric motor parameter exceeds the first protection threshold, wherein the first protection threshold is not equal to the second protection threshold, and the first electric motor and the second electric motor drive a same output shaft.

### BRIEF DESCRIPTION OF DRAWINGS

FIG. 1 is a perspective view illustrating the structure of a circular saw according to an example of the present application.
FIG. 2 is a view illustrating the structure of a circular saw in a first state according to an example of the present application.
FIG. 3 is a view illustrating the structure of a circular saw in a second state according to an example of the present application.
FIG. 4 is a view illustrating the structure of a circular saw according to an example of the present application from another perspective and illustrating related components of an electric motor assembly.
FIG. 5 is a view illustrating the structures of some components of a circular saw according to an example of the present application from a third perspective with components related to a cutting member removed.
FIG. 6 is a partial sectional view taken along A-A in FIG. 5.
FIG. 7 is an exploded view of some components of a circular saw according to an example of the present application.
FIG. 8 is a half section view of an electric motor assembly and an accommodation housing of a circular saw according to an example of the present application.
FIG. 9 is a perspective view illustrating the structure of another example of a circular saw according to an example of the present application.
FIG. 10 is a perspective view illustrating the structure of a third example of a circular saw according to an example of the present application.
FIG. 11 is a sectional view of a first electric motor in an electric motor assembly according to the present application.
FIG. 12 is a view illustrating the structure of a power transmission mechanism of a circular saw according to an example of the present application.
FIG. 13 is a structural view of FIG. 12 from another perspective.
FIG. 14 is a partial sectional view of FIG. 13 from another perspective.
FIG. 15 is a structural view of FIG. 13 from another perspective.
FIG. 16 is a view illustrating the structure of a second type of power transmission mechanism of a circular saw according to an example of the present application.
FIG. 17 is a view illustrating the structure of a third type of power transmission mechanism of a circular saw according to an example of the present application.
FIG. 18 is a view illustrating the structures of a fourth type of electric motor assembly, a fourth type of power transmission mechanism, and a fourth type of accommodation housing of a circular saw according to an example of the present application.
FIG. 19 is a view illustrating the structures of the electric motor assembly and the power transmission mechanism in FIG. 18 from another perspective.
FIG. 20 is a schematic view illustrating the internal structure of a circular saw according to an example of the present application.
FIG. 21 is a schematic view illustrating some structures of a circular saw according to an example of the present application.
FIG. 22 is a partial sectional view of the structures in FIG. 21.
FIG. 23 is a view illustrating the structure of another example different from the structure in FIG. 20.
FIG. 24 is a view illustrating the structure of a third example different from the structure in FIG. 20.
FIG. 25 is a view illustrating the structure of a fourth example different from the structure in FIG. 20.
FIG. 26 is a view illustrating the structure of a fifth example different from the structure in FIG. 20.
FIG. 27 is a schematic diagram illustrating an electrical structure according to an example of the present application.
FIG. 28 is a schematic diagram illustrating another electrical structure according to an example of the present application.
FIG. 29 is a control flowchart according to an example of the present application.
FIG. 30 is another control flowchart according to an example of the present application.
FIG. 31 is a perspective view of a power tool as another example of the present application from one perspective.
FIG. 32 is a perspective view of the power tool shown in FIG. 31 from another perspective.
FIG. 33 is a perspective view of an electric motor assembly in the power tool shown in FIG. 31 in an example.
FIG. 34 is a perspective view of an electric motor assembly in the power tool shown in FIG. 31 in another example.
FIG. 35 is a schematic diagram of electric control of the power tool shown in FIG. 31.
FIG. 36 is another schematic diagram of electric control of the power tool shown in FIG. 31.
FIG. 37 is a control flowchart of a power tool as an example of the present application.
FIG. 38 is a control flowchart of a power tool as another example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

To clearly illustrate the technical solutions of the present application, an upper side and a lower side are defined in the drawings of the specification.

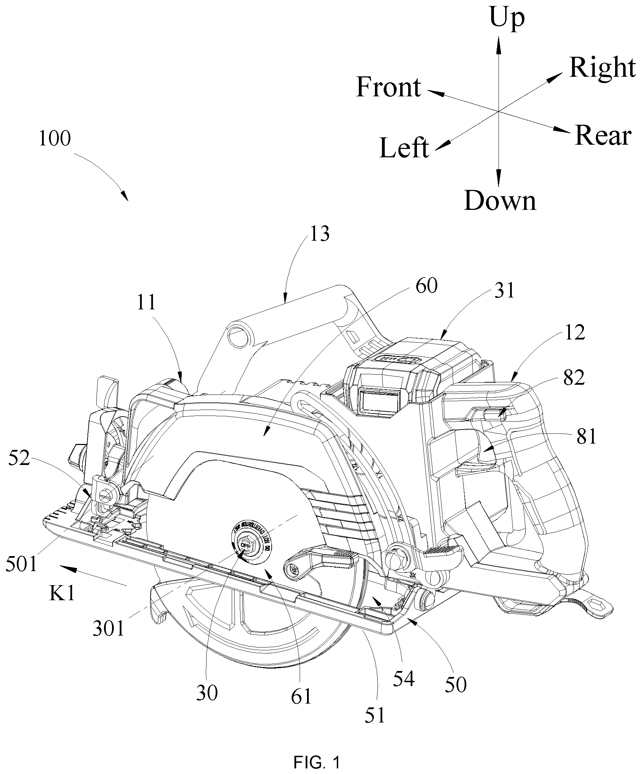

FIG. 1 shows a power tool in an example of the present application. The power tool includes an electric motor assembly 20. In this example, the power tool is a circular saw 100. In some examples, the power tool may be another cutting tool, such as a table saw, a miter saw, a marble cutter, a tile saw, or a chainsaw.

In some examples, the power tool may be a garden tool, for example, a string trimmer, a blower, a walk-behind power tool such as a mower, or a washer. Alternatively, the power tool may be a decoration tool, for example, a screwdriver/drill/wrench, an electric hammer, a nail gun, or a sander. Alternatively, the power tool may be a reciprocating saw, or a jigsaw. Alternatively, the power tool may be a table tool, for example, a router. Alternatively, the power tool may be a sanding tool, for example, an angle grinder or a sander. Alternatively, the power tool may be another power tool, for example, a fan. Alternatively, the power tool may be walking equipment that does not travel on roads, for example, a utility vehicle, a dune buggy, a utility terrain vehicle (UTV), a golf cart, an all-terrain vehicle (ATV), or an agricultural machinery vehicle such as a reaper or a sprayer. Of course, it is understandable that the walking equipment may be a cleaning machine. Alternatively, the power tool may be a smart walking power tool that is driven by an electric motor or an electric motor assembly to travel and implement a work function, for example, a smart mower.

It is understandable that any power tool driven by an electric motor can adopt the technical solutions disclosed in this example. Any power device adopting the technical solutions disclosed in this example falls within the scope of the present application. For example, the power tool may be a powerhead, and the powerhead includes the electric motor. The powerhead is configured to be adapted to some output assemblies to implement functions of the tool.

As shown in FIG. 1, the circular saw 100 is used as an example. The circular saw 100 is a handheld circular saw. Unless otherwise specified, directional terms, such as front, rear, left, right, up, and down, are the directions of the circular saw 100 in normal use. For example, the forward direction of the circular saw 100 is defined as the front, and the direction opposite to the forward direction of the circular saw 100 is defined as the rear.

The circular saw 100 includes a power supply 31. In this example, the power supply 31 is a direct current power supply. The direct current power supply provides electrical energy for the circular saw 100. The direct current power supply includes at least one battery pack 31 configured to provide a source of energy for the electric motor assembly 20. The battery pack 31 mates with the corresponding power circuit to supply power to the circular saw 100. It is to be understood by those skilled in the art that the power supply is not limited to the direct current power supply, and the corresponding components in the machine may be powered through mains power or an alternating current power supply in conjunction with corresponding rectifier, filter, and voltage regulator circuits. In the subsequent description, the battery pack 31 is used instead of the power supply 31, which cannot be construed as limiting the present application.

The battery pack 31 may be a lithium battery pack, a solid-state battery pack, or a pouch battery pack. In some examples, when the power supply includes multiple battery packs 31, the battery packs 31 may be of the same type or of different types. In some examples, the electrical parameters, structural parameters, and physical parameters of the multiple battery packs 31 may be the same or different.

As shown in FIGS. 1 to 8, the circular saw 100 further includes an output shaft 30, a body housing 11, the electric motor assembly 20, a power transmission mechanism 40, and a base plate 50. The output shaft 30 is used for mounting a cutting member 61. The cutting member 61 rotates about an output axis 301. In this example, the cutting member 61 is a circular saw blade. The electric motor assembly 20 is configured to drive the output shaft 30 to rotate. The power transmission mechanism 40 is configured to transmit the output power of the electric motor assembly 20 to the output shaft 30. The body housing 11 is configured to accommodate parts such as the electric motor assembly 20 and the power transmission mechanism 40, and the output shaft 30 and the cutting member 61 are disposed outside the body housing 11. The base plate 50 is movably connected to the body housing 11, and the base plate 50 is formed with a base plate bottom surface 51 in contact with the workpiece. The base plate 50 is formed with a saw blade through hole 54 extending along a first direction K1, and the saw blade can pass through the saw blade through hole 54 and protrude downward from the base plate bottom surface 51.

The body housing 11 includes a first housing 111, and the first housing 111 is formed with or connected to a grip 12 for holding. The grip 12 is located at the rear end of the circular saw 100 and can be held by the user, thereby operating the circular saw 100 to perform a cutting operation. In some examples, a control switch 81 and a safety switch 82 are further provided on the grip 12, and the control switch 81 can be triggered only when the safety switch 82 is pressed. That is to say, two actions are required before the electric motor or electric motor assembly 20 can be started. Therefore, the danger caused by a single operation is avoided. When the user holds the grip 12, the hand of the user holding the grip 12 can trigger the safety switch 82 and the control switch 81 to start or shut down the circular saw 100. In an example, the first housing 111 may be further formed with a second grip 13. The second grip 13 is located at the front end of the circular saw 100 and is used as an auxiliary handle. In an example, the second grip 13 may be an external handle mounted on the body housing 11, that is to say, the second grip 13 may be an auxiliary operating component mounted separately on the body housing 11.

The circular saw 100 further includes a guard assembly 60. The guard assembly 60 can at least partially surround the cutting member 61 to protect the environment and the user. The guard assembly 60 includes a fixed guard 62 with an arc-shaped structure and a movable guard 63 that rotates relative to the fixed guard 62. The fixed guard 62 is connected to the first housing 111. The movable guard 63 is sleeved in the fixed guard 62 and can rotate about the output axis 301 to be retracted into the fixed guard 62. The output shaft 30 extends into the fixed guard 62, and the cutting member 61 and the output shaft 30 are detachably connected. In actual work, different types of cutting members 61 may be used according to the materials of the objects to be cut. The cutting member 61 is disposed in the fixed guard 62, almost the upper half of the outer circumference of the cutting member 61 is covered by the fixed guard 62, and the movable guard 63 rotates in the fixed guard 62 to cover or expose the lower half of the cutting member 61. An opening part 64 of the movable guard 63 is provided between the movable guard 63 and the fixed guard 62. When the circular saw 100 is used, the operator manually pushes the opening part 64 to rotate the movable guard 63 to expose part of the saw teeth.

The base plate 50 is movably connected to the fixed guard 62. In this example, a connection base 52 is disposed on the front side of the base plate 50, and the connection base 52 is connected to the fixed guard 62 via a pin 53 so that the fixed guard 62 can rotate relative to the base plate 50. The axis on which the pin 53 lies is defined as a pivot axis 501. The pivot axis 501 is parallel to the output axis 301. When the fixed guard 62 rotates about the pivot axis 501 relative to the base plate 50, the relative position between the fixed guard 62 and the base plate 50 changes so that the circular saw 100 can have different depths of cut. The fixed guard 62 is rotated by applying a force to the grip 12 to rotate the grip 12 relative to the base plate 50, thereby driving the fixed guard 62 to rotate relative to the base plate 50. It is to be understood that in some examples, the pivot axis 501 and the output axis 301 may intersect or be perpendicular.

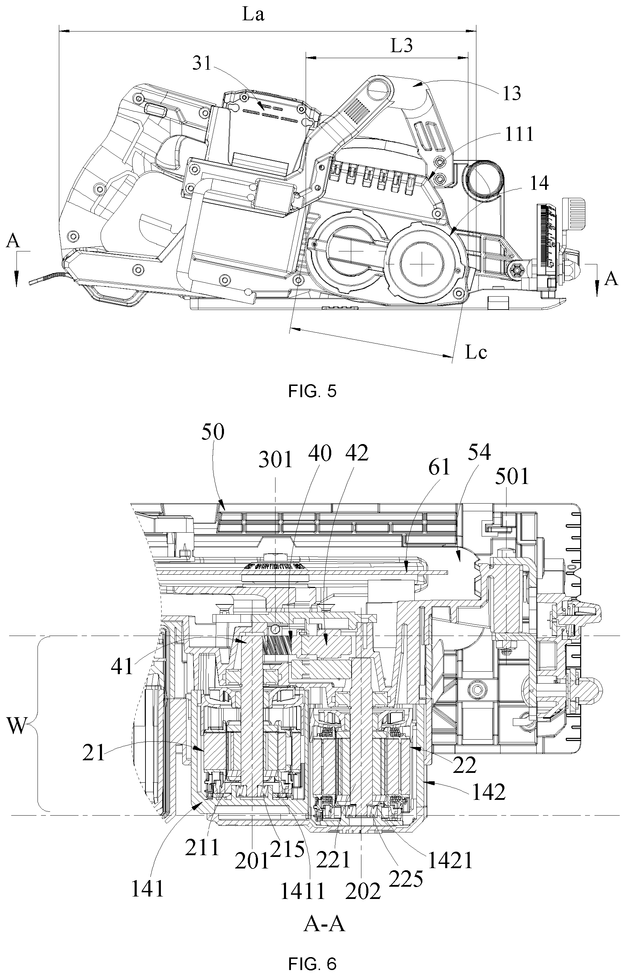

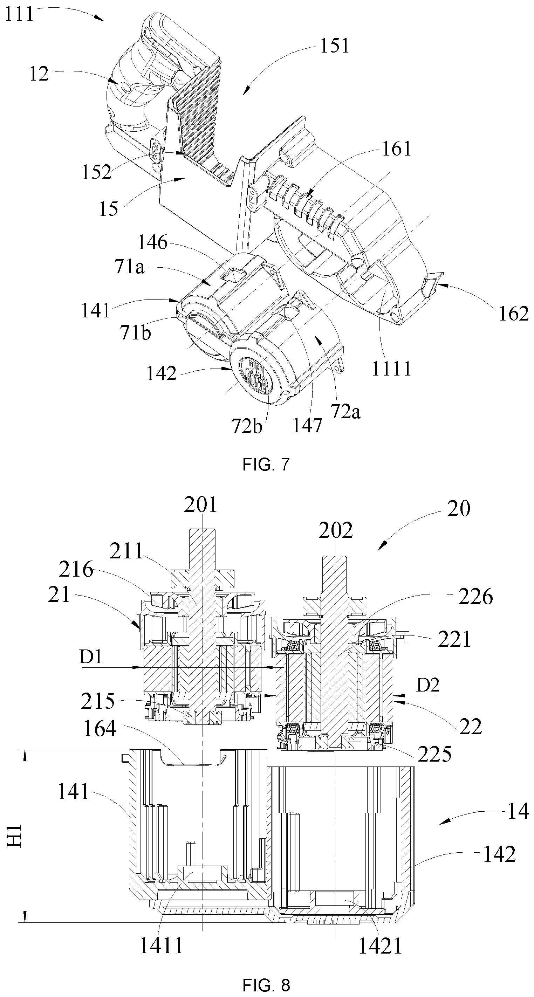

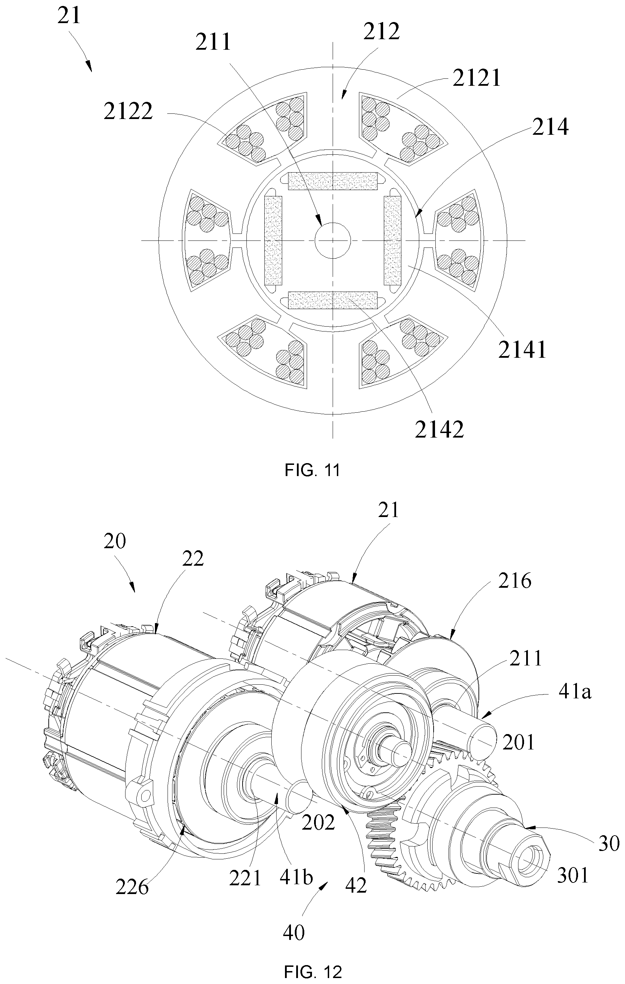

As shown in FIGS. 6 and 8, the electric motor assembly 20 includes a first electric motor 21 and a second electric motor 22. The first electric motor 21 includes a first drive shaft 211 rotating about a first axis 201. The second electric motor 22 includes a second drive shaft 221 rotating about a second axis 202. Each of the first electric motor 21 and the second electric motor 22 includes a stator and a rotor. With the first electric motor 21 as an example, as shown in FIG. 11, a stator 212 includes a stator core 2121 and stator windings 2122. A rotor 214 includes a rotor core 2141 and permanent magnets 2142. A drive shaft is formed on or connected to the rotor 214 and configured to output power. For an outrunner, a rotor is sleeved on the outer side of a stator. For an inrunner, a stator is sleeved on the outer side of a rotor. In this example, the overall structure of the electric motor here is generally the same as that of a common brushless motor and is not described in detail here.

As shown in FIGS. 6 and 8, the power transmission mechanism 40 is configured to transmit power of at least one of the first electric motor 21 and the second electric motor 22 to the output shaft 30. The torque of the first drive shaft 211 and the torque of the second drive shaft 221 are outputted through the output shaft 30. In this example, the first electric motor 21 and the second electric motor 22 work in coordination to output the torque of the electric motor assembly 30 through the output shaft 30, thereby outputting torque outward through the output shaft 30. The electric circular saw of the present application is used as an example. The first electric motor 21 and the second electric motor 22 work in coordination so that the output shaft 30 drives the cutting member 61 to perform a cutting operation. In the related art, multiple electric motors drive the power tool. For example, in an outdoor traveling device or a wheeled device, multiple electric motors such as two electric motors are used for driving different output shafts or output portions, respectively. For example, in the related art, the first electric motor and the second electric motor are used for driving two or more drive wheel or drive shafts, respectively. However, in this example, the electric motor assembly including multiple electric motors is used for driving the same output shaft, that is to say, the torque of the drive shafts of the multiple electric motors are all outputted through one output shaft. The torque transmission paths of the multiple electric motors have the same endpoint so that the high-efficiency working interval of the entire power tool can be improved, thereby enabling the power tool with only one output shaft to be efficiently driven using the multiple electric motors. Compared with multiple electric motors driving different output portions or output shafts, in the present application, the multiple electric motors are used for driving one output shaft, and more difficulties need to be overcome for the transmission coordination, power distribution, and drive structure of the electric motor assembly 20 and the power transmission mechanism 40.

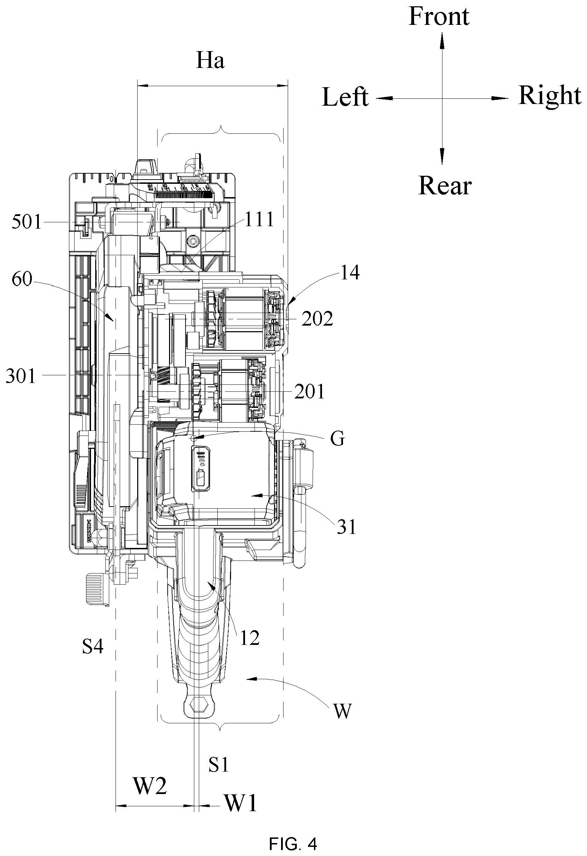

As shown in FIGS. 4 to 10, the first electric motor 21 and the second electric motor 22 are arranged along the radial direction, that is to say, the first drive shaft 211 and the second drive shaft 221 are arranged along the radial direction of the first drive shaft 211. Alternatively, the first drive shaft 211 and the second drive shaft 221 are arranged along the radial direction of the second drive shaft 221. In this example, the first drive shaft 211 and the second drive shaft 221 are parallel and do not coincide. In this example, the first drive shaft 211 and the second drive shaft 221 are both parallel to the output shaft 30. In some alternative examples, the first drive shaft 211 and the second drive shaft 221 intersect or are perpendicular.

The body housing 11 includes an accommodation housing 14 configured to accommodate the electric motor assembly 20. The accommodation housing 14 is formed on or connected to the first housing 111. In this example, the guard assembly 60 and the accommodation housing 14 are basically located on two sides of the first housing 111. It is to be understood that the guard assembly 60 is located on the left side of the first housing 111, and the accommodation housing 14 is located on the right side of the first housing 111. In this example, the first housing 111 and the accommodation housing 14 are connected to each other. A through hole 1111 for the accommodation housing 14 to pass through is formed on the right sidewall of the first housing 111. The power transmission mechanism 40 is accommodated in the first housing 111 and is located outside the accommodation housing 14. In this manner, the arrangement of the components inside the body housing 11 can be more reasonable.

The accommodation housing 14 includes a first accommodation portion 141 for accommodating the first electric motor 21 and a second accommodation portion 142 for accommodating the second electric motor 22. As shown in FIGS. 5 and 8, when the following orthographic projections are observed along the extension direction of the output shaft 301, along the direction of the line connecting the projection of the first axis 201 and the projection of the second axis 202, the ratio of the outer dimension Lc of the projection of the accommodation housing 14 to the outer diameter D1 or D2 of any one of the electric motors is greater than or equal to 1.1. In the case where the first electric motor 21 and the second electric motor 22 are used for mating with each other in controlling the output of the output shaft 30, when the first electric motor 21 and the second electric motor 22 are non-coaxially arranged, to ensure that the first electric motor 21 and the second electric motor 22 can both be mounted stably, the dimension of the accommodation housing 14 needs to be greater than 1.1 times the diameter of a single electric motor. In this manner, the relative position between the first electric motor 21 and the second electric motor 22 is reasonably set so that the space in which the first electric motor 21 and the second electric motor 22 can be mounted stably exists. On the other hand, the user can easily identify the difference between the product controlled by one electric motor and the product simultaneously controlled by the first electric motor 21 and the second electric motor 22.

In this example, the second electric motor 22 is used as an example, the second electric motor 22 is an inrunner, and the "outer diameter of the electric motor" is the outer diameter of the stator of the electric motor. The outer diameter of the second electric motor 21 is D2. Along the direction of the line connecting the projection of the first axis 201 and the projection of the second axis 202, the ratio of the outer dimension Lc of the projection of the accommodation housing 14 to the outer diameter D2 of the second electric motor 21 is greater than or equal to 1.2, 1.4, 1.6, or 1.8. In some examples, along the direction of the line connecting the projection of the first axis 201 and the projection of the second axis 202, the ratio of the outer dimension Lc of the projection of the accommodation housing 14 to the outer diameter D2 of the second electric motor 21 is greater than or equal to 2. In some examples, along the direction of the line connecting the projection of the first axis 201 and the projection of the second axis 202, the ratio of the outer dimension Lc of the projection of the accommodation housing 14 to the outer diameter D2 of the second electric motor 21 is greater than or equal to 2.1 or 2.2. In this example, the first electric motor 21 and the second electric motor 22 have the same outer diameter. In terms of the arrangement positions, the first electric motor 21 and the second electric motor 22 are radially separated from each other. In this example, as shown in FIGS. 6 and 8, the first electric motor 21 and the second electric motor 22 do not overlap along a direction perpendicular to the base plate bottom surface 51. In some examples, the first electric motor 21 and the second electric motor 22 do not overlap in the extension direction of the cutting member 61, that is to say, no straight line that extends along the direction of the output axis 301 and can pass through the first electric motor 21 and the second electric motor 22 at the same time exists.

In this example, the first electric motor 21 and the second electric motor 22 at least partially overlap in the direction of the output axis 301. That is to say, at least a third straight line that is perpendicular to the output axis 301 and passes through both the first electric motor 21 and the second electric motor 22 exists. In this manner, the dimension of the electric motor assembly 20 in the direction of the output axis 301 can be more compact. In this example, the outer dimension Lc of the projection of the accommodation housing 14 along the direction of the line connecting the projection of the first axis 201 and the projection of the second axis 202 is greater than the outer dimension H1 of the accommodation housing 14 along the direction of the output axis 301, that is, the radial dimension of the accommodation housing 14 is greater than the axial dimension of the accommodation housing 14.

As shown in FIGS. 6 and 8, the first accommodation portion 141 supports at least a first bearing portion 215 of the first electric motor 21, and the first bearing portion 215 is on a side facing away from the output shaft 30. The first bearing portion 215 includes a ball bearing. The ball bearing supports an end of the first drive shaft 211 facing away from the output shaft 30. A first bearing seat 1411 for supporting the ball bearing is disposed on the bottom surface of the first accommodation portion 141. The second accommodation portion 142 supports at least a second bearing portion 225 of the second electric motor 22, and the second bearing portion 225 is on a side facing away from the output shaft 30. The second bearing portion 225 includes a ball bearing. The ball bearing supports an end of the second drive shaft 221 facing away from the output shaft 30. A second bearing seat 1421 for supporting the ball bearing is disposed on the bottom surface of the second accommodation portion 142. In this manner, the first electric motor 21 and the second electric motor 22 are stably mounted in the first accommodation portion 141 and the second accommodation portion 142, respectively.

In some alternative examples, the first electric motor 21 and the second electric motor 22 are configured to partially overlap in the radial direction, that is to say, at least a fourth straight line that is parallel to the output axis 301 and passes through both the first electric motor 21 and the second electric motor 22 exists. In this manner, the dimension of the electric motor assembly 20 in the radial direction can be more compact. In this manner, in this case, the outer dimension Lc of the projection of the accommodation housing 14 along the direction of the line connecting the projection of the first axis 201 and the projection of the second axis 202 may be less than or equal to the outer dimension H1 of the accommodation housing 14 along the direction of the output axis 301.

As shown in FIGS. 7 to 10, the accommodation housing 14 includes a first marker structure corresponding to the first electric motor 21 and a second marker structure corresponding to the second electric motor 22. The first marker structure and the second marker structure are formed on or connected to the outer wall surface of the accommodation housing 14. In this manner, the user can easily identify that the first electric motor 21 and the second electric motor 22 mating with each other for driving are used in the product. Therefore, the internal features of the product can be apparent, and the user participation in product selection can be improved.

In some examples, as shown in FIG. 7, a first marker structure 71a is configured to include a shape similar to the partial outline of the first electric motor 21. A second marker structure 72a is configured to include a shape similar to the partial outline of the second electric motor 22. For example, the first marker structure 71a is the first accommodation portion 141 in the accommodation housing 14, and the outer wall of the first accommodation portion 141 is an arc edge that is similar to the outer shape of the first electric motor 21. The second marker structure 72a is the second accommodation portion 142 in the accommodation housing 14, and the outer wall of the second accommodation portion 142 is an arc edge that is similar to the outer shape of the second electric motor 22. Alternatively, for example, the first marker structure 71a is the first accommodation portion 141 in the accommodation housing 14, and the second marker structure 72a is the second accommodation portion 142 in the accommodation housing 14. An apparent recess, protrusion, distinguishing shape, or separation mark exists between the first accommodation portion 141 and the second accommodation portion 142, thereby dividing the accommodation housing 14 into partitions associated with the number of electric motors. It is to be understood that the outer wall of the first accommodation portion 141 may be designed into other shapes from the perspective of industrial design, and the outer wall of the second accommodation portion 142 may be designed into other shapes from the perspective of industrial design. **In** the technical field and in the eyes of ordinary consumers, the shape identified as the electric motor may be understood as a shape similar to the outline of the electric motor. For example, in addition to the circle that is the same as the shape of the electric motor, the shape identified as the electric motor may be an ellipse, a shape formed by the combination of arcs and straight lines, a shape formed by the combination of multiple arcs, a rectangle, a polygon, a triangle, or another shape formed by lines.

**In** this example, the outer walls of the first marker structure 71a and the second marker structure 72a are configured to be a continuous surface. As shown in FIG. 7, the outer walls of the first accommodation portion 141 and the second accommodation portion 142 are a continuous structure, that is, the accommodation housing 14 is an integral structure.

**In** some alternative examples, the first marker structure and the second marker structure are configured to be independent double-cylinder structures. **It** is feasible that the accommodation housing 14 may be an integral structure, and the first marker structure and the second marker structure are two closed structures, respectively and are disposed on the outer wall of the accommodation housing 14. It is also feasible that the accommodation housing 14 may be divided into the first accommodation portion 141 and the second accommodation portion 142, which are structures enclosed by two independent outer walls.

In some alternative examples, as shown in FIG. 7, a first marker structure 71b and a second marker structure 72b are additional line structures disposed on the outer walls of the first accommodation portion 141 and the second accommodation portion 142. For example, the first marker structure 71b is a line structure that is on the outer wall of the first accommodation portion 141 and is similar to the outline of the electric motor. The second marker structure 72b is a line structure that is on the outer wall of the second accommodation portion 142 and is similar to the outline of the electric motor. The line structure may be a convex line, an inset line, a concave line, or a hollow line. For example, the first marker structure 71b is a line structure that is on the outer wall of the first accommodation portion 141 and associated with the represented electric motor or the number of electric motors. The second marker structure 72b is a line structure that is on the outer wall of the second accommodation portion 142 and associated with the represented electric motor or the number of electric motors, such as the "word", "letter", "number", or another related or similar thing. "The structure representing the electric motor" is a line structure that may be identified as the electric motor in the technical field and in the eyes of ordinary consumers.

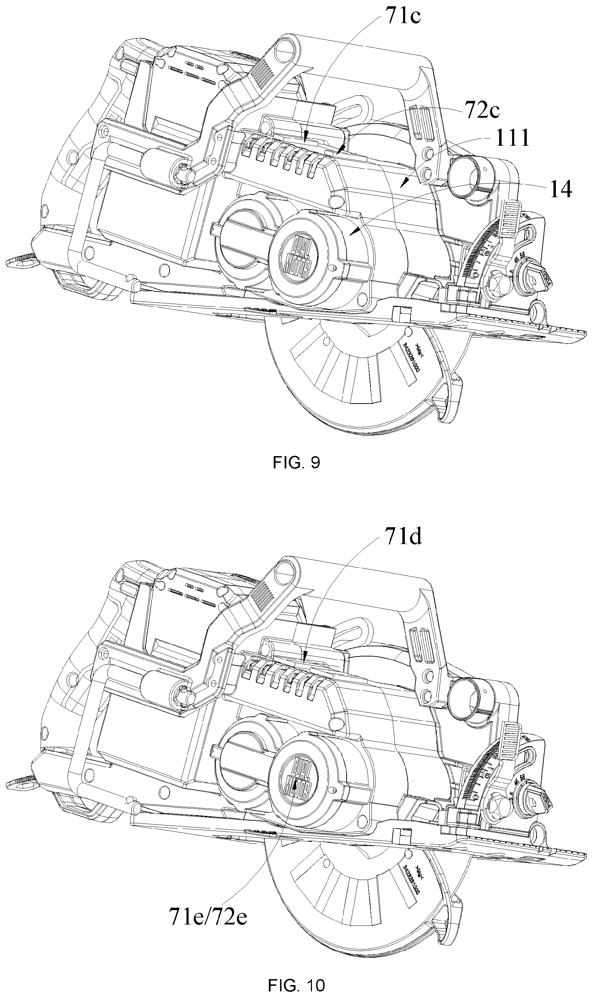

In some alternative examples, as shown in FIGS. 9 and 10, the first marker structure includes a first display portion 71c or 71d, and the second marker structure includes a second display portion 72c or 72d. The first display portion 71c or 71d, and the second marker structure includes the second display portion 72c or 72d, which are disposed at easily visible positions on the body housing 11, respectively. In this manner, in the process of using the circular saw 100, the user can check the usage states of the first electric motor 21 and the second electric motor 22 on the display portions simply by moving the line of sight.

In some examples, as shown in FIG. 9, the first display portion 71c includes a light emitter, and the light emitter indicates at least the on state and the off state of the first electric motor 21. For example, the first display portion 71c includes a light-emitting diode (LED) lamp, a chip on board (COB) light bead, or an incandescent light bulb. The first display portion 71c is disposed on the upper surface of the first housing 111, and the first display portion 71c is disposed on the upper surface of a portion of the first housing 111 closer to the accommodation housing 14. In some examples, the first display portion 71c is disposed on the upper surface of the accommodation housing 14. The first display portion 71c indicates the on/off state of the first electric motor 21 through changes in display, for example, through different indication features such as lighting up and extinguishing, steady illumination and flashing, and different colors. The first display portion 71c may also be multiple lights or a light strip. The rotational speed interval of the first electric motor 21 is indicated by using the difference in display characteristics of lights of different numbers or sections. In some examples, the first display portion 71c may further indicate an abnormality and send an abnormality alarm.

In some alternative examples, as shown in FIG. 10, the first display portion 71d includes a display screen, and the display screen is used as a human-computer interaction interface to display the operation state of the first electric motor 21. For example, the first display portion 71d includes an LED display screen, a liquid-crystal display (LCD) display screen, or an organic electroluminescent diode (OLED) display screen. The first display portion 71d is disposed on the upper surface of the accommodation housing 14. In some examples, the first display portion 71d is disposed on the upper surface of the first housing 111, and the first display portion 71d is disposed on the upper surface of a portion of the first housing 111 closer to the accommodation housing 14. Since the display screen is used as the human-computer interaction interface, more contents can be displayed and the display contents are more detailed and more intuitive. Therefore, depending on different settings, the display screen may display various information about the first electric motor 21 during the working process, such as power on and off information, speed information, output torque information, forward and reverse rotation information, loss information, and temperature information, and the first electric motor 21 can even be intuitively displayed in a dynamic shape on the display screen.

In some examples, the first display portion may include both the light emitter and the display screen. The second display portion 72c includes at least one of the light emitter and the display screen and is configured to indicate the operation state of the second electric motor 22. That is to say, the first display portion 71c or 71d and the second display portion 72c may be display components of the same type or of different types. At the same time, to facilitate user observation, the first display portion 71c or 71d and the second display portion 72c are disposed in the same region. For example, the first display portion 71c or 71d and the second display portion 72c are both disposed on the upper part of the accommodation housing 14, one of the first display portion 71c or 71d and the second display portion 72c is adjacent to the first electric motor 21, and the other one of the first display portion 71c or 71d and the second display portion 72c is adjacent to the second electric motor 22. When the first display portion and the second display portion use the same type of display components, the first display portion and the second display portion may be integrated. For example, different brightness and different colors of the LED lamp are used for displaying different electric motor start-up combinations. For example, different display regions of the same display interface of the display screen are used for displaying the information about the first electric motor 21 and the information about the second electric motor 22, or different display interfaces are used for displaying the information about the first electric motor 21 and the information about the second electric motor 22, respectively, or a menu is used for allowing the user to choose among display of the information about the first electric motor 21, display of the information about the second electric motor 22, or display of the information about the first electric motor 21 and the second electric motor 22.

In some examples, a first display portion 71e includes an icon representing the first electric motor 21, a second display portion 72e includes an icon representing the second electric motor 22, and the first display portion 71e and the second display portion 72e are each provided with an adhesive backing layer. That is to say, the first display portion 71e and the second display portion 72e are adhesive labels. The icon representing the first electric motor 21 and the icon representing the second electric motor 22 may be Chinese characters, English words, graphics, or the like. The first display portion 71e and the second display portion 72e may be disposed on the same paper with an adhesive backing layer.

Some of the technical solutions in the preceding examples may be used alone, or a combination of several technical solutions may be used, thereby setting specific examples of the first marker structure and the second marker structure according to the actual requirements of the power tool.

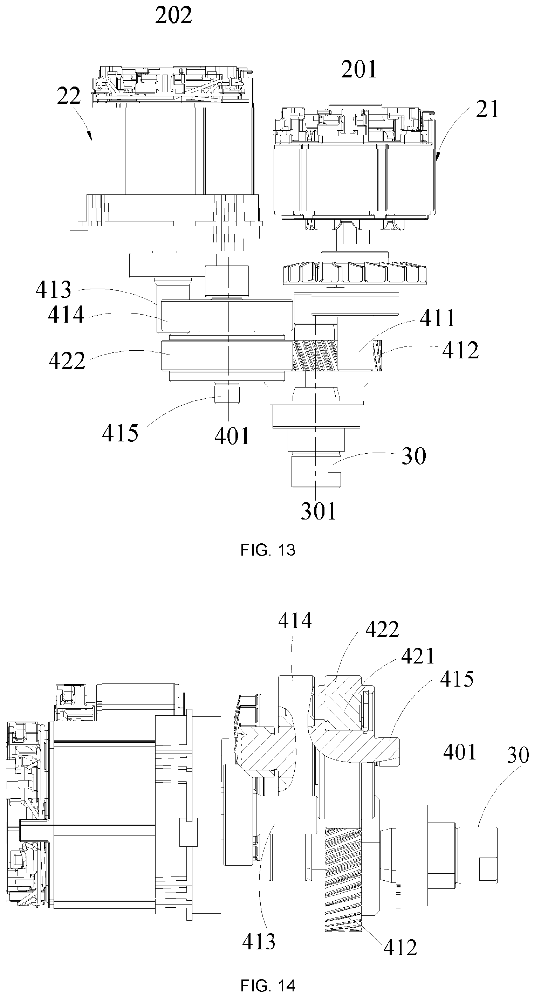

As shown in FIG. 6 and FIGS. 12 to 16, the power transmission mechanism 40 is configured to transmit power of at least one of the first electric motor 21 and the second electric motor 22 to the output shaft 30. The torque of the first drive shaft 211 and the torque of the second drive shaft 221 are outputted through the output shaft 30. The power transmission mechanism 40 includes a transmission assembly 41 disposed between the output shaft 30 and at least one of the first electric motor 21 and the second electric motor 22. The transmission assembly 41 includes at least a deceleration mechanism. A clutch assembly 42 is disposed between the first electric motor 21 and the second electric motor 22, and the clutch assembly 42 is configured to allow or not allow at least one of the first drive shaft 211 or the second drive shaft 221 to drive the output shaft 30 under a preset condition. In this manner, the first electric motor 21 can drive the output shaft 30 to operate in an interval where the motor efficiency of the first electric motor 21 is relatively high, and the second electric motor 22 can drive the output shaft 30 to operate in an interval where the motor efficiency of the second electric motor 22 is relatively high. It is to be understood that the clutch assembly 42 is disposed between the first electric motor 21 and the second electric motor 22. On the one hand, in terms of orientations, the clutch assembly 42 at least partially overlaps any one of the first electric motor 21 and the second electric motor 22 in the axial direction of the drive shafts or at least partially overlaps any one of the first electric motor 21 and the second electric motor 22 in the radial direction of the drive. On the other hand, in terms of the connection relationship, the clutch assembly 42 is directly or indirectly connected to the first electric motor 21 and the second electric motor 22 separately; or a direct or indirect power transmission path exists between the clutch assembly 42 and the first electric motor 21 and a direct or indirect power transmission path exists between the clutch assembly 42 and the second electric motor 22.

The transmission assembly 41 with the deceleration mechanism is provided to improve the cutting capability of the circular saw 100 and improve the cutting efficiency of the circular saw 100. The coupling of the electric motor assembly 20 enables the circular saw 100 to be used in both the light load condition and the heavy load condition. At the same time, the performance requirements for the electric motor in the electric motor assembly are reduced so that the performance of a large electric motor can be achieved by using an electric motor with a small diameter. In this manner, not only can costs be reduced, but also the requirements for machine heat dissipation and other aspects can be lowered.

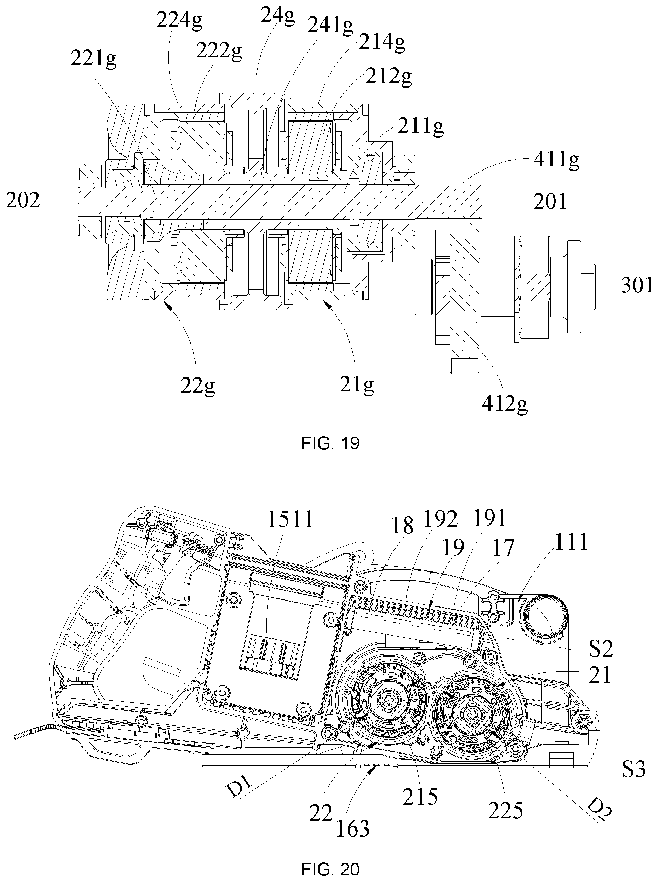

The transmission assembly 41 is configured to connect at least one of the first drive shaft 211 and the second drive shaft 221 to the clutch assembly 42. As shown in FIGS. 19 to 21, in an example, the transmission assembly 41 includes a first gearset 41a configured to connect the first drive shaft 211 to the output shaft 30. The transmission assembly 41 further includes a second gearset 41b connecting the second drive shaft 221 to the output shaft 30. The clutch assembly 42 is disposed between the second gearset 41b and the output shaft 30. In this example, the first gearset 41a is a reduction gear drive, and the second gearset 41b is a reduction gear drive. The first gearset 41a is a one-stage reduction drive, that is to say, the first gearset 41a provides a deceleration movement. The second gearset 41b is a one-stage reduction drive, that is to say, the second gearset 41b provides a deceleration movement. In some alternative examples, the first gearset 41a and the second gearset 41b may each include the multi-stage reduction drive or the speed-increasing drive followed by the reduction drive. In some alternative examples, the gear ratios or reduction ratios of the first gearset 41a and the second gearset 41b may be adjusted so that one gearset can provide multiple gear ratios or reduction ratios. In this example, the reduction ratio of the first gearset 41a is different from the reduction ratio of the second gearset 41b. The first gearset 41a and the second gearset 41b each include one or a combination of the cylindrical gear transmission, the bevel gear transmission, the worm transmission, and the planet gear transmission.

The first gearset 41a includes a first drive gear 411 and a first driven gear 412. The first drive gear 411 is formed on or connected to the first drive shaft 211. Optionally, the first drive gear 411 is formed at an end of the first drive shaft 211 facing the cutting member 61. The first drive gear 411 rotates about the first axis 201, the first driven gear 412 externally meshes with the first drive gear 411, the first driven gear 412 is mounted on the output shaft 30, and the first driven gear 412 rotates about the output axis 301. The first drive gear 411 and the first driven gear 412 form the reduction drive. As an example, the reduction ratio between the first drive gear 411 and the first driven gear 412 is 8/38.

The second gearset 41b includes a second drive gear 413 and a second driven gear 414. The second drive gear 413 is formed on or connected to the second drive shaft 221. Optionally, the second drive gear 413 is formed at an end of the second drive shaft 221 facing the cutting member 61. The second drive gear 413 rotates about the second axis 202, the second driven gear 414 externally meshes with the second drive gear 413, the second driven gear 414 is mounted on an idler shaft 415, and the second driven gear 414 rotates about a third axis 401 of the idler shaft 415. The third axis 401 and the first axis 201 are parallel and do not coincide. The second drive gear 413 and the second driven gear 414 form the reduction drive. In this example, the clutch assembly 42 includes a one-way transmission member 421. The one-way transmission member 421 is operable to connect the rotation of the first electric motor 21 to the rotation of the second electric motor 22 in a first direction of rotation and disconnect the rotation of the first electric motor 21 from the rotation of the second electric motor 22 in a second direction of rotation. Optionally, the clutch assembly 42 is a one-way bearing or an overrunning clutch. The one-way transmission member 421 is mounted on the idler shaft 415, and the one-way transmission member 421 rotates synchronously with the second driven gear 414. The inner race of the one-way transmission member 421 is connected to the idler shaft 415, and the outer race of the one-way transmission member 421 is connected to a third gear 422. The third gear 422 externally meshes with the first driven gear 412 so that the first electric motor 21 and the second electric motor 22 can be coupled. In this manner, the transmission between the second electric motor 22 and the first electric motor 21 can be controlled. In this example, the third gear 422 and the first driven gear 412 are basically in constant speed transmission, that is, the rotational speed of the third gear 422 is the same as the rotational speed of the first driven gear 412. The gear ratio between the third gear 422 and the first driven gear 412 is 1. As an example, the reduction ratio between the second drive gear 413 and the second driven gear 414 is 7/38.

During operation, when the first electric motor 21 starts to work, through the first gearset 41a, the first electric motor 21 drives the output shaft 30 to rotate. The one-way transmission member 421 is provided to restrict the transmission of the output rotational speed of the first electric motor 21 to the second electric motor 22, that is, the one-way transmission member 421 allows only the transmission of the rotation of the second drive shaft 221 (the second drive gear) of the second electric motor 22 to the second driven gear 414. Therefore, in this case, only the first electric motor 21 drives the output shaft 30 to rotate. When the second electric motor 22 starts, the rotation lock achieved by the one-way transmission member 421 is released. When the rotational speed of the second driven gear 414 is less than the rotational speed of the third gear 422, the rotational speed of the second driven gear 414 cannot be transmitted to the output shaft. It is to be understood that when a power output portion of a one-way clutch (the outer race in this example) rotates faster than a power source (the inner race in this example), the one-way clutch is in a disengaged state, and the inner race and the outer race are not linked, which is a one-way overrunning function of the one-way clutch. When the rotational speed of the second driven gear 414 is equal to or higher than the rotational speed of the first driven gear 412, that is, when the rotational speed of the second driven gear 414 is equal to or higher than the rotational speed of the third gear 422, the inner race and the outer race of the one-way clutch are linked, and the first electric motor 21 and the second electric motor 22 simultaneously drive the output shaft 30 to move. At the same time, the first driven gear 412 is driven by the second driven gear 414 through the third gear 422 so that the first driven gear 412 moves at the rotational speed of the second driven gear 414 (that is, the idler shaft 415).

A non-thrust bearing 416 is disposed at a first end of the idler shaft 415, and an elastic member 417 is disposed at an end of the non-thrust bearing 416. In this manner, the gears on the idler shaft 415 can be prevented from moving axially.

In some examples, the clutch assembly may be another mechanical clutch assembly. For example, the clutch assembly may include a dog clutch, a ratchet clutch, a centrifugal clutch, a differential, a friction clutch, or a hydrodynamic clutch. The preceding mechanical clutches in simple modifications or combinations may be used as the clutch assembly of the present application. On the premise that the function of the clutch assembly of the present application can be implemented, the specific form of the structure does not affect the substantive content of the present application.

In some examples, the clutch assembly further includes an electronic clutch. For example, the clutch assembly includes an electromagnetic clutch. For example, the electromagnetic clutch may be a dry single-plate electromagnetic clutch, a dry multi-plate electromagnetic clutch, a wet multi-plate electromagnetic clutch, a magnetic particle clutch, or a slip electromagnetic clutch.

In some examples, the mechanical clutch assembly and the electronic clutch may be coupled, thereby allowing or not allowing at least one of the first drive shaft 211 or the second drive shaft 221 to drive the output shaft 30 under the preset condition.

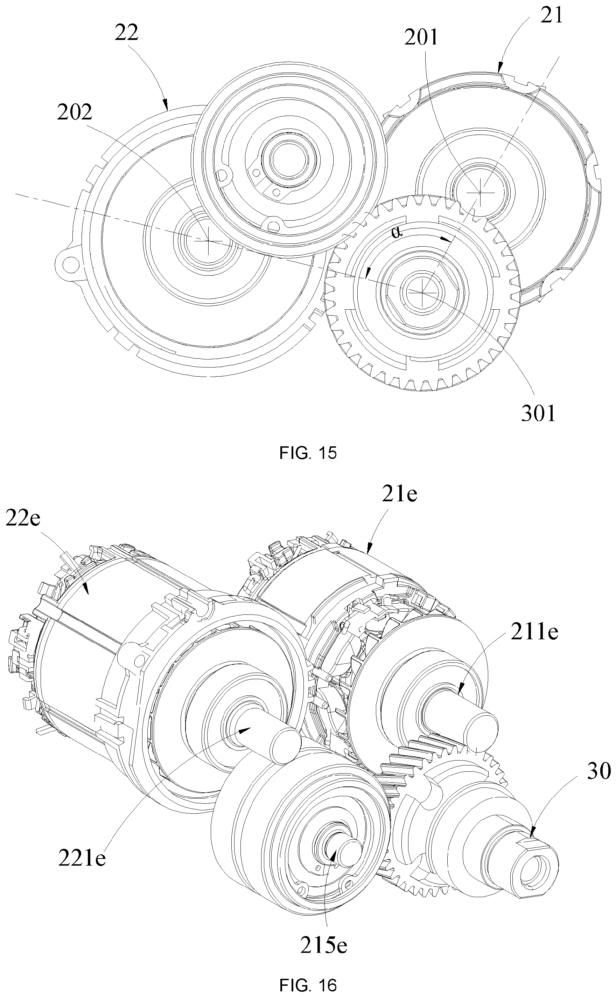

As shown in FIG. 15, along the direction of the output axis 301, the projection of the first axis 201 and the projection of the second axis 202 are located above the projection of the output axis 301. In this manner, a larger portion of the electric motor assembly is located on the upper side of the output shaft so that the depth of cut of the circular saw can be ensured. The output axis 301 is basically at the center position of the cutting member 61, and the depth of cut of the circular saw is closely related to the positional relationship between the output axis and the base plate. The drive axis of the electric motor assembly is disposed above the output axis, thereby not affecting the installation of the base plate and the usage of the circular saw. During the cutting process of the circular saw, no component interfering with the output axis approaching the base plate exists. An included angle α between a line connecting the first axis 201 and the output axis 301 and a line connecting the second axis 202 and the output axis 301 is greater than or equal to 45° and less than or equal to 180°. In this manner, the transmission between the first electric motor and the second electric motor can be ensured. On the other hand, the arrangement structure of the first electric motor, the second electric motor, and the output shaft can be compact.

Optionally, when the first electric motor 21 and the second electric motor 22 are arranged radially, the first electric motor 21 and the second electric motor 22 are staggered with each other in the up and down direction. The output shaft 30 and the idler shaft 415 are located on two sides of the first drive shaft 211, respectively. The output shaft 30 and the idler shaft 415 are located on two sides of the second drive shaft 221, respectively. In this example, the first electric motor 21 is a small torque output electric motor, and the second electric motor 22 is a large torque output electric motor. At least one of the first gearset 41a and the second gearset 41b includes a helical gear.

As shown in FIG. 16, when a first electric motor 21e and a second electric motor 22e are arranged radially, a first drive shaft 211e is basically flush with a second drive shaft 221e in the up and down direction. The output shaft 30 and an idler shaft 415e are located on the same side of the first drive shaft 211e.

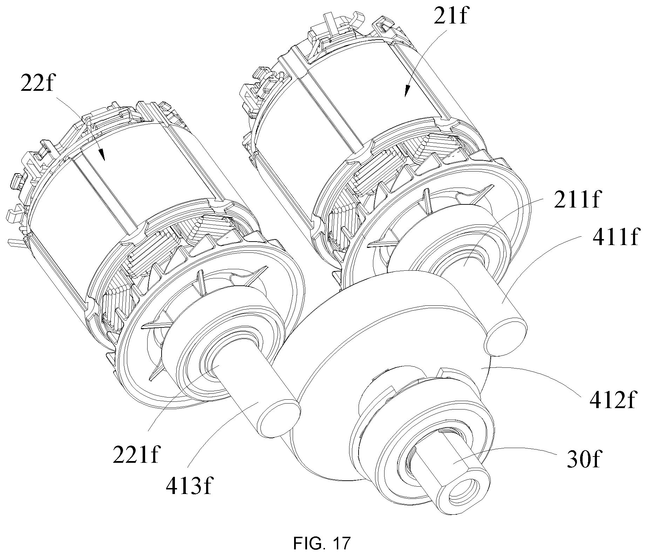

As shown in FIG. 17, as an example, a first electric motor 21f and a second electric motor 22f are arranged radially, and a first drive gear 411f on a first drive shaft 211f and a second drive gear 413f on a second drive shaft 221f both externally mesh with a driven gear 412f on an output shaft 30f. In this case, the first electric motor 21f and the second electric motor 22f may not be provided with a clutch assembly, that is, the first electric motor and the second electric motor synchronously or basically synchronously output torque. In this case, along the direction of the output axis 301, the projection of the first axis 201 and the projection of the second axis 202 are located above the projection of the output axis 301. The included angle α between a line connecting the first axis and the output axis and a line connecting the second axis and the output axis is greater than or equal to 45° and less than or equal to 180°.

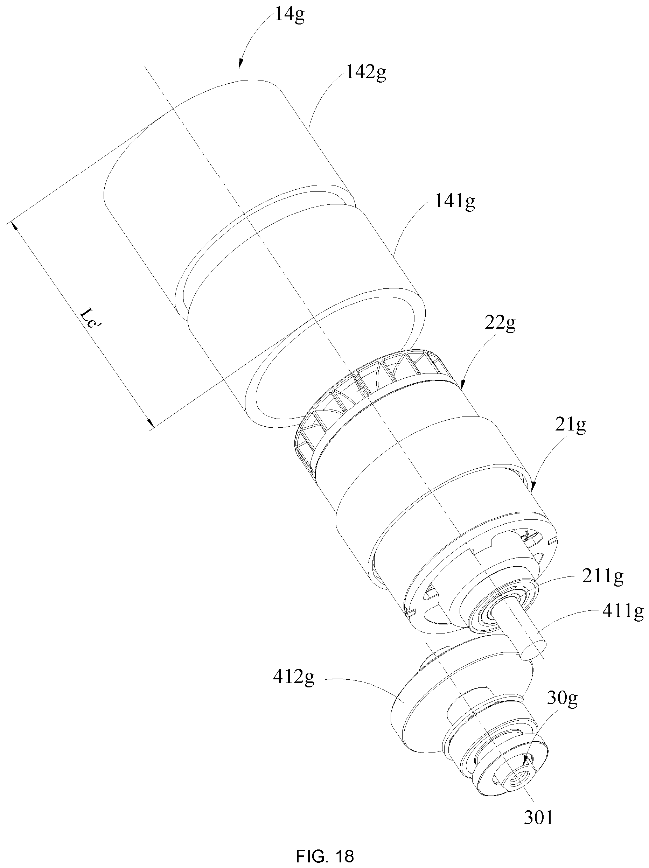

As shown in FIGS. 18 and 19, as another example of the present application, a first electric motor 21g and a second electric motor 22g are arranged axially. That is, a first drive shaft 211g of the first electric motor 21g and a second drive shaft 221g of the second electric motor 22g are arranged coaxially. The first drive shaft 211g is mechanically coupled to the second drive shaft 221g. A first drive gear 411g is on the first drive shaft 211g. The first drive gear 411g externally meshes with a driven gear 412g on an output shaft 30g. The first drive gear 411g and the driven gear 412g form the reduction drive.

An accommodation housing 14g is configured to accommodate the first electric motor 21g and the second electric motor 22g. Optionally, a first accommodation portion 141g of the accommodation housing 14g for accommodating the first electric motor 21g and a second accommodation portion 142g of the accommodation housing 14g for accommodating the second electric motor 22g are arranged axially. The ratio of the outer dimension Lc' of the accommodation housing 14g along the direction of the first drive shaft 211g or the second drive shaft 221g to the length of any one of the first drive shaft 211g and the second drive shaft 221g is greater than or equal to 1.1. When the first electric motor 21g and the second electric motor 22g are coaxially arranged, to ensure that the first electric motor 21g and the second electric motor 22g can be mounted stably, the dimension of the accommodation housing 14g needs to be greater than 1.1 times the length of a single drive shaft. In this manner, the relative position between the first electric motor 21g and the second electric motor 22g is reasonably set so that the space in which the first electric motor 21g and the second electric motor 22g can be mounted stably exists. In some examples, the ratio of the outer dimension Lc' of the accommodation housing 14g along the direction of the first drive shaft 211g or the second drive shaft 221g to the length of any one of the first drive shaft 211g and the second drive shaft 221g is greater than or equal to 1.2, 1.4. 1.6, or 1.8. In some examples, the ratio of the outer dimension Lc' of the accommodation housing 14g along the direction of the first drive shaft 211g or the second drive shaft 221g to the length of any one of the first drive shaft 211g and the second drive shaft 221g is greater than or equal to 2. In some examples, the ratio of the outer dimension Lc' of the accommodation housing 14g along the direction of the first drive shaft 211g or the second drive shaft 221g to the length of any one of the first drive shaft 211g and the second drive shaft 221g is greater than or equal to 2.1 or 2.2.

As shown in FIG. 19, the first electric motor 21g is an outrunner, and the second electric motor 22g is an outrunner. The first electric motor 21g includes a first stator 212g and a first rotor 214g, and the first drive shaft 211g is formed on or connected to the first rotor 214g. The second electric motor 22g includes a second stator 222g and a second rotor 224g. The second drive shaft 221g is formed on or connected to the second rotor 224g.

The first drive shaft 211g rotates synchronously with the second drive shaft 221g. In this example, the first drive shaft 211g and the second drive shaft 221g are formed into an integral structure. In some examples, the first drive shaft 211g and the second drive shaft 221g may be separately provided independent shafts, and the first drive shaft and the second drive shaft may be connected by a connector or a fastener so that the first drive shaft can rotate synchronously with the second drive shaft. An electric motor fixing portion 24g connected to the first stator 212g and the second stator 222g separately is further included. The electric motor fixing portion 24g is provided with an accommodation channel 241g configured to at least partially accommodate the first drive shaft 211g and the second drive shaft 221g. The accommodation channel 241g at least partially overlaps the first stator 212g along the direction of the first axis 201, and the accommodation channel 241g at least partially overlaps the second stator 222g along the direction of the first axis 201. The stator 212 of the first electric motor and the stator 222 of the second electric motor are coaxially connected via the electric motor fixing portion 24g.

In some alternative examples, a clutch assembly is provided between a first motor shaft and a second motor shaft, or a clutch assembly is provided between the first electric motor and the output shaft, or a clutch assembly is provided between the second electric motor and the output shaft so that the power of the first electric motor and the power of the second electric motor can be selectively transmitted to the output shaft. The clutch assembly may be any one of the clutch structures in the preceding examples. The clutch assembly is disposed in the electric motor fixing portion or between the first drive gear 411g and the first driven gear. In this case, along the direction of the output axis 301, the projection of the first axis 201 and the projection of the second axis 202 are located above the projection of the output axis 301.

In the present application, the first electric motor 21 outputs the first torque and the first rotational speed. The second electric motor 22 outputs the second torque and the second rotational speed. In some examples, the first torque is different from the second torque. The first rotational speed is different from the second rotational speed. In some examples, the first torque being different from the second torque is interpreted as that the maximum output torque of the first electric motor 21 and the second electric motor 22 are different and the first electric motor 21 and the second electric motor 22 may output the same torque at a moment or in a time period in the entire working process. In some examples, the output torque ranges of the first electric motor 21 and the second electric motor 22 in high efficiency intervals are different, and the first electric motor 21 and the second electric motor 22 may output the same torque at a moment or in a time period in the entire working process. In some examples, the first rotational speed being different from the second rotational speed is interpreted as that the maximum output rotational speeds of the first electric motor 21 and the second electric motor 22 are different, and the first electric motor 21 and the second electric motor 22 may output the same rotational speed at a moment or in a time period in the entire working process. In some examples, the output rotational speed ranges of the first electric motor 21 and the second electric motor 22 in high efficiency intervals are different, and the first electric motor 21 and the second electric motor 22 may output the same rotational speed at a moment or in a time period in the entire working process.

In some examples, the first electric motor 21 and the second electric motor 22 are used as an example, where the first electric motor 21 has low output torque. The second electric motor 22 has high output torque. Alternatively, the first electric motor 21 may have high output torque. The second electric motor 22 may have low output torque. Alternatively, the first electric motor 21 and the second electric motor 22 are the same type of electric motor and have different output rotational speeds and different output torques. In this example, the first electric motor 21 and the second electric motor 22 are each a direct current brushless motor.

Moreover, the first electric motor 21 and the second electric motor 22 are different in at least one structural parameter. The structural parameter includes the outer diameter D of the electric motor and the stack length of the electric motor. It is to be interpreted that the "outer diameter of the electric motor" refers to the outer diameter of the entire electric motor. The "stack length of the electric motor" refers to the length of the stator core. In this example, the diameter of the first electric motor 21 is less than or equal to 75 mm. The diameter of the first electric motor 21 is less than or equal to 70 mm. The diameter of the first electric motor 21 is less than or equal to 65 mm. In some examples, the diameter of the first electric motor 21 is less than or equal to 69 mm, 68 mm, 67 mm, 66 mm, 64 mm, 63 mm, 62 mm, 61 mm, 60 mm, 59 mm, 58 mm, 57 mm, 56 mm, or 55 mm. In this example, the diameter of the second electric motor 22 is less than or equal to 75 mm. The diameter of the second electric motor 22 is less than or equal to 70 mm. The diameter of the second electric motor 22 is less than or equal to 65 mm. In some examples, the diameter of the second electric motor 22 is less than or equal to 69 mm, 68 mm, 67 mm, 66 mm, 64 mm, 63 mm, 62 mm, 61 mm, 60 mm, 59 mm, 58 mm, 57 mm, 56 mm, or 55 mm.

In some examples, the structural parameter of the first electric motor 21 and the second electric motor 22 includes the outer diameter of the stator core, the inner diameter of the stator core, the outer diameter of the rotor core, the inner diameter of the rotor core, the thickness of a rotor pole, the thickness of a stator pole, the length of an air gap, the length of the core, the number of pairs of stator poles, an arc corresponding to the stator pole, the number of pairs of rotor poles, and an arc corresponding to the rotor pole. The first electric motor 21 and the second electric motor 22 are different in at least one structural parameter.

Of course, in some examples, the first electric motor 21 and the second electric motor 22 may be two completely identical electric motors. The first electric motor and the second electric motor are coupled to each other, thereby operating in an interval where the efficiency is higher.

In this example, the battery pack 31 supplies power to the first electric motor 21 and the second electric motor 22. The first electric motor 21 and the second electric motor 22 are powered through the battery pack 31 in conjunction with corresponding power circuits. As shown in FIGS. 5 and 7, the body housing 11 is provided with a semi-open battery accommodation compartment 15 which is recessed inward. The battery accommodation compartment 15 is disposed between the grip 12 and the electric motor assembly 20. The battery accommodation compartment 15 and the electric motor assembly 20 are disposed on the same side of the first housing 111. The battery accommodation compartment 15 and the battery pack 31 are disposed in front of the grip 12. The battery accommodation compartment 15 is disposed on the first housing 111.

As shown in FIG. 20, the battery accommodation compartment 15 includes a coupling portion 1511 electrically connected to the battery pack 31, and the coupling portion 1511 is provided with tool terminals (not shown in the figure). Tool terminals with the same structures (not shown in the figure) are provided on different power tools. The battery pack 31 includes an insertion structure and terminal interfaces. The tool terminals are adapted to the terminal interfaces on the battery pack 31. Tool terminals with the same structures are provided on different power tools so that the battery pack 31 can supply power to a variety of different power tools. The power circuit in collaboration with the battery pack is adjusted according to the control requirements of different power tools. In some examples, the nominal voltage of the power tool is greater than or equal to 18 V. The nominal voltage of the power tool is greater than or equal to 36 V and less than or equal to 56 V. In some examples, the nominal voltage of the power tool is greater than 56 V and less than or equal to 120 V. The first electric motor 21, the second electric motor 22, the battery pack 31, and the grip 12 are disposed on the same side of the cutting member 61, and after the battery pack 31 is inserted into the battery holder 15, the battery pack 31 is at least partially behind the first electric motor and the second electric motor and at least partially in front of the grip 12. Optionally, the battery pack 31 is inserted obliquely into the battery holder 15. In some examples, the battery pack 31 is partially located above the first electric motor and the second electric motor.

As shown in FIG. 20, the circular saw 100 further includes a controller 17 configured to control the electric motor assembly 20. The controller 17 is disposed on a control circuit board 18, where the control circuit board 18 includes a printed circuit board (PCB) and a flexible printed circuit (FPC) board. A dedicated control chip is used as the controller 17, for example, a single-chip microcomputer or a microcontroller unit (MCU). It is to be noted that the control chip may be integrated in the controller 17 or may be disposed independently of the controller 17. The structural relationship between a driver chip and the controller 17 is not limited in this example.

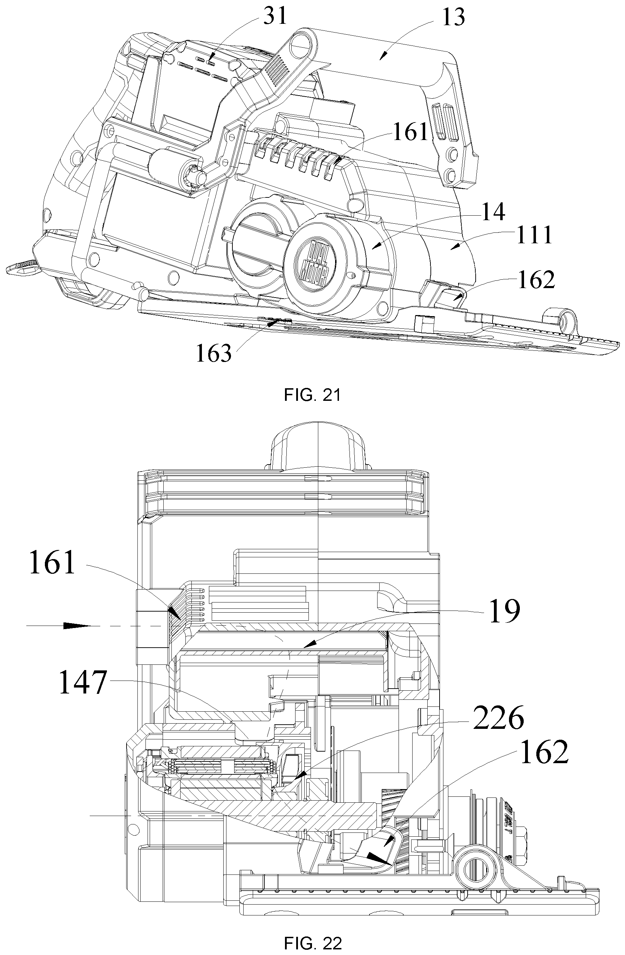

As shown in FIGS. 6 and 8, the electric motor assembly 20 further includes a first fan 216 supported by the first drive shaft 211 and driven by the first electric motor 21 to rotate and generate the cooling airflow. The electric motor assembly 20 further includes a second fan 226 supported by the second drive shaft 221 and driven by the second electric motor 22 to rotate and generate the cooling airflow. As shown in FIGS. 21 and 22, an airflow port is formed on the body housing 11. When any one of the first fan 216 and the second fan 226 rotates, a heat dissipation air path can be generated, and the cooling airflow flows through at least the control circuit board 18 and the electric motor assembly 20. The brushless motor has higher output power than the brushed motor. However, at the same time, the heat generated by the brushless motor increases, and the heat generated by the control circuit board 18 for controlling the power supply of the electric motors also increases. Therefore, sufficient heat dissipation for the control circuit board 18 is required. In some examples, when the first electric motor and the second electric motor are arranged coaxially, the first fan may be supported by at least one of the first drive shaft, the second drive shaft, or the output shaft. When any one of the first electric motor and the second electric motor rotates, the first fan rotates to generate a heat dissipation air path.

The airflow port includes a first air inlet 161 and a first air outlet 162. The cooling airflow enters the body housing 11 from the first air inlet 161 and flows out of the body housing 11 from the first air outlet 162. The control circuit board 18 is disposed in the first housing 111. The first air inlet 161 allows the cooling airflow to enter the accommodation housing 14 from the first housing 111. When any electric motor in the electric motor assembly 20 is started, the corresponding fan rotates synchronously to generate the cooling airflow. In this manner, the cooling airflow can flow through at least the control circuit board 18 and the electric motor assembly 20. That is to say, at least one of the control circuit board 18 and the electric motor assembly 20 needs to be disposed in the flow path of the cooling airflow. In this manner, when any electric motor in the electric motor assembly 20 is started and the fan rotates, external air can flow into the interior of the circular saw 100 through the air inlet to form the cooling airflow; and in the process of flowing to the fan, the cooling airflow flows through at least the circuit board and any electric motor in the electric motor assembly 20 and finally flows out through the air outlet.

FIGS. 20 to 22 show a first example of the heat dissipation solution. The control circuit board 18 is disposed above the electric motor assembly 20. The plane on which the control circuit board 18 extends is defined as a second plane S2. The plane where the bottom surface 51 of the base plate 50 is located is defined as a third plane S3. Along a direction perpendicular to the extension direction of the cutting member 61, that is, along the direction of the output axis, the second plane S2 is a straight line, and the third plane S3 is a straight line. The second plane S2 and the third plane S3 may be parallel or may intersect. The control circuit board 18 is accommodated in a circuit board housing 19. The circuit board housing 19 includes a heat dissipation plate 191. In this example, the circuit board housing 19 is made of the heat dissipation material, and the heat dissipation plate 191 is provided on the sidewall in contact with the control circuit board 18. The heat dissipation plate 191 includes heat dissipation fins 192 extending for a certain length. The control circuit board 18 is connected to the heat dissipation plate 191 so that the heat generated by the control circuit board 18 can be transferred and conducted to the heat dissipation plate 191 and the heat dissipation fins 192. In this example, the plane where the heat dissipation plate 191 is located is parallel to or coincides with the second plane S2. When the circuit board housing 19 is disposed in the first housing 111, to reduce the flow resistance of the cooling airflow and optimize the cooling effect, the extension direction of the space defined by adjacent sheet-like fins is along the flow direction of the cooling airflow.

The first fan 216 is disposed at an end of the first drive shaft 211 facing the output shaft 30. The first fan 216 is at least partially disposed in the accommodation housing 14. The second fan 226 is disposed at an end of the second drive shaft 221 facing the output shaft 30. The second fan 226 is at least partially disposed in the accommodation housing 14. The circuit board housing 19 and the control circuit board 18 are disposed outside the first fan 216 and the second fan 226 in the radial direction thereof. Optionally, the circuit board housing 19 and the control circuit board 18 are disposed above the first fan 216 and the second fan 226 in the radial direction thereof. The circuit board housing 19 and the control circuit board 18 are disposed in the first housing 111. The first air inlet 161 is disposed on the upper sidewall of the first housing 111. In this example, the first air inlet 161 is disposed on the right sidewall and the upper sidewall of the first housing 111. It may also be understood as that part of the first air inlet 161 is located on the upper sidewall and part of the first air inlet 161 is located on a sidewall of the first housing 111 facing away from the output shaft 30. In this manner, the heat dissipation air path can have a longer contact path with the circuit board housing 19. That is to say, the first air inlet 161 and the fans are basically located on the upper and lower sides and the left and right sides of the control circuit board 18. The first air inlet 161 is configured to be a matrix hole formed by multiple through holes, thereby preventing the operator from accidentally inserting the finger or the like into the airflow port.

Since the first fan 216 and the second fan 226 are basically located in the accommodation housing 14, the accommodation housing 14 is provided with a first connecting hole 146 and a second connecting hole 147 corresponding to the first fan 216 and the second fan 226, respectively. In some examples, the positions of the first connecting hole 146 and the second connecting hole 147 are specifically determined according to the positions of the first fan 216 and the second fan 226. Of course, the first connecting hole 146 and the second connecting hole 147 may not be provided. It is ensured that the cooling airflow entering from the first air inlet 161 and flowing through the control circuit board 18 is generated by effectively utilizing the negative pressure generated by the rotation of the fans.

The airflow port further includes the first air outlet 162 for allowing the cooling airflow to flow out of the body housing 11. The first air outlet 162 connects the accommodation housing 14 and the first housing 111 with the external environment. In this example, the air discharge direction of the first air outlet 162 is toward the front side of the circular saw 100. Optionally, the second electric motor 22 is in front of the first electric motor 21. In some examples, airflow guide ribs are provided in the first housing 111 and are configured to guide the cooling airflow so that the cooling airflow flows within the space defined by the airflow guide ribs.

During the cutting operation, when the base plate bottom surface 51 abuts against the workpiece to be cut, the control switch 81 is triggered normally, at least the first electric motor 21 is started, and the saw blade rotates, thereby cutting the workpiece to be cut. At the same time, at least the first fan 216 rotates to form negative pressure, thereby driving external air into the interior of the circular saw 100 to dissipate heat. After the fan rotates, the cooling airflow enters the first housing 111 from the first air inlet 161, and the cooling airflow flows through the circuit board housing 19 and the control circuit board 18, then flows through the first electric motor 21 and the second electric motor 22 from the first connecting hole 146, and flows out from the first air outlet 162.

In this example, a second air outlet 163 is further included. The second air outlet 163 and the first air outlet 162 have different air discharge directions. In this example, the second air outlet 163 is disposed near the second electric motor 22, and the second air outlet 163 discharges air in a direction away from the cutting member 61 so that the cooling airflow from the second air outlet 163 has a dust blowing function in addition to the heat dissipation function. The dust generated during the cutting process can be blown away. Optionally, the second air outlet 163 includes a third connecting hole 164 configured to connect the accommodation housing 14 and the first housing 111 with the outside and a fourth connecting hole 165 disposed on the sidewall of the base plate 50 and configured to have the dust blowing function. In this example, the heat dissipation air path includes a first heat dissipation air path F1 and a second heat dissipation air path F2. The first heat dissipation air path F1 is configured such that when at least one of the first electric motor 21 and the second electric motor 22 is operating, the cooling airflow enters from the first air inlet 161 and flows through the control circuit board 18 and the electric motor assembly 20, and then most of the cooling airflow flows out from the first air outlet 162. The second heat dissipation air path F2 is configured such that when at least one of the first electric motor 21 and the second electric motor 22 is operating, the cooling airflow enters from the first air inlet 161 and flows through the control circuit board 18 and the electric motor assembly 20, and then most of the cooling airflow flows out from the second air outlet 163.

In this example, one circuit board housing 19 is provided, at least one controller is provided, and the number of control circuit boards 18 corresponds to the number of controllers. Alternatively, multiple controllers may be disposed on one control circuit board 18. The circuit board housing 19 may accommodate at least one control circuit board 18. Multiple controllers are connected communicatively or electrically.

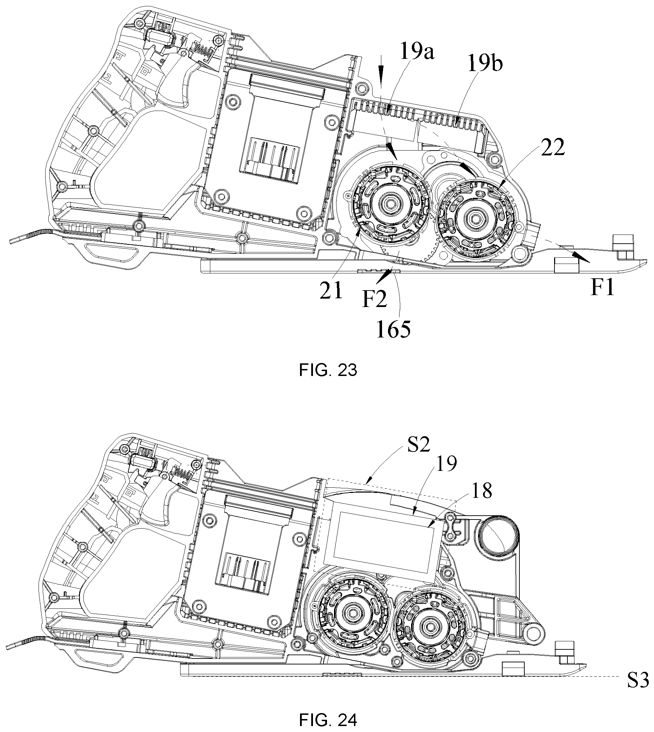

As shown in FIG. 23, as an optional example, two circuit board housings 19 are provided, and at least two control circuit boards 18 are provided. Multiple controllers are provided on multiple control circuit boards 18, thereby reducing the capacity requirements for the control circuit boards 18. The circuit board housings 19 are placed outside the first fan and the second fan in the radial direction thereof. Optionally, the circuit board housings 19 and the control circuit boards 18 are disposed above the first fan and the second fan 226 in the radial direction thereof. The circuit board housings 19 include a first circuit board housing 19a and a second circuit board housing 19b. The first circuit board housing 19a and the second circuit board housing 19b may have the same structures, thereby improving versatility. The first circuit board housing 19a and the second circuit board housing 19b may have different structures. The specific structures of the first circuit board housing 19a and the second circuit board housing 19b may be specifically set according to different specific positions of the first circuit board housing 19a and the second circuit board housing 19b.

As shown in FIG. 24, as an optional example, the second plane S2 of the circuit board 18 is spatially perpendicular to the third plane S3. Optionally, along a direction perpendicular to the extension direction of the cutting member 61, the projection of the second plane S2 is a plane, and the projection of the third plane S3 is a straight line. The extension direction of the second plane S2 is parallel to the extension direction of the cutting member 61. The control circuit board 18 conducts heat with the fixed guard. In this example, the circuit board housing 19 is in close contact with the fixed guard so that the heat of the circuit board housing 19 can be radiated and dissipated through the surface of the fixed guard, thereby increasing the heat dissipation path of the control circuit board 18.

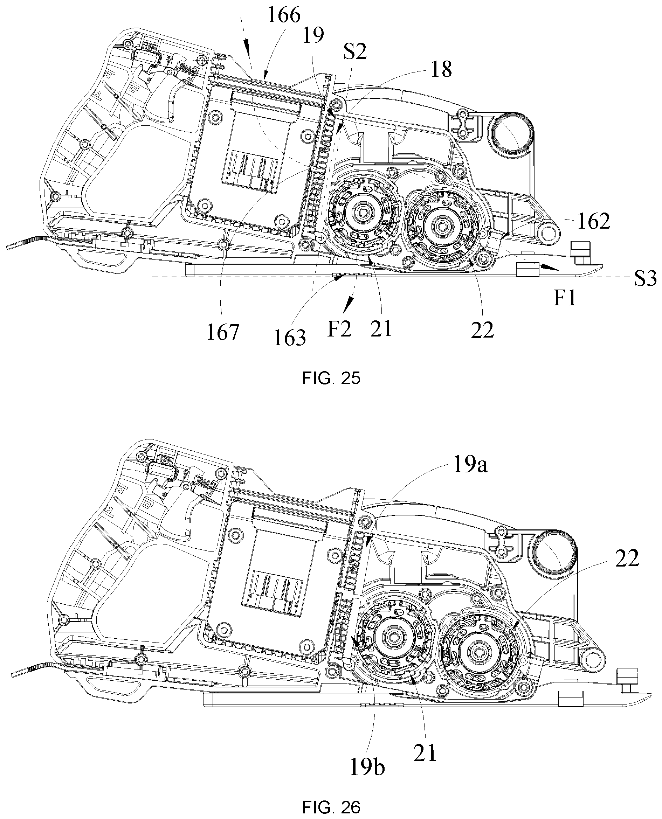

FIG. 25 shows a second example of the heat dissipation solution. The control circuit board 18 is disposed between the electric motor assembly 20 and the battery pack 31. Optionally, the control circuit board 18 is disposed in the first housing 111 and is located between an accommodation housing and the battery accommodation compartment 15. Along a direction perpendicular to the extension direction of the cutting member 61, the second plane S2 is a straight line, and the third plane S3 is a straight line. The second plane S2 and the third plane S3 intersect or are perpendicular.

The structure of the electric motor assembly is the same as that in the first example of the heat dissipation solution. The circuit board housing 19 and the control circuit board 18 are disposed outside the first fan 216 and the second fan 226 in the radial direction thereof. Optionally, the circuit board housing 19 and the control circuit board 18 are disposed on the rear side of the first fan 216 and the second fan 226 in the radial direction thereof and between the battery accommodation compartment 15 and the accommodation housing 14. A second air inlet 166 is disposed in the battery accommodation compartment 15. In this example, as shown in FIG. 7, the battery accommodation compartment 15 includes a first outlet 151 for the at least one battery pack 31 to enter and be pulled out of the battery accommodation compartment 15 and a second outlet 152 different from the first outlet 151. As shown in FIGS. 7 and 25, the second air inlet 166 includes the first outlet 151, the second outlet 152, and a fifth connecting hole 167 connecting the battery accommodation compartment 15 with the first housing 111. It is to be understood that the fifth connecting hole 167 is an airflow port for allowing the cooling airflow to flow out of the battery accommodation compartment 15. To ensure more sufficient heat dissipation of the cooling airflow, the fifth connecting hole 167 is disposed above the first fan 216 and the second fan 226, and the fifth connecting hole 167 is disposed at least below the first outlet 151.

As shown in FIG. 7, since the first fan 216 and the second fan 226 are basically located in the accommodation housing 14, the accommodation housing 14 is provided with the first connecting hole 146 and the second connecting hole 147 corresponding to the first fan 216 and the second fan 226, respectively. In some examples, the positions of the first connecting hole 146 and the second connecting hole 147 are specifically determined according to the positions of the first fan 216 and the second fan 226. Of course, the first connecting hole 146 and the second connecting hole 147 may not be provided. It is ensured that the cooling airflow entering from the second air inlet 166 and flowing through the battery pack 31 and the control circuit board 18 is generated by effectively utilizing the negative pressure generated by the rotation of the fans.

As shown in FIGS. 7 and 25, the airflow port further includes the first air outlet 162 for allowing the cooling airflow to flow out of the body housing 11. The first air outlet 162 connects the accommodation housing 14 and the first housing 111 with the external environment. In this example, the air discharge direction of the first air outlet 162 is toward the front side of the circular saw 100. Optionally, the second electric motor 22 is in front of the first electric motor 21. In some examples, airflow guide ribs are provided in the first housing 111 and are configured to guide the cooling airflow so that the cooling airflow flows within the space defined by the airflow guide ribs.

During the cutting operation, when the base plate bottom surface 51 abuts against the workpiece to be cut, the control switch 81 is triggered normally, at least the first electric motor 21 is started, and the saw blade rotates, thereby cutting the workpiece to be cut. At the same time, at least the first fan 216 rotates to form negative pressure, thereby driving external air into the interior of the circular saw 100 to dissipate heat. After the fan rotates, the cooling airflow enters the battery accommodation compartment 15 and the first housing 111 from the second air inlet, and the cooling airflow flows through the battery pack 31, the circuit board housing 19, and the control circuit board 18, then flows through the first electric motor 21 and the second electric motor 22 from the first connecting hole 146, and flows out from the first air outlet 162.

In this example, a second air outlet 163 is further included. The second air outlet 163 and the first air outlet 162 have different air discharge directions. In this example, the second air outlet 163 is disposed near the second electric motor 22, and the second air outlet 163 discharges air in a direction away from the saw blade so that the cooling airflow from the second air outlet 163 has a dust blowing function in addition to the heat dissipation function. The dust generated during the cutting process can be blown away. Optionally, the second air outlet 163 includes the third connecting hole 164 configured to connect the accommodation housing 14 and the first housing 111 with the outside and the fourth connecting hole 165 disposed on the sidewall of the base plate 50 and configured to have the dust blowing function. As shown in FIG. 25, the air path includes the first heat dissipation air path F1 and the second heat dissipation air path F2. The first heat dissipation air path F1 is configured such that when at least one of the first electric motor 21 and the second electric motor 22 is operating, the cooling airflow enters from the second air inlet 166 and flows through the battery pack 31, the control circuit board 18, and the electric motor assembly 20, and then most of the cooling airflow flows out from the first air outlet 162. The second heat dissipation air path F2 is configured such that when at least one of the first electric motor 21 and the second electric motor 22 is operating, the cooling airflow enters from the second air inlet 166 and flows through the battery pack 31, the control circuit board 18, and the electric motor assembly 20, and then most of the cooling airflow flows out from the second air outlet 163.

In some examples, the circular saw 100 is provided with both the first air inlet 161 and the second air inlet 166. In this manner, sufficient heat dissipation for the control circuit board 18 and the electric motor assembly 20 can be achieved.

In this example, one circuit board housing 19 is provided, at least one controller is provided, and the number of control circuit boards 18 corresponds to the number of controllers. Alternatively, multiple controllers may be disposed on one control circuit board 18. The circuit board housing 19 may accommodate at least one control circuit board 18. Multiple controllers are connected communicatively or electrically.

As shown in FIG. 26, as an optional example, two circuit board housings 19 are provided, and at least two control circuit boards 18 are provided. Multiple controllers are provided on multiple control circuit boards 18, thereby reducing the capacity requirements for the control circuit boards 18. The circuit board housings 19 and the control circuit boards 18 are disposed outside the first fan 216 and the second fan 226 in the radial direction thereof. Optionally, the circuit board housings 19 and the control circuit boards 18 are disposed on the rear side of the first fan 216 and the second fan 226 in the radial direction thereof and between the battery accommodation compartment 15 and the accommodation housing 14. The circuit board housings 19 include the first circuit board housing 19a and the second circuit board housing 19b. The first circuit board housing 19a and the second circuit board housing 19b may have the same structures, thereby improving versatility. The first circuit board housing 19a and the second circuit board housing 19b may have different structures. The specific structures of the first circuit board housing 19a and the second circuit board housing 19b may be specifically set according to different specific positions of the first circuit board housing 19a and the second circuit board housing 19b.

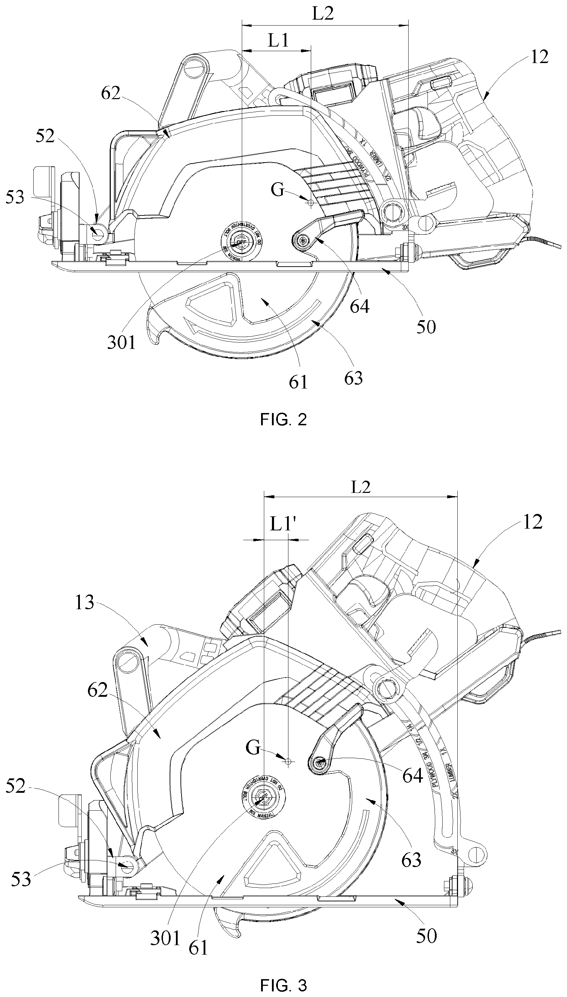

As shown in FIGS. 1 to 5, the cutting member 61 in this example is the blade of the circular saw 100 and has an outer diameter greater than 6 inches. In some examples, the blade of the circular saw 100 has an outer diameter ranging from about 6 inches to 12 inches. As shown in FIGS. 2 and 3, along a direction perpendicular to the cutting member 61, the projection of the center of gravity G of the circular saw 100 is located between the rear edge of the base plate 50 and the output axis 301. Optionally, FIG. 2 shows the circular saw 100 in the first state in which the fixed guard 62 is rotated about the pivot axis 501 to the minimum angle relative to the base plate 50. The ratio of the distance L1 between the projection of the center of gravity G of the circular saw 100 and the output axis 301 to the distance L2 between the rear edge of the base plate 50 and the output axis 301 is less than or equal to 1. In some examples, the ratio of the distance L1 between the projection of the center of gravity G of the circular saw 100 and the output axis 301 to the distance L2 between the rear edge of the base plate 50 and the output axis 301 is less than or equal to 0.9, 0.8, 0.7, 0.6, 0.5, 0.4, 0.3, or 0.2. The center of gravity G of the circular saw 100 is closer to the output axis 301 and is always located on the rear side of the output axis 301, that is, located on a side of the output axis 301 facing the grip 12. FIG. 3 shows the circular saw 100 in the second state. In this case, when the fixed guard 62 is rotated about the pivot axis 501 to the maximum angle relative to the base plate 50, the distance L1' between the center of gravity of the circular saw 100 and the output axis 301 is the smallest.

As shown in FIG. 4, the cutting member 61 extends in a cutting plane S4, and the grip 12 is basically symmetrically disposed about a first plane S1. Along a direction perpendicular to the base plate bottom surface 51, the projections of the first drive shaft 201 and the second drive shaft 202 have two endpoints that are farthest apart along the direction of the output axis 301. A width interval W is defined between two straight lines on the projection plane each of which passes through one endpoint and is perpendicular to the output axis 301. The projection of the center of gravity G of the circular saw is set within the width interval W. In an example, the first electric motor and the second electric motor are arranged radially, and the first drive shaft and the second drive shaft are parallel to each other. Along a direction perpendicular to the base plate bottom surface 51, the projections of the first drive shaft and the second drive shaft include a first endpoint closest to the cutting member and a second endpoint farthest from the cutting member, and the first endpoint and the second endpoint are the extreme endpoints in the left and right direction of the circular saw when the first drive shaft and the second drive shaft are regarded as a whole. The width interval W is defined between a straight line passing through the first endpoint and perpendicular to the output axis and a straight line passing through the second endpoint and perpendicular to the output axis, that is, the width interval W is the position interval of the whole machine within this width. The width interval in the front and rear direction of the circular saw is not limited to the front and rear range of the electric motor assembly but covers the front and rear range of the entire circular saw. In an example, the first electric motor and the second electric motor are arranged radially, and the first drive shaft and the second drive shaft intersect. Along a direction perpendicular to the base plate bottom surface 51, the projections of the first drive shaft and the second drive shaft include a first endpoint closest to the cutting member and a second endpoint farthest from the cutting member, and the first endpoint and the second endpoint are the extreme endpoints in the left and right direction of the circular saw when the first drive shaft and the second drive shaft are regarded as a whole. The width interval W is defined between a straight line passing through the first endpoint and perpendicular to the output axis and a straight line passing through the second endpoint and perpendicular to the output axis, that is, the width interval W is the position interval of the whole machine within this width. The width interval in the front and rear direction of the circular saw is not limited to the front and rear range of the electric motor assembly but covers the front and rear range of the entire circular saw.

In an example, when the first electric motor and the second electric motor are coaxially arranged, along a direction perpendicular to the base plate bottom surface 51, the projections of the first drive shaft and the second drive shaft include a first endpoint closest to the cutting member and a second endpoint farthest from the cutting member, and the first drive shaft and the second drive shaft are arranged left and right in the left and right direction of the circular saw. Therefore, the first endpoint is the leftmost end, and the second endpoint is the rightmost end. The width interval W is defined between a straight line passing through the first endpoint and perpendicular to the output axis and a straight line passing through the second endpoint and perpendicular to the output axis, that is, the width interval W is the position interval of the whole machine within this width. The width interval in the front and rear direction of the circular saw is not limited to the front and rear range of the electric motor assembly but covers the front and rear range of the entire circular saw. A bad operating feel of the circular saw 100 during operation does not exist. The center of gravity of the circular saw is set within the width range of the first electric motor and the second electric motor in the width direction during operation so that the force applied to the whole machine is more stable during operation.

In some examples, along a direction perpendicular to the base plate bottom surface 51, the projection of the center of gravity G of the circular saw 100 is located between the projection of the cutting plane S4 and the right edge of the projection of the base plate, that is, the projection of the center of gravity G of the circular saw 100 is located within the projection of the base plate and is not located on the left side of the projection of the cutting plane S4. Moreover, the center of gravity G of the circular saw 100 is located near the first plane S1. Optionally, the distance between the projection of the center of gravity G of the circular saw 100 and the first plane S1 is less than the distance between the center of gravity G of the circular saw 100 and the cutting plane S4. Optionally, the ratio of the distance W1 between the projection of the center of gravity G of the circular saw 100 and the first plane S1 to the distance W2 between the cutting plane S4 and the first plane S1 is less than or equal to 1/3. In some examples, the center of gravity G of the circular saw 100 is disposed on the first plane S1 as much as possible, thereby not causing a bad operating feel of the circular saw 100 during operation. Optionally, the center of gravity G of the circular saw 100 may be located on the left side or the right side of the first plane S1.

The base plate 50 is formed with a hole extending along the first direction K1 so that the cutting member 61 can pass through the base plate 50. As shown in FIG. 5, along the first direction K1, the ratio of the outer edge dimension L3 of the accommodation housing 14 to the outer edge dimension La of the body housing 11 is greater than or equal to 0.2 and less than or equal to 0.4. It is to be understood that, in some examples, the outer edge dimension L3 of the accommodation housing 14 may be the same as the outer dimension Lc of the accommodation housing 14 along the direction of the perpendicular of the first drive shaft 211 and the second drive shaft 221.

As shown in FIGS. 4 and 8, along the direction of the output axis 301, the ratio of the outer edge dimension H1 of the accommodation housing 14 to the outer edge dimension Ha of the body housing 11 is greater than or equal to 0.15 and less than or equal to 0.4.

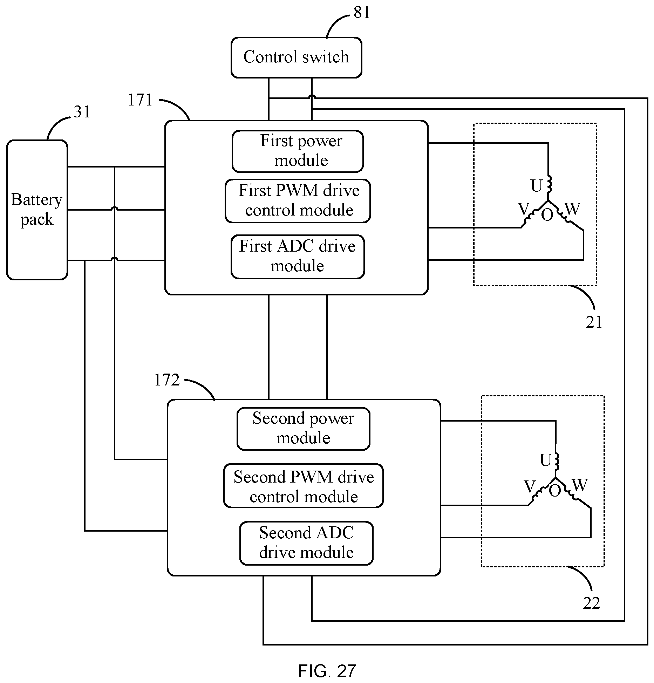

As shown in FIG. 27, the controller 17 is configured to control the electric motor assembly 20. The controller 17 is configured to determine the start-up state of the first electric motor 21 and the second electric motor 22 according to a preset condition.

As an example, the controller includes a first controller 171 and a second controller 172, that is, dual-MCU control. In this example, the first controller 171 includes a first power module, a first pulse-width modulation (PWM) drive control module, and a first Analogue Digital Converter Unit (ADC) drive module. The second controller 172 includes a second power module, a second PWM drive control module, and a second ADC drive module. The battery pack 31 supplies power to the first controller 171 and the second controller 172 separately. The first controller 171 is connected to the first electric motor 21, and the second controller 172 is connected to the second electric motor 22. It is to be understood that the first controller 171 and the second controller 172 are connected through serial communication and have relatively independent control modules.

The first controller 171 collects electrical characteristic parameters such as phase current and bus voltage through the first ADC drive module, and the detected parameters are sent to the first PWM drive control module of the first controller 171 in a signal mode. The first PWM drive control module controls the start-up and operation of the first electric motor 21 through a PWM signal. The second controller 172 collects electrical characteristic parameters such as phase current and bus voltage through the second ADC drive module, and the detected parameters are sent to the first PWM drive control module of the second controller 172 in a signal mode. The second PWM drive control module controls the start-up and operation of the second electric motor 22 through a PWM signal. It is equivalent to providing two independent control circuits to control the first electric motor 21 and the second electric motor 22. The electrical characteristic parameters may further include bus current, freewheeling time, demagnetization time, and other parameters.

In this example, the first electric motor 21 and the second electric motor 22 are each a three-phase brushless motor. The three-phase brushless motor includes electronically commutated three-phase stator windings U, V, and W. In some examples, the three-phase stator windings U, V, and W adopt a star connection. In some other examples, the three-phase stator windings U, V, and W adopt a delta connection. However, it is to be understood that other types of brushless motors are also within the scope of the present disclosure. The brushless motor may include less than or more than three phases. A driver circuit is electrically connected to the stator windings U, V, and W of the electric motor and configured to transmit the current from the battery pack 31 to the stator windings U, V, and W to drive the electric motor to rotate.

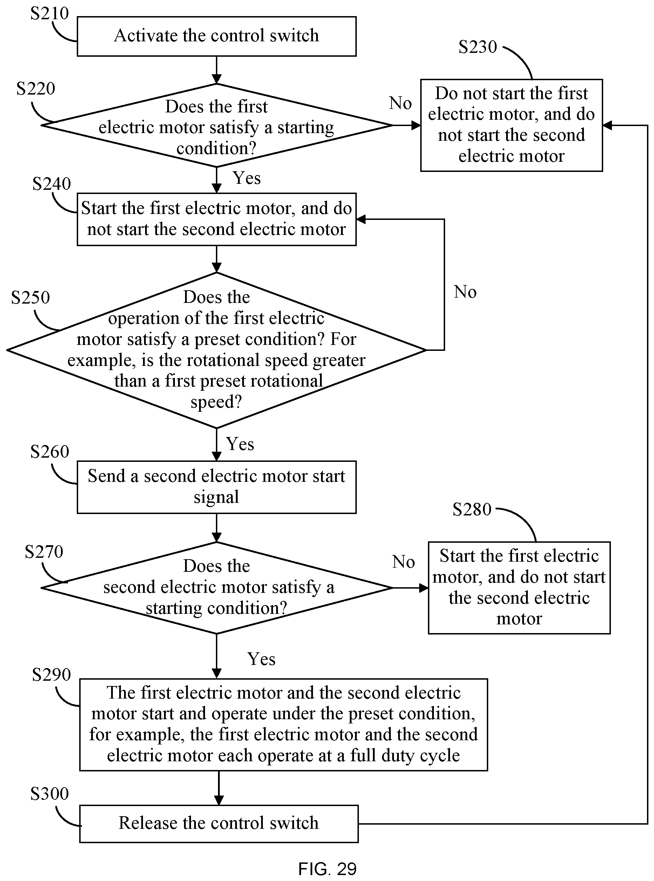

As shown in FIG. 29, the specific control process is described below.

In S210, the control switch 81 is activated.

During operation, the first controller 171 detects that the control switch 81 is activated, that is, a start signal is received.

In S220, whether the first electric motor satisfies a starting condition is determined. If so, S240 is performed; if not, S230 is performed.

In S230, the first electric motor is not started, and the second electric motor is not started.

In S240, the first electric motor is started, and the second electric motor is not started.

The first controller 171 controls the first electric motor 21 to start with a first preset step size.

In S250, whether the operation of the first electric motor satisfies a preset condition is determined, for example, whether the rotational speed is greater than a first preset rotational speed is determined. If so, S260 is performed. If not, S240 is performed.

In S260, a second electric motor start signal is sent.

In S270, whether the second electric motor satisfies a starting condition is determined. If so, S290 is performed; if not, S280 is performed.

In S280, the first electric motor is started, and the second electric motor is not started.

In S290, the first electric motor and the second electric motor start and operate under the preset condition, for example, the first electric motor and the second electric motor each operate at a full duty cycle.

The first controller 171 sends a signal to the second controller that controls the second electric motor 22 so that the second controller starts the second electric motor 22. The second controller 172 controls the second electric motor 22 to start with a second preset step size. The second preset step size is greater than or equal to the first preset step size, thereby shortening the start-up duration of the two electric motors. In this example, after the first electric motor 21 starts and stabilizes, the first electric motor 21 operates at a full duty cycle. After the second electric motor 22 starts and stabilizes, the first electric motor 21 and the second electric motor 22 each operate at a full duty cycle. It is to be understood that the change in the rotational speed of the electric motor can be obtained through modulation and calculation of the electrical characteristic parameters of the electric motor such as phase current. The full duty cycle does not necessarily mean a duty cycle of 100%. The full duty cycle refers to the maximum duty cycle in the product performance specifications and may be a duty cycle of 90%, a duty cycle of 80%, or the like.

In S300, the control switch is released. S230 in which the first electric motor is not started and the second electric motor is not started is performed.

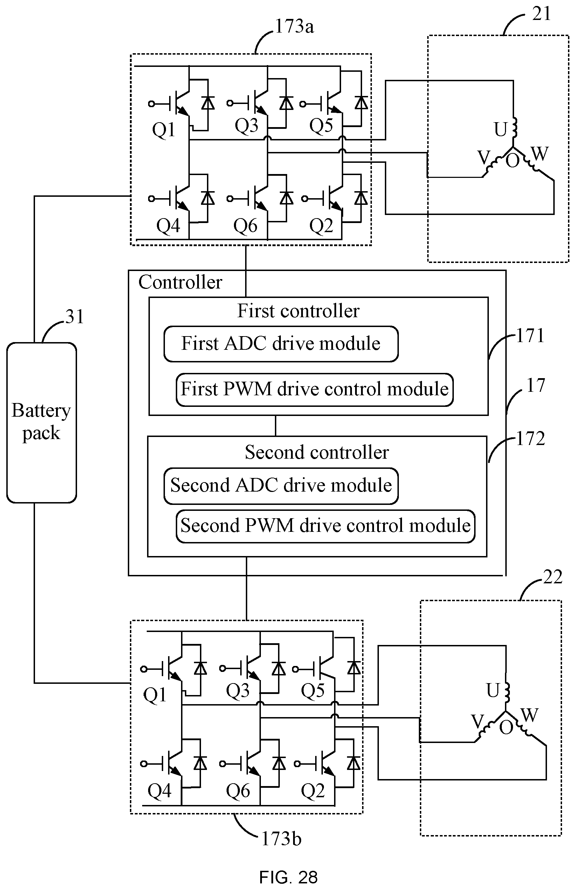

As an example, as shown in FIG. 28, the controller 17 includes the first controller 171 and the second controller 172. The first controller 171 and the second controller 172 are disposed on the same control circuit board 18. Alternatively, the first controller 171 and the second controller 172 are placed on different control circuit boards, respectively, and the two control circuit boards are communicatively connected. The first controller 171 controls the first electric motor 21, and the second controller 172 controls the second electric motor 22. In this example, serial communication between the first controller 171 and the second controller 172 exists. A driver including a first driver circuit 173a and a second driver circuit 173b is further provided. The first driver circuit 173a is connected to the first controller 171 and the battery pack 31. The second driver circuit 173b is connected to the second controller 172 and the battery pack 31. That is to say, the battery pack 31 is connected to the driver circuits and supplies power to the controllers through the driver circuits.

In this example, the first electric motor 21 and the second electric motor 22 are each a three-phase brushless motor. The three-phase brushless motor includes electronically commutated three-phase stator windings U, V, and W. In some examples, the three-phase stator windings U, V, and W adopt a star connection. In some other examples, the three-phase stator windings U, V, and W adopt a delta connection. However, it is to be understood that other types of brushless motors are also within the scope of the present disclosure. The brushless motor may include less than or more than three phases.

The first driver circuit 173a is used as an example. The driver circuit 173a is electrically connected to the stator windings U, V, and W of the electric motor and configured to transmit the current from the battery pack 31 to the stator windings U, V, and W to drive the electric motor to rotate. The first driver circuit 173a includes multiple switching elements Q1, Q2, Q3, Q4, Q5, and Q6. A gate terminal of each switching element is electrically connected to the first controller 171 and configured to receive a control signal from the first controller 171. A drain or source of each switching element is connected to the stator windings U, V, and W of the first electric motor 21. The switching elements Q1 to Q6 receive control signals from the first controller 171 to change their respective on states, thereby changing the current loaded by the battery pack 31 to the stator windings U, V, and W of the first electric motor 21. In an example, the first driver circuit 173a may be a three-phase bridge driver circuit including six controllable semiconductor power devices (such as field-effect transistors (FETs), bipolar junction transistors (BJTs), or insulated-gate bipolar transistors (IGBTs)). In some examples, the driver circuit 173a may include more than six controllable semiconductor power devices. It is to be understood that the preceding switching elements may be any other types of solid-state switches, such as the IGBTs or the BJTs.

Specifically, the controller controls the on or off states of the switching elements in the driver circuit through the control chip. In some examples, the controller controls the ratio of the on time of a drive switch to the off time of the drive switch based on a PWM signal. In this example, the first controller 171 includes the first PWM drive control module. The second controller 172 includes the second PWM drive control module.

The first controller 171 further includes the first ADC drive module through which electrical characteristic parameters such as phase current and bus voltage are collected. The second controller 172 further includes the second ADC drive module. Electrical characteristic parameters such as phase current and bus voltage are collected through the first ADC drive module.

When the power circuit between the battery pack 31 and the driver circuit is turned on, the driver circuit transmits the current from the battery pack 31 to the controller. That is, the first driver circuit 173a transmits the current to the first controller 171, and the second driver circuit 173b transmits the current to the second controller 172. The first controller 171 detects preset parameters through the first ADC drive module and sends the detected parameters to the first PWM drive control module of the first controller 171 in a signal mode. The first PWM drive control module sends a PWM control signal to the first driver circuit 173a, and the ratio between the on time of the drive switch and the off time of the drive switch is controlled based on the PWM control signal. The second controller 172 detects preset parameters through the second ADC drive module and sends the detected parameters to the second PWM drive control module of the second controller 172 in a signal mode. The first PWM drive control module sends a PWM control signal to the second driver circuit 173b, and the ratio between the on time of the drive switch and the off time of the drive switch is controlled based on the PWM control signal. The preset parameters include phase current, bus voltage, bus current, freewheeling time, demagnetization time, and other parameters. The preset parameters detected by the first controller 171 and the preset parameters detected by the second controller 172 may be the same or different.

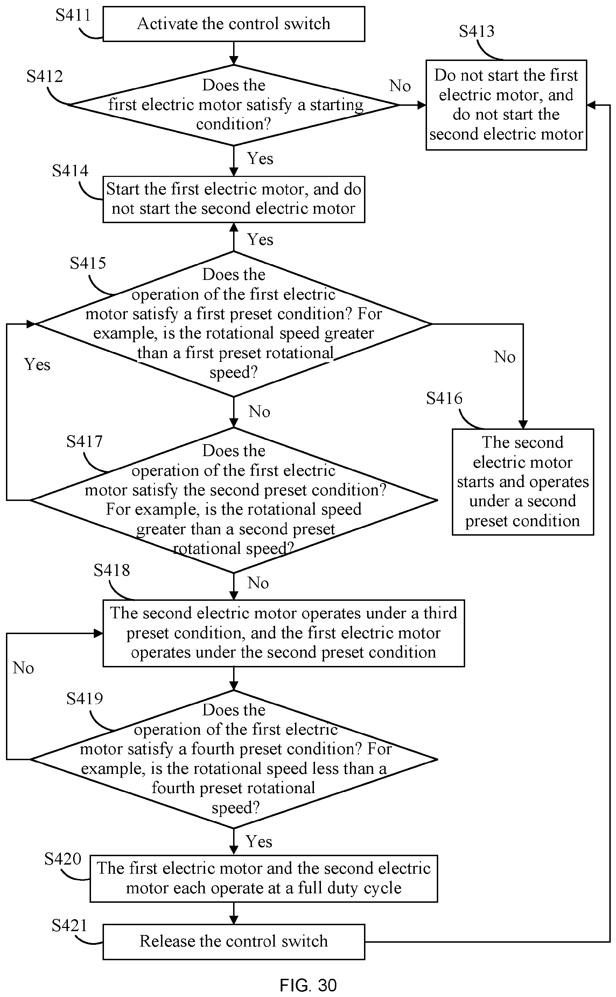

As shown in FIG. 30, the specific control process is described below.

In S411, the control switch 81 is activated.

During operation, the first controller 171 detects that the control switch 81 is activated, that is, a start signal is received.

In S412, whether the first electric motor satisfies a starting condition is determined. If so, S141 is performed. If not, S413 is performed.

In S413, the first electric motor is not started, and the second electric motor is not started.

In S414, the first electric motor is started, and the second electric motor is not started.

The first controller 171 controls the first electric motor 21 to start.

In S415, whether the operation of the first electric motor satisfies a first preset condition is determined, for example, whether the rotational speed is greater than a first preset rotational speed is determined. If so, S414 is performed; if not, S416 and S417 are performed.

The rotational speed is used as an example. The first controller 171 first determines the relationship between the rotational speed of the first electric motor 21 and a first rotational speed threshold. If the rotational speed of the first electric motor 21 is greater than the first rotational speed threshold, the first electric motor 21 maintains the current operation state to drive the output shaft 30, and the second electric motor 22 does not need to be started. Optionally, the first rotational speed threshold is 5000 RPM.

In S416, the second electric motor starts and operates under a second preset condition.

Optionally, the second electric motor 22 enters a hot standby state, that is, the second electric motor starts and maintains a ready state for operation under the second preset condition. Optionally, the rotational speed is used as an example. A second preset rotational speed is less than the first rotational speed threshold, and the second preset rotational speed is the rotational speed at which the second electric motor achieves the optimal output efficiency. Optionally, the second preset rotational speed is 4500 RPM.

In S417, whether the operation of the first electric motor satisfies the second preset condition is determined, for example, whether the rotational speed is greater than a second preset rotational speed is determined. If so, S415 is performed; if not, S418 is performed.

In S418, the second electric motor operates under a third preset condition, and the first electric motor operates under the second preset condition.

When the rotational speed of the first electric motor 21 is less than the second preset rotational speed, the second electric motor 22 starts and operates under the third preset condition. At the same time, the first electric motor 21 is controlled to output at the second preset rotational speed. Optionally, the third preset condition is to control the second electric motor 22 to operate at the maximum duty cycle after the second electric motor 22 is started. The first electric motor operates at a constant speed, which is the second preset rotational speed. That is to say, in this case, both the first electric motor 21 and the second electric motor 22 start to drive the output shaft. The dual-motor mode starts.

In S419, whether the operation of the first electric motor satisfies a fourth preset condition is determined, for example, whether the rotational speed is less than a fourth preset rotational speed is determined. If so, S420 is performed; if not, S418 is performed.

The rotational speed of the first electric motor is continuously detected during the operation process. When the operation of the first electric motor 21 satisfies the fourth preset condition, optionally, when the rotational speed is not less than the fourth preset rotational speed, it is determined that the output torque of the electric motor assembly in this case can satisfy the currently required torque of the output shaft. Optionally, the fourth preset rotational speed is less than the second preset rotational speed. For example, the fourth preset rotational speed is 3500 RPM.

In S420, the first electric motor and the second electric motor each operate at a full duty cycle.

When the rotational speed is less than the fourth preset rotational speed, it is determined that the output torque of the electric motor assembly in this case needs to be increased, and then the first electric motor 21 and the second electric motor 22 are controlled to each operate at a full duty cycle. The maximum duty cycle of the first electric motor 21 and the maximum duty cycle of the second electric motor 22 may be the same or different.

To avoid frequent switching between the single-motor mode and the dual-motor mode, in actual applications, in the dual-motor mode, only if the rotational speed is greater than 5000 RPM and the current is less than a current threshold for a preset time, single-motor operation starts.

In S421, the control switch is released. S413 in which the first electric motor is not started and the second electric motor is not started is performed.

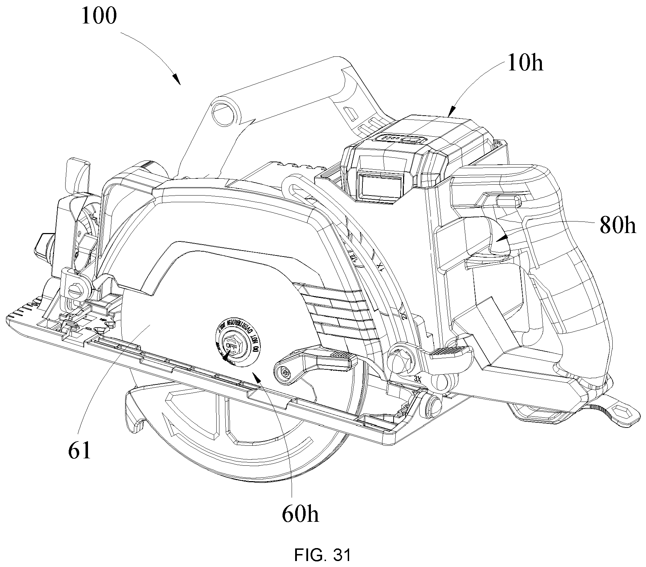

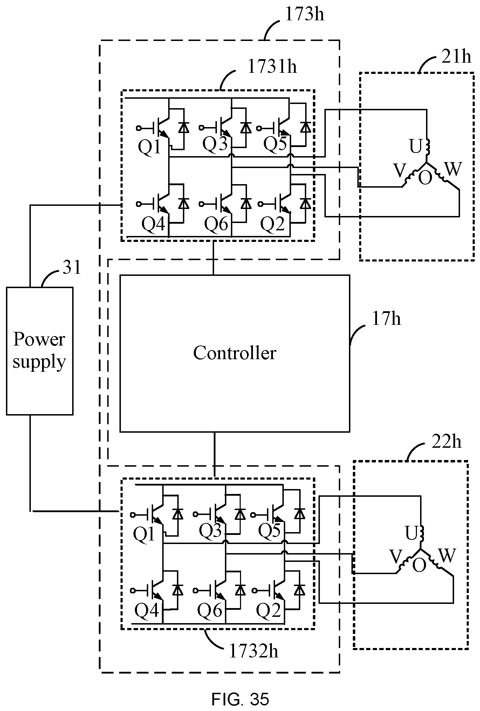

FIGS. 31 to 38 show a power tool according to another example. The power tool is similar to the power tool described above with reference to FIGS. 1 to 30. Therefore, features and elements that correspond to features and elements of the power tool are given similar reference numerals followed by the letter "h". In addition, the following description mainly focuses on the difference between the control elements and the difference between the control methods of an electric motor assembly 20h in the power tool.

Referring to FIG. 31, the power tool includes a housing 10h, a functional piece 60h, and an operating member 80h. The housing 10h constitutes a body of the power tool, connects or supports the preceding components, and forms an accommodation space capable of accommodating or partially accommodating other components. The functional piece 60h is a component in the power tool that actually performs operations such as cutting, tightening, grinding, and impacting. An electric circular saw 100 is used as an example, the functional piece 60h of the electric circular saw 100 is the cutting member 61, and the cutting member 61 is a circular saw blade. The functional piece 60h of another power tool may be a chain, a drill bit, or the like. The operating member 80h is operated by the user to switch the on/off state of the power tool and may output a corresponding start signal or a corresponding shutdown signal. For example, the operating member 80h may be used by the user to start or shut down an electric motor assembly 40 described later and output a start signal indicating that the electric motor assembly 40 is expected to start or a shutdown signal indicating that the electric motor assembly 40 is expected to shut down to a controller 60 described later. In some cases, the operating member 80h may have more diverse functions. For example, the operating member 80h may be operated by the user to adjust the rotational speed of the electric motor or implement other functions. In some examples, the operating member 80h may be the control switch 81 of a mechanical switch such as a trigger. It is to be understood that the start-up and shutdown of the power tool may be achieved in other methods besides providing the operating member 80h on the tool body. For example, in some examples, the user may transmit signals to the power tool through an external device such as a mobile phone or a tablet computer to start or shut down the power tool.

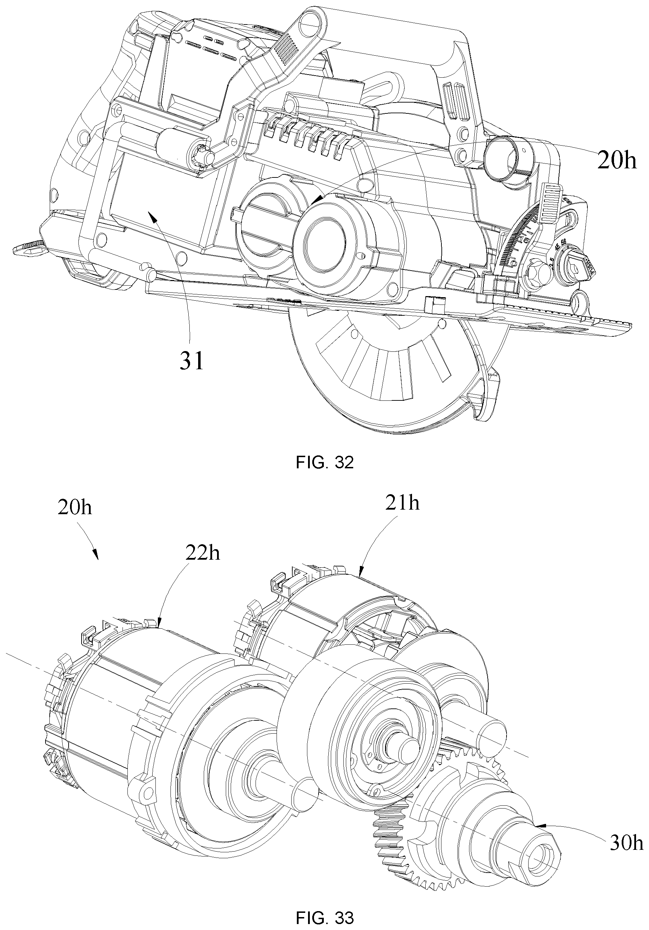

Referring to FIGS. 32 to 35, in addition to the housing 10h, the functional piece 60h, and the operating member 80h, the power tool further includes an electric motor assembly 20h, the power supply 31, and a controller 17h. The electric motor assembly 20h is a prime mover of the power tool. When the motor shaft of the electric motor assembly 20h rotates, the functional piece 60h assembled on an output shaft 30h is driven directly or indirectly through a transmission assembly to operate. In the present application, the power tool is provided with at least two electric motors, that is, the electric motor assembly 20h includes at least a first electric motor 21h and a second electric motor 22h. The first electric motor 21h and the second electric motor 22h drive the same output shaft 30h. A transmission relationship exists between the first electric motor 21h and the second electric motor 22h. In other words, when the first electric motor 21h rotates, the first electric motor 21h can drive the second electric motor 22h to rotate.

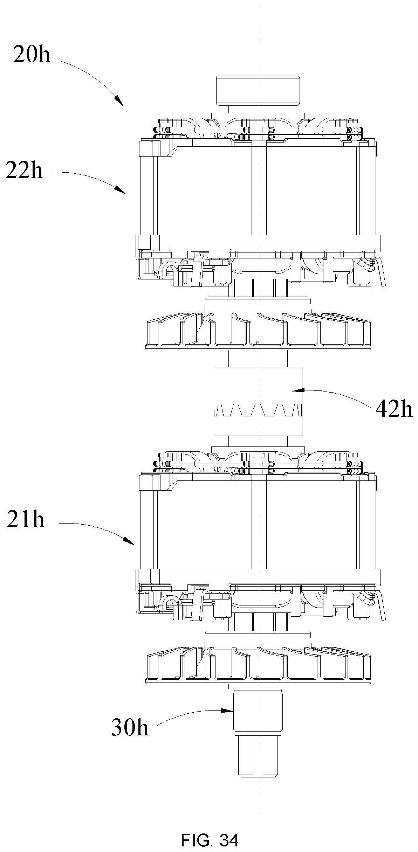

FIG. 33 shows an optional structure of the electric motor assembly 20h, the first electric motor 21h and the second electric motor 22h are each an inrunner, the motor shaft of the first electric motor 21h and the motor shaft of the second electric motor 22h are both parallel to the output shaft 30h, and a gearset may be used for achieving power transmission between the motor shafts and the output shaft 30h. FIG. 34 shows another optional structure of the electric motor assembly 20h, the first electric motor 21h and the second electric motor 22h are each an inrunner, the motor shaft of the first electric motor 21h, the motor shaft of the second electric motor 22h, and the output shaft 30h are collinear, a clutch assembly 42h may be provided between the first electric motor 21h and the second electric motor 22h, the clutch assembly 42h has a first state in which the clutch assembly 42h allows power transmission between the first electric motor 21h and the second electric motor 22h and a second state in which the clutch assembly 42h prevents power transmission between the first electric motor 21h and the second electric motor 22h, and the clutch assembly 42h may be mechanical or electronic. The following mainly explains the technical solution based on the case where the electric motor assembly 20h includes the first electric motor 21h and the second electric motor 22h. At least one of the first electric motor 21h and the second electric motor 22h can drive the functional piece 60h to perform operations such as cutting, tightening, grinding, and impacting. The following mainly describes the scenario where both the first electric motor 21h and the second electric motor 22h are working. It is to be understood that the structures of the first electric motors 21, 21e, 21f, and 21g and the first electric motors 22, 22e, 22f, and 22g as described in FIGS. 12 to 19 are structures applicable to this example.

The power supply 31 provides electrical energy for at least the electric motor assembly 20h and may also supply power to other related components and assemblies such as the controller 17h. In some examples, the power supply 31 is a battery pack detachably connected to the power tool. In some other examples, the power supply 31 may be implemented using mains power or the alternating current power supply in conjunction with a power adapter and related circuits such as the transformer circuit, the rectifier circuit, and the voltage regulator circuit.

The controller 17h may be an MCU, an Advanced reduced instruction set computer (RISC) Machine (ARM), a digital signal processor (DSP), or the like. By running the relevant programs, the controller 17h may control the electric motor assembly 20h to operate in an intended manner. Referring to FIG. 5, the power tool further includes a driving device 173h connected between the controller 17h and the electric motor assembly 20h. After the controller 17h runs the control programs for the electric motors, the controller 17h may output control signals such as PWM signals to the driving device 173h. The driving device 173h may convert the preceding control signals into drive signals that ultimately drive the electric motors to operate and transmit the electrical energy provided by the power supply 31 to the electric motor assembly 20h through the direct current buses.

In some examples, the driving device 173h includes a first driver circuit 1731h connected between the controller 17h and the first electric motor 21h and a second driver circuit 1732h connected between the controller 17h and the second electric motor 22h. The first driver circuit 1731h and the second driver circuit 1732h may each include a three-phase bridge circuit formed by three switching transistors as the upper half bridge and three switching transistors as the lower half bridge. The upper half bridge switching transistors Q1, Q3, and Q5 in the first driver circuit 1731h are connected between the power supply terminal of the power supply 31 and the phase coils of the first electric motor 21h, respectively, and the lower half bridge switching transistors Q2, Q4, and Q6 are connected between the phase coils of the first electric motor 21h and the ground wire, respectively. The same goes for the second driver circuit 1732h and the second electric motor 22h. The switching transistors may be FETs or IGBTs. In some other examples, the driving device 173h may be an integrated driver chip or the like.

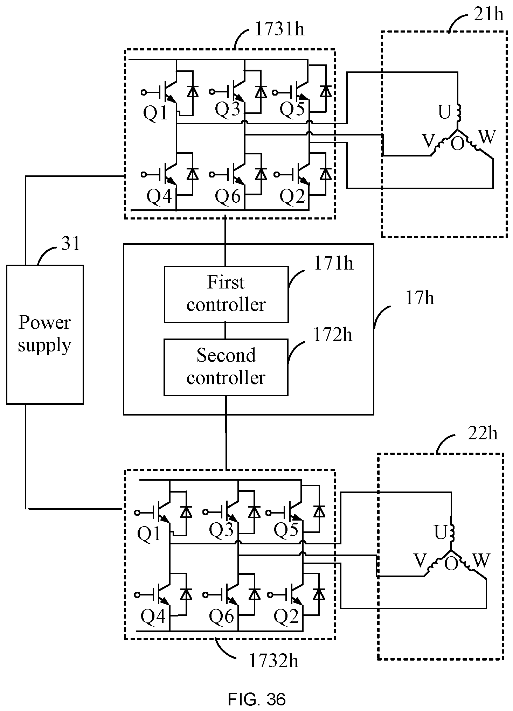

In addition, as shown in FIG. 36, in some examples, hardware includes more than one controller 17h. For example, the power tool may be provided with a first controller 171h and a second controller 172h which exchange data through an electrical connection or in other manners. The first controller 171h is responsible for the operation control of the first electric motor 21h and transmits a first control signal to the first driver circuit 1731h. The first driver circuit 1731h is connected between the first controller 171h and the first electric motor 21h. The second controller 172h is responsible for the operation control of the second electric motor 22h and transmits a second control signal to the second driver circuit 1732h. The second driver circuit 1732h is connected between the second controller 172h and the second electric motor 22h. In some other examples, the first controller 171h and the second controller 172h may be two controllers at the software level. For example, the first controller 171h and the second controller 172h are two virtual central processing units (vCPUs) carried by the same hardware or a first control unit and a second control unit designed in the program including parallel processes or threads.

Based on the above, the controller 17h needs to preliminarily determine the initial positions of the rotors of the electric motors when starting the electric motors, and the power tool is provided with the first electric motor 21h and the second electric motor 22h; moreover, in the case where a transmission relationship exists between the first electric motor 21h and the second electric motor 22h, the rotation of any electric motor drives the rotation of the other electric motor. Therefore, a problem in which the positions of the rotors of the two electric motors affect each other when the electric motors are controlled to start exists. To address the preceding problem, in an example, the controller 17h may control the first electric motor 21h and the second electric motor 22h to start simultaneously. In response to the start signal from the operating member 80h or other signals for starting the power tool, the controller 17h simultaneously outputs corresponding control signals to the first driver circuit 1731h corresponding to the first electric motor 21h and the second driver circuit 1732h corresponding to the second electric motor 22h. In some examples, the first controller 171h outputs the first control signal to the first driver circuit 1731h to drive the first electric motor 21h, the second controller outputs the second control signal to the second driver circuit 1732h to drive the second electric motor 22h, and the first controller 171h and the second controller 172h synchronize signals before outputting control signals to ensure that the first electric motor 21h and the second electric motor 22h are started simultaneously. In another example, the electric motors are started through the controller 17h in different periods, thereby eliminating the need for signal synchronization; and the electric motors are started in the case where the peak currents do not occur at the same time, thereby ensuring safety.

In response to the start signal from the operating member 80h or other signals for starting the power tool, the controller 17h first controls the first electric motor 21h to start and based on the back electromotive force generated by the second electric motor 22h being driven by the first electric motor 21h after the first electric motor 21h is started, controls the second electric motor 22h to start. Specifically, after started by the controller 17h, the first electric motor 21h rotates, the rotation of the rotor of the first electric motor 21h drives the rotor of the second electric motor 22h, which has not yet been started, to rotate, the passive rotation of the rotor of the second electric motor 22h leads to electromagnetic induction of the stator windings of the second electric motor 22h, the second electric motor 22h generates the back electromotive force, and based on the back electromotive force of the second electric motor 22h, the controller 17h controls the second electric motor 22h to start after the first electric motor 21h is started. It is to be noted that in this example, the second electric motor 22h may be a sensorless brushless motor and does not have a position sensor such as a Hall sensor that can directly detect the rotor position. In this case, the controller 17h controls the start of the second electric motor 22h by detecting the back electromotive force of the second electric motor 22h. Of course, in the case where the second electric motor 22h is provided with a position sensor, the controller 17h may also use the preceding manner as an alternative solution for starting the second electric motor 22h.

It is to be understood that the first electric motor 21h may be a sensorless brushless motor or a sensored brushless motor. Correspondingly, there are many optional implementation methods for the controller 17h to control the first electric motor 21h to start first, which is not specifically limited in the present application. In some examples, the controller 17h may estimate the initial position of the rotor of the first electric motor 21h in a pulse injection method and control the first electric motor 21h to start. The controller 17h may inject pulses into six electrical angle sectors of the first electric motor 21h, respectively, that is, transmit corresponding pulse signals to the six switching transistors in the first driver circuit 1731h; and then the controller 17h may detect the current response of the first electric motor 21h to the pulse injection, determine the initial position of the rotor of the first electric motor 21h based on the current response, and control the start of the first electric motor 21h based on the initial position of the rotor. In some other examples, the controller 17h may control the start of the first electric motor 21h in a high-frequency injection method. In some other examples, the controller 17h may control the start of the first electric motor 21h by capturing the jumping edge for Hall signals.

In some examples, after controlling the first electric motor 21h to start, the controller 17h may perform detection after a first preset duration and then based on the back electromotive force of the second electric motor 22h, control the second electric motor 22h to start. Specifically, after the first electric motor 21h is started for the first preset duration, the first electric motor 21h continues rotating and has a certain rotational speed so that the back electromotive force of the second electric motor 22h driven by the first electric motor 21h can be detected more accurately and can be used for startup control. In this case, the controller 17h can estimate the position of the rotor of the second electric motor 22h based on the back electromotive force of the second electric motor 22h and control the second electric motor 22h to start. If the first preset duration is too short, the first electric motor 21h and the second electric motor 22h interfere with each other, and both the start of the first electric motor 21h and the start of the second electric motor 22h are affected. If the first preset duration is too long, the first electric motor 21h has a great influence on the rotation of the second electric motor 22h driven by the first electric motor 21h, and the startup control of the second electric motor 22h is difficult. Therefore, the first preset duration with an appropriate value needs to be set. In some examples, the first preset duration is greater than or equal to 0.1s and less than or equal to 2s.

In some other examples, after controlling the first electric motor 21h to start, the controller 17h may detect the rotational speed of the first electric motor 21h, perform detection after the rotational speed of the first electric motor 21h reaches the first rotational speed threshold, and based on the back electromotive force of the second electric motor 22h, control the second electric motor 22h to start. Specifically, after the first electric motor 21h is started and reaches the first rotational speed threshold, the back electromotive force of the second electric motor 22h driven by the first electric motor 21h can be detected more accurately and can be used for startup control. In this case, the controller 17h can estimate the position of the rotor of the second electric motor 22h based on the back electromotive force of the second electric motor 22h and control the second electric motor 22h to start. In some examples, the first rotational speed threshold is greater than or equal to 10 RPM or greater than or equal to 10% of the no-load rotational speed of the first electric motor 21h.

There are many optional implementation methods for the controller 17h to control the start of the second electric motor 22h based on the back electromotive force of the second electric motor 22h, which is not specifically limited in the present application. **In** some examples, the controller 17h may detect the extreme value of the back electromotive force of the second electric motor 22h, that is, detect the maximum value or minimum value of the back electromotive force of the second electric motor 22h; and the controller 17h may deduce the rotor position based on the extreme value of the back electromotive force of the second electric motor 22h and then perform startup control. **In** some other examples, the controller 17h may detect the relative relationship between the back electromotive force and the zero-point potential of the second electric motor 22h, deduce the rotor position from the position of the zero-crossing of the back electromotive force of the second electric motor 22h, and then perform startup control.

Based on the above, the power tool is provided with the first controller 171h and the second controller 172h that are responsible for starting and controlling the first electric motor 21h and the second electric motor 22h, respectively. **In** response to the start signal from the operating member 80h or other signals for starting the power tool, the first controller 171h may control the first electric motor 21h to start, and then based on the back electromotive force of the second electric motor 22h, the second controller 172h may control the second electric motor 22h to start. **In** some cases, after the first controller 171h executes the startup procedure of the first electric motor 21h in response to the relevant start signal, the first controller 171h may send a notification to the second controller 172h so that the second controller 172h starts to execute the startup procedure of the second electric motor 172h. **In** some other cases, in response to the relevant start signals, the first controller 171h and the second controller 172h may spontaneously execute the startup procedures of the first electric motor 21h and the second electric motor 22h in sequence. **In** some examples, the first controller 171h may control the first electric motor 21h to start for the first preset duration and then notify the second controller 172h. After receiving the notification, based on the back electromotive force of the second electric motor 22h, the second controller 172h may control the second electric motor 22h to start. In some other examples, after the first controller 171h controls the first electric motor 21h to start and detects that the rotational speed of the first electric motor 21h reaches the first rotational speed threshold, the first controller 171h may notify the second controller 172h. After receiving the notification, based on the back electromotive force of the second electric motor 22h, the second controller 172h may control the second electric motor 22h to start. In some other examples, after controlling the first electric motor 21h to start, the first controller 171h may notify the second controller 172h. The second controller 172h receives the notification, and then after the first preset duration or after it is detected that the rotational speed of the first electric motor 21h reaches the first rotational speed threshold, based on the back electromotive force of the second electric motor 22h, the second controller 172h may control the second electric motor 22h to start. In some other examples, after receiving the relevant start signal, the first controller 171h may control the first electric motor 21h to start. The second controller 172h receives the relevant start signal, and then after the first preset duration or after it is detected that the rotational speed of the first electric motor 21h reaches the first rotational speed threshold, based on the back electromotive force of the second electric motor 22h, the second controller 172h may control the second electric motor 22h to start. It is to be understood that, in the case of two controllers, whether the mutual notification exists between the controllers and which controller 17h performs timing statistics or rotational speed detection are not the focus of the solution of the present application and do not affect the scope of the present application.

In addition, the specific control method for the controller 17h to drive the electric motor to operate after the electric motor is started is not limited in the present application. The operation of the electric motor assembly 20h may be controlled in a six-step commutation method or a field-oriented control (FOC) method. Of course, other methods for controlling the electric motor may be adaptively introduced.

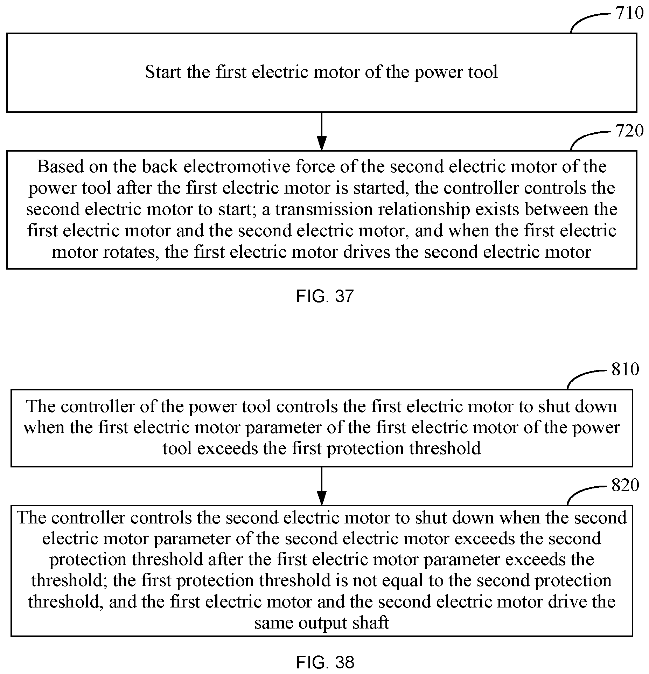

Correspondingly, a control method for a power tool is proposed and applied to the power tool described above. FIG. 37 shows a process flow of the control method for a power tool. The control method may include the steps below.

In S710, the first electric motor 21h of the power tool is started.

In S720, based on the back electromotive force of the second electric motor 22h of the power tool after the first electric motor 21h is started, the controller 17h of the power tool controls the second electric motor 22h to start; a transmission relationship exists between the first electric motor 21h and the second electric motor 22h, and when the first electric motor 21h rotates, the first electric motor 21h drives the second electric motor 22h to rotate.

Based on the above, since the first electric motor 21h and the second electric motor 22h share the same power supply 31 to achieve power supply, if the first electric motor 21h and the second electric motor 22h are controlled to perform shutdown protection at the same time, the peak currents of the two electric motors during shutdown protection are superimposed in the bus, causing damage to semiconductor components and interfering with the determination of related control logic. To address the preceding problem, the controller 17h may set different protection thresholds for different electric motors to achieve shutdown protection of the electric motor assembly 20h in different periods, thereby ensuring the safety of the shutdown of the electric motors since the peak currents do not occur at the same time.

The controller 17h may control the first electric motor 21h to shut down when a first electric motor parameter of the first electric motor 21h exceeds a first protection threshold and control the second electric motor 22h to shut down when a second electric motor parameter of the second electric motor 22h exceeds a second protection threshold. The first protection threshold is not equal to the second protection threshold, and a certain time interval exists between the moment when the first electric motor parameter exceeds the first protection threshold and the moment when the second electric motor parameter exceeds the second protection threshold. It is assumed in the following that the first electric motor parameter exceeds the first protection threshold before the second electric motor parameter exceeds the second protection threshold for exemplary explanation. However, it is to be understood that by adjusting the values of the first protection threshold and the second protection threshold, the first electric motor 21h may be shut down first, or the second electric motor 22h may be shut down first, which does not affect the scope of the present application.

It is to be noted here that many different parameter types exist for the electric motor parameters of the first electric motor 21h and the second electric motor 22h, many different threshold types exist for the protection thresholds, and a corresponding relationship exists between the electric motor parameter and the protection threshold, that is, the corresponding protection threshold is used for determining whether the corresponding electric motor parameter exceeds the corresponding protection threshold. Moreover, in the preceding solution, the first electric motor parameter and the second electric motor parameter to be compared and determined in sequence should be of the same parameter type, that is, it is not the case where whether the first electric motor parameter of one parameter type exceeds the corresponding first protection threshold is determined and then whether the second electric motor parameter of another parameter type exceeds the corresponding second protection threshold is determined.

In some examples, the first electric motor parameter includes a first locked-rotor parameter, and the first protection threshold includes a first locked-rotor threshold corresponding to the first locked-rotor parameter. Correspondingly, the second electric motor parameter includes a second locked-rotor parameter, and the second protection threshold includes a second locked-rotor threshold corresponding to the second locked-rotor parameter. The first locked-rotor threshold is not equal to the second locked-rotor threshold. The controller 17h detects that the first locked-rotor parameter of the first electric motor 21h exceeds the first locked-rotor threshold and controls the first electric motor 21h to shut down; and then the controller 17h detects that the second locked-rotor parameter of the second electric motor 22h exceeds the second locked-rotor threshold and controls the second electric motor 22h to shut down.

In some examples, the locked-rotor parameter is the commutation duration, the first locked-rotor parameter is the first commutation duration of the first electric motor 21h, the first locked-rotor threshold is the first duration threshold, the second locked-rotor parameter is the second commutation duration of the second electric motor 22h, and the second locked-rotor threshold is the second duration threshold. The ratio of the commutation duration of one electric motor to the commutation duration of the other electric motor is related to the rotational speeds of the two electric motors. If the rotational speed ratio of the first electric motor 21h and the second electric motor 22h that drive the same output shaft 30h is n:1, or in other words, the ratio of the gear ratio of the first electric motor 21h and the output shaft 30h to the gear ratio of the second electric motor 22h and the output shaft 30h is n:1, then the ratio of the first commutation duration of the first electric motor 21h to the second commutation duration of the second electric motor 22h should theoretically be 1:n. Assuming that the ratio of the first duration threshold to the second duration threshold is also set to 1:n, then the locked-rotor shutdown protection of the first electric motor 21h and the locked-rotor shutdown protection of the second electric motor 22h are performed simultaneously, leading to the preceding peak current superposition and component damage problems. Therefore, in the present application, if the rotational speed ratio of the first electric motor 21h and the second electric motor 22h is n:1, in the controller 17h, the ratio of the first duration threshold to the second duration threshold is configured to be not equal to 1:n so that the locked-rotor shutdown protection of the first electric motor 21h and the locked-rotor shutdown protection of the second electric motor 22h are not performed simultaneously, thereby preventing the peak currents from occurring at the same time and avoiding component damage and control interference.

For example, assuming that the rotational speed ratio of the first electric motor 21h and the second electric motor 22h is n:1, then the ratio of the first duration threshold to the second duration threshold may be set to 0.95*1:1.05*n. When the power tool is in a locked rotor condition, the controller 17h first detects that the first commutation duration of the first electric motor 21h exceeds the first duration threshold and controls the first electric motor 21h to shut down. After a period of time, the controller 17h detects that the second commutation duration of the second electric motor 22h exceeds the second duration threshold and controls the second electric motor 22h to shut down. In other words, the rotational speed ratio of the first electric motor 21h and the second electric motor 22h is n:1. If the ratio of the first duration threshold to the second duration threshold is less than 1:n, the controller 17h controls the first electric motor 21h and the second electric motor 22h to shut down in sequence for locked rotor protection. If the ratio of the first duration threshold to the second duration threshold is greater than 1:n, the controller 17h controls the second electric motor 22h and the first electric motor 21h to shut down in sequence for locked rotor protection.

In some other examples, the first electric motor parameter further includes a first overcurrent parameter, and the first protection threshold includes a first overcurrent threshold corresponding to the first overcurrent parameter. Correspondingly, the second electric motor parameter further includes a second overcurrent parameter, and the second protection threshold includes a second overcurrent threshold corresponding to the second overcurrent parameter. The first overcurrent threshold is not equal to the second overcurrent threshold. The controller 17h detects that the first overcurrent parameter of the first electric motor 21h exceeds the first overcurrent threshold and controls the first electric motor 21h to shut down; and then the controller 17h detects that the second overcurrent parameter of the second electric motor 22h exceeds the second overcurrent threshold and controls the second electric motor 22h to shut down.

In some examples, the overcurrent parameter is the current of the electric motor, including, but not limited to, the bus current, phase current, quadrature-axis current, or the like of the electric motor, the first overcurrent parameter is the first current of the first electric motor 21h, the first overcurrent threshold is the first current threshold, the second overcurrent parameter is the second current of the second electric motor 22h, and the second overcurrent threshold is the second current threshold. The ratio of the current amplitude of one electric motor to the current amplitude of the other electric motor is related to the output torque of the two electric motors. If the torque ratio of the first electric motor 21h and the second electric motor 22h that drive the same output shaft 30h is n:1, then the ratio of the current amplitude of one electric motor to the current amplitude of the other electric motor should theoretically be n:1. Assuming that the ratio of the first current threshold to the second current threshold is also set to n:1, the overcurrent shutdown protection of the first electric motor 21h and the overcurrent shutdown protection of the second electric motor 22h are performed simultaneously, leading to the preceding peak current superposition and component damage problems. Therefore, in the present application, if the torque ratio of the first electric motor 21h and the second electric motor 22h is n:1, in the controller 17h, the ratio of the first current threshold to the second current threshold is configured to be not equal to n:1 so that the overcurrent shutdown protection of the first electric motor 21h and the overcurrent shutdown protection of the second electric motor 22h are not performed simultaneously, thereby preventing the peak currents from occurring at the same time and avoiding component damage and control interference.

For example, assuming that the torque ratio of the first electric motor 21h and the second electric motor 22h is n:1, then the ratio of the first current threshold to the second current threshold may be set to 0.95*1:1.05*n. When the power tool is in an overcurrent condition, the controller 17h first detects that the first current of the first electric motor 21h exceeds the first current threshold and controls the first electric motor 21h to shut down. After a period of time, the controller 17h detects that the second current of the second electric motor 22h exceeds the second current threshold and controls the second electric motor 22h to shut down. In other words, the torque ratio of the first electric motor 21h and the second electric motor 22h is n:1. If the ratio of the first current threshold to the second current threshold is less than n:1, the controller 17h controls the first electric motor 21h and the second electric motor 22h to shut down in sequence for overcurrent protection. If the ratio of the first current threshold to the second current threshold is greater than n:1, the controller 17h controls the second electric motor 22h and the first electric motor 21h to shut down in sequence for overcurrent protection.

In some other examples, the overcurrent parameter may include the calculation value of one or more of the output torque, current, and demagnetization time of the electric motor. For example, the overcurrent parameter may be the output torque of the electric motor, the current of the electric motor, the product of the current of the electric motor and the demagnetization time, or the like. Similar to the above, different forms of overcurrent parameters have corresponding overcurrent thresholds, and the forms of the overcurrent parameters that the controller 17h compares and determines successively are consistent.

To sum up, in the case where the first electric motor 21h and the second electric motor 22h drive the same output shaft, if the first electric motor parameter and the second electric motor parameter that are related to shutdown protection and of the same parameter type theoretically have a proportional relationship, then in the case where the ratio of the first electric motor parameter to the second electric motor parameter is n:1, the ratio of the first protection threshold to the second protection threshold set in the controller 17h of the power tool does not conform to the preceding n:1 relationship, where the first protection threshold and the second protection threshold correspond to the first electric motor parameter and the second electric motor parameter, and the ratio of the first protection threshold to the second protection threshold is not equal to n:1, thereby achieving shutdown protection since the peak currents do not occur at the same time.

In some examples, the first protection threshold and the second protection threshold adopted by the controller 17h may be adaptively adjusted according to the capacity, voltage, and other parameters of the power supply 31. Different capacities or voltages of the power supply 31 correspond to different first protection thresholds and/or different second protection thresholds adopted by the controller 17h in the power tool. In some examples, the first protection threshold and the second protection threshold adopted by the controller 17h may be negatively correlated to the capacity or voltage of the power supply 31. For example, if the capacity or voltage of the power supply 31 assembled on the power tool is higher, the first duration threshold and the second duration threshold adopted by the controller 17h are decreased accordingly, thereby more sensitively detecting the locked rotor condition in the case where the power supply 31 has a stronger power supply capacity. In some other examples, the first protection threshold and the second protection threshold adopted by the controller 17h may be positively correlated to the capacity or voltage of the power supply 31.

In some other examples, the first protection threshold and the second protection threshold adopted by the controller 17h may be dynamic thresholds, and the first protection threshold and/or the second protection threshold may be related to the present current and voltage of the electric motor assembly 20h. The first protection threshold may dynamically change with the current and voltage of the first electric motor 21h, and the second protection threshold may dynamically change with the current and voltage of the second electric motor 22h. In some examples, the first duration threshold and the second duration threshold adopted by the controller 17h may be negatively correlated to the currents and voltages of the first electric motor 21h and the second electric motor 22h, respectively. As the currents and voltages of the first electric motor 21h and the second electric motor 22h increase, the first duration threshold and the second duration threshold may dynamically and adaptively decrease.

Based on the above, the power tool is provided with the first controller 171h and the second controller 172h that are responsible for the shutdown protection of the first electric motor 21h and the shutdown protection of the second electric motor 22h, respectively. The first controller 171h may detect the first electric motor parameter of the first electric motor 21h and when the first electric motor parameter exceeds the first protection threshold, control the first electric motor 21h to shut down. The second controller 172h may detect the second electric motor parameter of the second electric motor 22h and when the second electric motor parameter exceeds the second protection threshold, control the second electric motor 22h to shut down. The first protection threshold is not equal to the second protection threshold, and a certain time interval exists between the moment when the first controller 171h controls the first electric motor 21h to shut down and the moment when the second controller 172h controls the second electric motor 22h to shut down.

Correspondingly, a control method for a power tool is proposed and applied to the power tool described above. FIG. 38 shows the control method for a power tool. The control method may include the steps below.

In S810, the controller 17h of the power tool controls the first electric motor 21h to shut down when the first electric motor parameter of the first electric motor 21h of the power tool exceeds the first protection threshold.

In S820, the controller 17h controls the second electric motor 22h to shut down when the second electric motor parameter of the second electric motor 22h of the power tool exceeds the second protection threshold after the first electric motor parameter exceeds the first protection threshold; the first protection threshold is not equal to the second protection threshold, and the first electric motor 21h and the second electric motor 22h drive the same output shaft 30h.

Based on the above, to address the preceding problem of peak current superposition during shutdown protection, the controller 17h may control the first electric motor 21h to shut down when the first electric motor parameter of the first electric motor 21h exceeds the first protection threshold and control the second electric motor 22h to shut down after the first electric motor parameter exceeds the first protection threshold for a second preset duration, thereby shutting down the first electric motor 21h and the second electric motor 22h in different periods in a simpler manner. However, in the preceding single-threshold-plus-delay method, once a logical fault occurs in the shutdown protection of the first electric motor 21h, the logical fault interferes with the shutdown protection of the second electric motor 22h, causing the problem that the two electric motors cannot be shut down. Optimization needs to be performed in conjunction with other protection logics. Usually, the preceding solution is adopted in which the first protection threshold and the second protection threshold are used for preventing the peak currents from occurring at the same time, thereby achieving protection.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A power tool, comprising:
an output shaft configured to output torque and rotating about an output axis;
a first electric motor comprising a first drive shaft rotating about a first axis;
a second electric motor comprising a second drive shaft rotating about a second axis, wherein the first drive shaft and the second drive shaft are arranged along a radial direction of the first drive shaft;
a power transmission mechanism for transmitting power of at least one of the first electric motor and the second electric motor to the output shaft, wherein torque of the first drive shaft and torque of the second drive shaft are outputted through the output shaft;
an accommodation housing configured to accommodate the first electric motor and the second electric motor, wherein when orthographic projections are observed along an extension direction of the output shaft, along a direction of a line connecting an orthographic projection of the first axis and an orthographic projection of the second axis, an outer dimension Lc of the accommodation housing is greater than an outer diameter dimension D of any one of the first electric motor and the second electric motor; and
a body housing comprising a first marker structure corresponding to the first electric motor and a second marker structure corresponding to the second electric motor, wherein the first marker structure is configured to indicate that the power tool is provided with the first electric motor, and the second marker structure is configured to indicate that the power tool is provided with the second electric motor.

2. The power tool of claim 1, wherein the first drive shaft is parallel to the second drive shaft.

3. The power tool of claim 1, wherein the first electric motor at least partially overlaps the second electric motor in the direction of the output axis.

4. The power tool of claim 1, wherein the accommodation housing comprises a first accommodation portion for accommodating the first electric motor and a second accommodation portion for accommodating the second electric motor, the first accommodation portion supports at least a first bearing portion on a side of the first electric motor facing away from the output shaft, and the second accommodation portion supports at least a second bearing portion on a side of the second electric motor facing away from the output shaft.

5. The power tool of claim 1, further comprising:
a first housing, wherein the accommodation housing is formed on or connected to the first housing, and the first housing is formed with or connected to a grip for holding; and
a guard assembly configured to accommodate at least part of a cutting member driven by the output shaft, wherein the guard assembly and the accommodation housing are basically located on two sides of the first housing.

6. The power tool of claim 5, wherein the power transmission mechanism is accommodated in the first housing and is located outside the accommodation housing.

7. The power tool of claim 1, further comprising a direct current power supply for supplying power to the first electric motor and the second electric motor, wherein a nominal voltage of the direct current power supply is greater than or equal to 18 V.

8. The power tool of claim 7, wherein the direct current power supply comprises at least one battery pack.

9. The power tool of claim 1, wherein the first electric motor comprises a first stator, a first rotor, and coil windings disposed on the first stator, the first drive shaft is formed on or connected to the first rotor, the second electric motor comprises a second stator, a second rotor, and coil windings disposed on the second stator, and the second drive shaft is formed on or connected to the second rotor.

10. The power tool of claim 8, wherein the first electric motor and the second electric motor are configured to be different in at least one first parameter, wherein the at least one first parameter comprises a maximum output rotational speed, maximum output torque, an outer diameter of a stator core, an inner diameter of the stator core, an outer diameter of a rotor core, an inner diameter of the rotor core, a thickness of a rotor pole, a thickness of a stator pole, a length of an air gap, a length of a core, a number of pairs of stator poles, an arc corresponding to the stator pole, a number of pairs of rotor poles, and an arc corresponding to the rotor pole.

11. The power tool of claim 1, wherein the first marker structure and the second marker structure are formed on or connected to an outer wall surface of the body housing.

12. The power tool of claim 11, wherein the first marker structure and the second marker structure are configured to be independent double-cylinder structures.

13. The power tool of claim 11, wherein the first marker structure comprises a first display portion, the second marker structure comprises a second display portion, and the first display portion and the second display portion are disposed at easily visible positions on the body housing, respectively.

14. The power tool of claim 13, wherein the first display portion comprises a light emitter, and the light emitter indicates at least an on state and an off state of the first electric motor.

15. The power tool of claim 13, wherein the first display portion comprises an icon representing the first electric motor, the second display portion comprises an icon representing the second electric motor, and the first display portion and the second display portion are each provided with an adhesive backing layer.

16. A power tool, comprising:
an output shaft configured to output torque and rotating about an output axis;
a first electric motor comprising a first drive shaft rotating about a first axis;
a second electric motor comprising a second drive shaft rotating about a second axis, wherein the first drive shaft and the second drive shaft are arranged along a radial direction of the first drive shaft;
a power transmission mechanism for transmitting power of at least one of the first electric motor and the second electric motor to the output shaft, wherein torque of the first drive shaft and torque of the second drive shaft are outputted through the output shaft; and
an accommodation housing configured to accommodate the first electric motor and the second electric motor, wherein when orthographic projections are observed along an extension direction of the output shaft, along a direction of a line connecting an orthographic projection of the first axis and an orthographic projection of the second axis, a ratio of an outer dimension Lc of the accommodation housing to an outer diameter dimension D of any one of the first electric motor and the second electric motor is greater than or equal to 1.1.

17. A power tool, comprising:
an output shaft configured to output torque and rotating about an output axis;
a first electric motor comprising a first drive shaft rotating about a first axis;
a second electric motor comprising a second drive shaft rotating about a second axis, wherein the first drive shaft and the second drive shaft are arranged along a radial direction of the first drive shaft;
a power transmission mechanism for transmitting power of at least one of the first electric motor and the second electric motor to the output shaft, wherein torque of the first drive shaft and torque of the second drive shaft are outputted through the output shaft;
an accommodation housing configured to accommodate the first electric motor and the second electric motor; and
a body housing comprising a first marker structure corresponding to the first electric motor and a second marker structure corresponding to the second electric motor, wherein the first marker structure and the second marker structure are formed on or connected to an outer wall surface of the body housing, the first marker structure is configured to indicate that the power tool is provided with the first electric motor, and the second marker structure is configured to indicate that the power tool is provided with the second electric motor.

18. The power tool of claim 17, wherein the first marker structure and the second marker structure are disposed on an outer wall of the accommodation housing configured to accommodate the first electric motor and the second electric motor, the first marker structure is configured to comprise a shape similar to a partial outline of the first electric motor, and the second marker structure is configured to comprise a shape similar to a partial outline of the second electric motor.

19. The power tool of claim 17, wherein the first marker structure comprises a display screen, and the display screen indicates an operation state of the first electric motor.

20. The power tool of claim 17, wherein the second marker structure comprises at least one of a light emitter or a display screen configured to indicate an operation state of the second electric motor.

21. A power tool, comprising:
an output shaft configured to output torque and rotating about an output axis;
a first electric motor comprising a first drive shaft rotating about a first axis;
a second electric motor comprising a second drive shaft rotating about a second axis; and
a power transmission mechanism for transmitting power of at least one of the first electric motor and the second electric motor to the output shaft, wherein torque of the first drive shaft and torque of the second drive shaft are outputted through the output shaft;
wherein the power transmission mechanism comprises:
a transmission assembly disposed between the output shaft and at least one of the first electric motor and the second electric motor, wherein the transmission assembly comprises at least a deceleration mechanism; and
a clutch assembly disposed between the first electric motor and the second electric motor, wherein the clutch assembly is configured to allow or not allow at least one of the first drive shaft or the second drive shaft to drive the output shaft under a preset condition.

22. The power tool of claim 21, wherein the transmission assembly is configured to connect at least one of the first drive shaft and the second drive shaft to the clutch assembly.

23. The power tool of claim 21, wherein the transmission assembly comprises a first gearset for connecting the first electric motor to the output shaft, and the first gearset provides at least one reduction ratio.

24. The power tool of claim 23, wherein the transmission assembly comprises a second gearset for connecting the second electric motor to the output shaft, and the second gearset provides at least one reduction ratio.

25. The power tool of claim 21, wherein the clutch assembly comprises a one-way transmission member, wherein the one-way transmission member is operable to connect rotation of the first electric motor to rotation of the second electric motor in a first direction of rotation and disconnect the rotation of the first electric motor from the rotation of the second electric motor in a second direction of rotation.

26. The power tool of claim 24, wherein the clutch assembly connects the second gearset to the output shaft.

27. The power tool of claim 23, wherein the clutch assembly comprises a third gear, the first asseembly comprises a first driven gear, the third gear meshes with the first driven gear, and a gear ratio of the third gear and the first driven gear is basically 1.

28. The power tool of claim 26, wherein the clutch assembly comprises an idler shaft that rotates about a clutch axis, the second gearset comprises a second driven gear disposed on the idler shaft, and when a rotational speed of the idler shaft is greater than a rotational speed of the output shaft, the clutch assembly drives the output shaft to rotate at the rotational speed of the idler shaft.

29. The power tool of claim 28, wherein a non-thrust bearing is disposed at a first end of the idler shaft, and an elastic member is disposed at an end of the non-thrust bearing.

30. The power tool of claim 24, wherein at least one of the first gearset and the second gearset comprises a helical gear.

31. A power tool, comprising:
an output shaft configured to output torque and rotating about an output axis;
a first electric motor comprising a first drive shaft rotating about a first axis;
a second electric motor comprising a second drive shaft rotating about a second axis; and
a power transmission mechanism for transmitting power of at least one of the first electric motor and the second electric motor to the output shaft, wherein torque of the first drive shaft and torque of the second drive shaft are outputted through the output shaft;
wherein the power transmission mechanism comprises:
a transmission assembly disposed between the output shaft and at least one of the first electric motor and the second electric motor, wherein the transmission assembly comprises at least a deceleration mechanism;
wherein when following orthographic projections are observed along an extension direction of the output shaft, a projection of the first axis and a projection of the second axis are located above a projection of the output axis.

32. The power tool of claim 31, wherein when the following orthographic projections are observed along a direction of the output axis, an included angle α between a line connecting the projection of the first axis and the projection of the output axis and a line connecting the projection of the second axis and the projection of the output axis is greater than or equal to 45° and less than or equal to 180°.

33. A cutting tool, comprising:
an output shaft on which a cutting member is mounted, wherein the cutting member rotates about an output axis;
an electric motor assembly, wherein the electric motor assembly comprises:
a first electric motor comprising a first drive shaft rotating about a first axis;
a second electric motor comprising a second drive shaft rotating about a second axis; and
a first fan supported by at least one of the first drive shaft, the second drive shaft, and the output shaft;
a power transmission mechanism for transmitting power of at least one of the first electric motor and the second electric motor in the electric motor assembly to the output shaft;
a body housing for accommodating the electric motor assembly and the power transmission mechanism, wherein an airflow port is formed on the body housing; and
a control circuit board comprising a controller configured to control the electric motor assembly, wherein the control circuit board is disposed in the body housing;
wherein when the first fan rotates, a heat dissipation air path is generated, and the heat dissipation air path flows through at least the control circuit board and the electric motor assembly.

34. The cutting tool of claim 33, wherein the first fan is supported by the first drive shaft and driven by the first electric motor to rotate and generate cooling airflow;
wherein the cutting tool further comprises a second fan supported by the second drive shaft and driven by the second electric motor to rotate and generate cooling airflow, wherein when the second fan rotates, a heat dissipation air path is generated, and the heat dissipation air path flows through at least the control circuit board and the electric motor assembly.

35. The cutting tool of claim 34, wherein the airflow port comprises a first air inlet and a first air outlet, and the cooling airflow enters the body housing from the first air inlet and flows out of the body housing from the first air outlet.

36. The cutting tool of claim 35, wherein the airflow port further comprises a second air outlet, the cooling airflow flows out of the body housing from at least one of the first air outlet and the second air outlet, and the first air outlet and the second air outlet have different air discharge directions.

37. The cutting tool of claim 35, wherein the body housing comprises a first housing and an accommodation housing, wherein the first housing is formed with or connected to the accommodation housing, the accommodation housing is configured to accommodate the first electric motor and the second electric motor, the control circuit board is disposed in the first housing, and the first air inlet allows the cooling airflow to enter the accommodation housing from the first housing.

38. The cutting tool of claim 37, wherein the first air outlet connects the accommodation housing with the first housing.

39. The cutting tool of claim 36, further comprising a base plate movably connected to the body housing, wherein the base plate is formed with a base plate bottom surface in contact with a workpiece, and the second air outlet is disposed on the base plate and discharges air toward a side of the base plate.

40. The cutting tool of claim 39, wherein the heat dissipation air path comprises a first heat dissipation air path and a second heat dissipation air path, wherein the first heat dissipation air path is configured such that when at least one of the first electric motor or the second electric motor is operating, the cooling airflow enters from the first air inlet and flows through the control circuit board and the electric motor assembly, and then most of the cooling airflow flows out from the first air outlet; and the second heat dissipation air path is configured such that when at least one of the first electric motor or the second electric motor is operating, the cooling airflow enters from the first air inlet and flows through the control circuit board and the electric motor assembly, and then most of the cooling airflow flows out from the second air outlet.

41. The cutting tool of claim 35, further comprising a circuit board housing configured to accommodate the control circuit board, wherein the circuit board housing comprises a heat dissipation plate connected to the control circuit board and capable of transferring heat generated by the control circuit board, and the circuit board housing is disposed outside the electric motor assembly in a radial direction of the electric motor assembly.

42. The cutting tool of claim 41, further comprising a fixed guard configured to at least partially surround the cutting member, wherein an extension direction of the control circuit board is parallel to an extension direction of the cutting member, and the control circuit board conducts heat with the fixed guard.

43. The cutting tool of claim 41, wherein at least one control circuit board is provided, and the circuit board housing is capable of accommodating the at least one control circuit board.

44. The cutting tool of claim 34, further comprising a power supply, wherein the power supply comprises at least one battery pack configured to provide a source of energy for the electric motor assembly, the at least one battery pack is disposed between the electric motor assembly and a grip for holding, and the body housing is provided with a semi-open battery accommodation compartment which is recessed inward.

45. The cutting tool of claim 44, wherein when any one of the first fan and the second fan rotates, the heat dissipation air path is generated, and the heat dissipation air path flows through at least the at least one battery pack, the control circuit board, and the electric motor assembly.

46. The cutting tool of claim 45, wherein the airflow port comprises a second air inlet and a first air outlet, and the cooling airflow enters the battery accommodation compartment and the body housing from the second air inlet and flows out of the body housing from the first air outlet.

47. The cutting tool of claim 45, further comprising a circuit board housing configured to accommodate the control circuit board, wherein the circuit board housing comprises a heat dissipation plate connected to the control circuit board and capable of transferring heat generated by the control circuit board, and the circuit board housing is disposed between the electric motor assembly and the battery accommodation compartment.

48. A circular saw, comprising:
an output shaft on which a cutting member is mounted, wherein the cutting member rotates about an output axis;
a first electric motor comprising a first drive shaft rotating about a first axis;
a second electric motor comprising a second drive shaft rotating about a second axis;
a power transmission mechanism for transmitting power of at least one of the first electric motor and the second electric motor to the output shaft;
a power supply comprising at least one battery pack configured to provide a source of energy for the electric motor;
a body housing at least partially accommodating the first electric motor, the second electric motor, and the power transmission mechanism, wherein the body housing comprises a first housing, and the first housing is formed with or connected to a grip for holding; and
a base plate movably connected to the body housing, wherein the base plate is formed with a base plate bottom surface in contact with a workpiece;
wherein along a direction perpendicular to an extension direction of the cutting member, an orthographic projection of a center of gravity of the circular saw is located between a rear edge of the base plate and the output axis.

49. The circular saw of claim 48, wherein the projection of the center of gravity of the circular saw is close to the output axis and is located on a rear side of the output axis.

50. The circular saw of claim 48, wherein the cutting member extends in a cutting plane; the grip is basically symmetrically disposed about a first plane; and along a direction perpendicular to the base plate, a projection of the center of gravity of the circular saw is located between the cutting plane and a right edge of the base plate or basically on the first plane.

51. The circular saw of claim 50, wherein a distance between the projection of the center of gravity of the circular saw and the first plane is less than a distance between the center of gravity of the circular saw and the cutting plane.

52. The circular saw of claim 50, wherein a ratio of a distance W1 between the projection of the center of gravity of the circular saw and the first plane to a distance W2 between the cutting plane and the first plane is less than or equal to 1/3.

53. The circular saw of claim 48, wherein the first electric motor, the second electric motor, the at least one battery pack, and the grip are disposed on a same side of the cutting member, the at least one battery pack is at least partially disposed behind the first electric motor and the second electric motor, and the at least one battery pack is at least partially disposed in front of the grip.

54. The circular saw of claim 48, wherein the first housing is formed with or connected to an accommodation housing, and the accommodation housing is configured to accommodate the first electric motor and the second electric motor.

55. The circular saw of claim 54, wherein the base plate is formed with a hole extending along a first direction so that the cutting member is capable of passing through the base plate; and along the first direction, a ratio of an outer edge dimension L3 of the accommodation housing to an outer edge dimension La of the body housing is greater than or equal to 0.2 and less than or equal to 0.4.

56. The circular saw of claim 54, wherein along a direction of the output axis, a ratio of an outer edge dimension H1 of the accommodation housing to an outer edge dimension Ha of the body housing is greater than or equal to 0.15 and less than or equal to 0.4.

57. The circular saw of claim 54, wherein the cutting member has an outer diameter greater than 6 inches.

58. A circular saw, comprising:
an output shaft on which a cutting member is mounted, wherein the cutting member rotates about an output axis;
a first electric motor comprising a first drive shaft rotating about a first axis;
a second electric motor comprising a second drive shaft rotating about a second axis;
a power transmission mechanism for transmitting power of at least one of the first electric motor and the second electric motor to the output shaft;
a power supply comprising at least one battery pack configured to provide a source of energy for the electric motor;
a body housing at least partially accommodating the first electric motor, the second electric motor, and the power transmission mechanism; and
a base plate movably connected to the body housing, wherein the base plate is formed with a base plate bottom surface in contact with a workpiece;
wherein when following orthographic projections are observed along a direction perpendicular to the base plate bottom surface, projections of the first drive shaft and the second drive shaft have two endpoints that are farthest apart along a direction of the output axis, a width interval W is defined between two straight lines on a projection plane each of which passes through a respective one of the two endpoints and is perpendicular to the output axis, and a projection of a center of gravity of the circular saw is set within the width interval W.

59. A circular saw, comprising:
an output shaft on which a cutting member is mounted, wherein the cutting member rotates about an output axis;
a first electric motor comprising a first drive shaft rotating about a first axis;
a second electric motor comprising a second drive shaft rotating about a second axis, wherein the second drive shaft and the first drive shaft are arranged coaxially, and the first electric motor and the second electric motor are mechanically coupled;
a power transmission mechanism for transmitting power of at least one of the first electric motor and the second electric motor to the output shaft; and
a power supply comprising at least one battery pack configured to provide a source of energy for the electric motor;
wherein a diameter of the first electric motor is less than or equal to 70 mm, and a diameter of the second electric motor is less than or equal to 70 mm.

60. The circular saw of claim 59, wherein the first electric motor is an outrunner, and the second electric motor is an outrunner.

61. The circular saw of claim 59, wherein the first drive shaft rotates synchronously with the second drive shaft.

62. The circular saw of claim 61, wherein the first electric motor comprises a first stator and a first rotor, and the first drive shaft is formed on or connected to the first rotor; the second electric motor comprises a second stator and a second rotor, and the second drive shaft is formed on or connected to the second rotor.

63. The circular saw of claim 62, further comprising an electric motor fixing portion, wherein the electric motor fixing portion is connected to the first stator and the second stator separately.

64. The circular saw of claim 63, wherein the electric motor fixing portion is provided with an accommodation channel configured to at least partially accommodate the first drive shaft and the second drive shaft.

65. The circular saw of claim 64, wherein the accommodation channel at least partially overlaps the first stator along a direction of the first axis, and the accommodation channel at least partially overlaps the second stator along the direction of the first axis.

66. The circular saw of claim 59, wherein along a direction of the output axis, a projection of the first axis and a projection of the second axis are located above a projection of the output axis.

67. The circular saw of claim 66, wherein the power transmission mechanism comprises a transmission assembly, and the transmission assembly comprises at least a deceleration mechanism.

68. The circular saw of claim 66, further comprising:
a base plate formed with a base plate bottom surface in contact with a workpiece;
wherein when following orthographic projections are observed along a direction perpendicular to the base plate bottom surface, projections of the first drive shaft and the second drive shaft have two endpoints that are farthest apart along the direction of the output axis, a width interval W is defined between two straight lines on a projection plane each of which passes through a respective one of the two endpoints and is perpendicular to the output axis, and a projection of a center of gravity of the circular saw is set within the width interval W.

69. A power tool, comprising:
a functional piece;
an electric motor assembly comprising a first electric motor and a second electric motor, wherein at least one of the first electric motor and the second electric motor drives the functional piece to operate; and
a power supply device connected to the electric motor assembly and supplying power to at least the electric motor assembly;
wherein a transmission relationship exists between the first electric motor and the second electric motor, and when the first electric motor rotates, the first electric motor drives the second electric motor to rotate; the power tool further comprises a controller connected to the electric motor assembly, and the controller is configured to control, based on a back electromotive force of the second electric motor after the first electric motor is started, the second electric motor to start.

70. The power tool of claim 69, wherein the second electric motor is a sensorless brushless motor.

71. The power tool of claim 69, wherein the controller is configured to, when receiving a signal for starting the power tool, control the first electric motor to start.

72. The power tool of claim 69, wherein the controller is configured to, after the first electric motor is started for a first preset duration, control, based on the back electromotive force of the second electric motor, the second electric motor to start.

73. The power tool of claim 72, wherein the first preset duration is greater than or equal to 0.1s and less than or equal to 2s.

74. The power tool of claim 69, wherein the controller is configured to, after the first electric motor is started and a rotational speed of the first electric motor reaches a first rotational speed threshold, control, based on the back electromotive force of the second electric motor, the second electric motor to start.

75. The power tool of claim 74, wherein the first rotational speed threshold is greater than or equal to 10 RPM or greater than or equal to 10% of a no-load rotational speed of the first electric motor.

76. The power tool of claim 72 or 74, wherein the controller is configured to determine a position of a rotor of the second electric motor based on an extreme value of the back electromotive force of the second electric motor or based on a relative relationship between the back electromotive force and zero-point potential of the second electric motor and control the second electric motor to start.

77. The power tool of claim 69, wherein the controller comprises a first controller and a second controller, wherein the first controller is connected to the first electric motor, the second controller is connected to the second electric motor, the first controller is configured to, when receiving a signal for starting the power tool, control the first electric motor to start, and the second controller is configured to control, based on the back electromotive force of the second electric motor after the first electric motor is started, the second electric motor to start.

78. A control method for a power tool, comprising:
starting a first electric motor of the power tool; and
controlling, by a controller of the power tool, based on a back electromotive force of a second electric motor of the power tool after the first electric motor is started, the second electric motor to start;
wherein a transmission relationship exists between the first electric motor and the second electric motor, and when the first electric motor rotates, the first electric motor drives the second electric motor to rotate.

79. A power tool, comprising:
a functional piece;
an electric motor assembly comprising a first electric motor and a second electric motor, wherein at least one of the first electric motor and the second electric motor drives the functional piece to operate; and
a power supply device connected to the electric motor assembly and supplying power to at least the electric motor assembly;
wherein the first electric motor and the second electric motor drive a same output shaft;
wherein the power tool further comprises a controller connected to the electric motor assembly, and the controller is configured to control the first electric motor to shut down when a first electric motor parameter of the first electric motor exceeds a first protection threshold and control the second electric motor to shut down when a second electric motor parameter of the second electric motor exceeds a second protection threshold after the first electric motor parameter exceeds the first protection threshold, wherein the first protection threshold is not equal to the second protection threshold.

80. The power tool of claim 79, wherein the first electric motor parameter comprises a first locked-rotor parameter of the first electric motor, and the first protection threshold comprises a first locked-rotor threshold; the second electric motor parameter comprises a second locked-rotor parameter of the second electric motor, and the second protection threshold comprises a second locked-rotor threshold.

81. The power tool of claim 79, wherein the first electric motor parameter comprises a first overcurrent parameter of the first electric motor, and the first protection threshold comprises a first overcurrent threshold; the second electric motor parameter comprises a second overcurrent parameter of the second electric motor, and the second protection threshold comprises a second overcurrent threshold.

82. The power tool of claim 80, wherein the first locked-rotor parameter is a first commutation duration of the first electric motor, and the first locked-rotor threshold is a first duration threshold; the second locked-rotor parameter is a second commutation duration of the second electric motor, and the second locked-rotor threshold is a second duration threshold;
wherein the controller is configured to control the first electric motor to shut down when the first commutation duration exceeds the first duration threshold and control the second electric motor to shut down when the second commutation duration exceeds the second duration threshold after the first commutation duration exceeds the first duration threshold, wherein the first duration threshold is not equal to the second duration threshold.

83. The power tool of claim 82, wherein in a case where a rotational speed ratio of the first electric motor and the second electric motor is n:1, a ratio of the first duration threshold to the second duration threshold is not equal to 1:n.

84. The power tool of claim 81, wherein the first overcurrent parameter is a first current of the first electric motor, and the first overcurrent threshold is a first current threshold; the second overcurrent parameter is a second current of the second electric motor, and the second overcurrent threshold is a second current threshold; the controller is configured to control the first electric motor to shut down when the first current exceeds the first current threshold and control the second electric motor to shut down when the second current exceeds the second current threshold after the first current exceeds the first current threshold, wherein the first current threshold is not equal to the second current threshold.

85. The power tool of claim 84, wherein in a case where a torque ratio of the first electric motor and the second electric motor is n:1, a ratio of the first current threshold to the second current threshold is not equal to n:1.

86. The power tool of claim 81, wherein the first overcurrent parameter is a calculation value of one or more of first output torque, a first current, and first demagnetization time of the first electric motor, and the second overcurrent parameter is a calculation value of one or more of second output torque, a second current, and second demagnetization time of the second electric motor.

87. The power tool of claim 79, wherein in a case where a ratio of the first electric motor parameter to the second electric motor parameter is n:1, a ratio of the first protection threshold to the second protection threshold is not equal to n:1.

88. The power tool of claim 80 or 81, further comprising a driving device, wherein the driving device comprises a first driver circuit and a second driver circuit, the first driver circuit is connected between the power supply device and the first electric motor, and the second driver circuit is connected between the power supply device and the second electric motor.

89. The power tool of claim 88, wherein the first protection threshold has different values in a case where a capacity or a voltage of the power supply device has different values; and/or the second protection threshold has different values in the case where the capacity or the voltage of the power supply device has different values.

90. The power tool of claim 88, wherein the first protection threshold and/or the second protection threshold are dynamic thresholds and a corresponding relationship exists between values of the dynamic thresholds and a current current or voltage of the electric motor assembly.

91. The power tool of claim 88, wherein the controller comprises a first controller and a second controller, the first controller is connected to the first electric motor through the first driver circuit, the second controller is connected to the second electric motor through the second driver circuit, the first controller is configured to control the first electric motor to shut down when the first electric motor parameter of the first electric motor exceeds the first protection threshold, and the second controller is configured to control the second electric motor to shut down when the second electric motor parameter of the second electric motor exceeds the second protection threshold after the first electric motor parameter exceeds the first protection threshold, wherein the first protection threshold is not equal to the second protection threshold.

92. A power tool, comprising:
a functional piece;
an electric motor assembly comprising a first electric motor and a second electric motor, wherein at least one of the first electric motor and the second electric motor drives the functional piece to operate; and
a power supply device connected to the electric motor assembly and supplying power to at least the electric motor assembly;
wherein the first electric motor and the second electric motor drive a same output shaft;
wherein the power tool further comprises a controller connected to the electric motor assembly, wherein the controller is configured to control the first electric motor to shut down when a first electric motor parameter of the first electric motor exceeds a first protection threshold and control the second electric motor to shut down after the first electric motor parameter exceeds the first protection threshold for a second preset duration.

93. A control method for a power tool, comprising:
controlling, by a controller of the power tool, a first electric motor to shut down when a first electric motor parameter of the first electric motor of the power tool exceeds a first protection threshold; and
controlling, by the controller, a second electric motor to shut down when a second electric motor parameter of the second electric motor of the power tool exceeds a second protection threshold after the first electric motor parameter exceeds the first protection threshold, wherein the first protection threshold is not equal to the second protection threshold, and the first electric motor and the second electric motor drive a same output shaft.
